(19) Europäisches Patentamt
European Patent Office
Office européen des brevets

(11) EP 4 216 494 A1

# (12) EUROPEAN PATENT APPLICATION
published in accordance with Art. 153(4) EPC

(43) Date of publication:
**26.07.2023 Bulletin 2023/30**

(21) Application number: **21869190.5**

(22) Date of filing: **02.09.2021**

(51) International Patent Classification (IPC):
***H04L 12/28*** *(2006.01)* ***H04L 41/0853*** *(2022.01)*
***H04L 41/12*** *(2022.01)*

(52) Cooperative Patent Classification (CPC):
**H04L 41/12; H04L 12/28; H04L 41/0853**

(86) International application number:
**PCT/JP2021/032301**

(87) International publication number:
**WO 2022/059503 (24.03.2022 Gazette 2022/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.09.2020 PCT/JP2020/035621**

(71) Applicant: **Nippon Telegraph And Telephone Corporation**
**Chiyoda-ku**
**Tokyo 100-8116 (JP)**

(72) Inventors:
- **MATSUBAYASHI, Masaru**
**Musashino-shi, Tokyo 180-8585 (JP)**
- **KOYAMA, Takuma**
**Musashino-shi, Tokyo 180-8585 (JP)**
- **OKANO, Yasushi**
**Musashino-shi, Tokyo 180-8585 (JP)**
- **TANAKA, Masashi**
**Musashino-shi, Tokyo 180-8585 (JP)**

(74) Representative: **Murgitroyd & Company**
**Murgitroyd House**
**165-169 Scotland Street**
**Glasgow G5 8PL (GB)**

## (54) NETWORK CONFIGURATION ESTIMATING DEVICE, NETWORK CONFIGURATION ESTIMATING METHOD, AND PROGRAM

(57) A network configuration estimation device for estimating configuration information of an internal network in a target device includes a diagnostic communication transmission-reception unit that transmits a message to an electronic control unit on the internal network by using a diagnostic communication method supported in a standard manner in the electronic control unit on the internal network and receives a response to the message, and a configuration information estimation unit that estimates the configuration information of the internal network based on the response obtained by the diagnostic communication transmission-reception unit.

Fig. 3

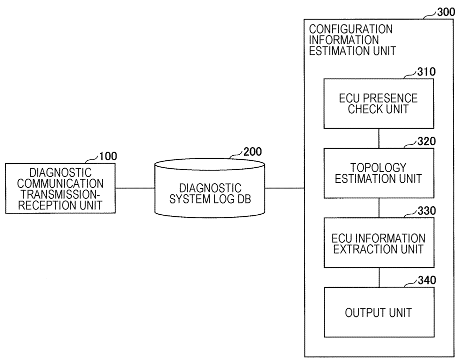


EP 4 216 494 A1

## Description

Technical Field

The present invention relates to a technique for estimating configuration information of an internal network in a target device such as an automobile.

Background Art

In recent years, with the advent of connected car society, the threat of cyberattacks on automobiles has increased. That is, since a connected function mounted on an automobile enables the automobile to be connected to the outside through the network, the threat of cyberattacks from the outside increases.

For this reason, it is important to detect a cyberattack on an automobile, identify a path and a cause of the attack, and implement a countermeasure against the attack. In order to accurately specify the path and cause of the attack, information regarding a configuration (topology) of an in-vehicle network (NW), an information processing device (IVI, TCU, or the like), and an electronic control unit (ECU) on the NW is necessary.

In addition to the above, the vehicle configuration information is also necessary for achieving various purposes such as asset management and configuration abnormality detection.

As a technique according to related art for estimating the configuration and the like of the NW, for example, there is a technique disclosed in Non-Patent Literature 1. In the technique disclosed in Non-Patent Literature 1, a MAC address forwarding table of each Switch in the target NW is acquired using an SNMP, and L2 topology of the target NW is estimated by analyzing the acquired information.

Citation List

Non-Patent Literature

Non-Patent Literature 1: Jing Jiang, Xiao Xu, Ning Cao, "Research on improved physical topology discovery based on SNMP", In 2017 IEEE International Conference on Computational Science and Engineering (CSE) and IEEE Conference on Embedded and Ubiquitous Computing (EUC), pp.219-222, (2017).

Summary of Invention

Technical Problem

In order to acquire the topology of the in-vehicle NW and information of each ECU, it is conceivable to use the SNMP-based method disclosed in Non-Patent Literature 1. However, in order to acquire the topology of the in-vehicle NW and the information of each ECU by the SNMP-based method, it is necessary to enhance resources for enabling operation of an SNMP agent and to support the SNMP for each ECU, and, thus, a problem is that additional cost is required.

The present invention has been made in view of the above points, and an object is to provide a technique capable of estimating configuration information of an internal network without increasing resources or supporting a new protocol for a component device of the internal network in a target device.

Solution to Problem

According to the disclosed technique, there is provided a network configuration estimation device for estimating configuration information of an internal network in a target device, the network configuration estimation device including:

a diagnostic communication transmission-reception unit that transmits a message to an electronic control unit on the internal network by using a diagnostic communication method supported in a standard manner in the electronic control unit on the internal network and receives a response to the message; and
a configuration information estimation unit that estimates the configuration information of the internal network based on the response obtained by the diagnostic communication transmission-reception unit.

Advantageous Effects of Invention

According to the disclosed technique, it is possible to estimate configuration information of an internal network without increasing resources or supporting a new protocol for a component device of the internal network in a target device.

Brief Description of Drawings

Fig. 1 is a diagram illustrating an example of in-vehicle configuration information.
Fig. 2 is a diagram for explaining an example of diagnostic communication.
Fig. 3 is a diagram illustrating a configuration example of a configuration information estimation system in a first embodiment.
Fig. 4 is a flowchart for explaining an example of a processing procedure by a diagnostic communication transmission-reception unit.
Fig. 5 is a flowchart for explaining an example of a processing procedure by a configuration information estimation unit.
Fig. 6 is a system configuration diagram in Example 1 in the first embodiment.
Fig. 7 is a system configuration diagram in Example 2 in the first embodiment.
Fig. 8 is a system configuration diagram in Example 3 in the first embodiment.
Fig. 9 is a system configuration diagram in Example 4 in the first embodiment.
Fig. 10 is a system configuration diagram in Example 5 in the first embodiment.
Fig. 11 is a system configuration diagram in Example 6 in the first embodiment.
Fig. 12 is a diagram illustrating an example of the vehicle configuration information.
Fig. 13 is a diagram illustrating a network of an automobile assumed in a second embodiment.
Fig. 14 is a diagram for describing an aim of elemental technique 1.
Fig. 15 is a diagram for explaining an application target of the elemental technique 1.
Fig. 16 is a diagram for explaining an RTT of diagnostic communication.
Fig. 17 is a diagram for explaining an estimation method of the elemental technique 1.
Fig. 18 is a diagram for explaining an estimation procedure of the elemental technique 1.
Fig. 19 is a diagram for explaining an estimation procedure of the elemental technique 1.
Fig. 20 is a diagram for explaining an estimation procedure of the elemental technique 1.
Fig. 21 is a diagram for describing an aim of elemental technique 2.
Fig. 22 is a diagram for explaining points and a procedure of the elemental technique 2.
Fig. 23 is a diagram for explaining a technique according to related art in regard to elemental technique 3.
Fig. 24 is a diagram for describing an aim of the elemental technique 3.
Fig. 25 is a diagram for explaining an estimation method of the elemental technique 3.
Fig. 26 is a diagram for explaining the estimation method of the elemental technique 3.
Fig. 27 is a configuration diagram of Example A1 in the second embodiment.
Fig. 28 is a flowchart illustrating overall processing of Example A1 in the second embodiment.
Fig. 29 is a flowchart illustrating processing of S1030 of Example A1 in the second embodiment.
Fig. 30 is a flowchart illustrating processing of S1031 of Example A1 in the second embodiment.
Fig. 31 is a diagram illustrating Table 3031 of Example A1 in the second embodiment.
Fig. 32 is a flowchart illustrating processing of S1032 of Example A1 in the second embodiment.
Fig. 33 is a flowchart illustrating processing of S1033 of Example A1 in the second embodiment.
Fig. 34 is a diagram illustrating Table 3032 of Example A1 in the second embodiment.
Fig. 35 is a flowchart illustrating processing of S1034 of Example A1 in the second embodiment.
Fig. 36 is a diagram illustrating Table 3033 of Example A1 in the second embodiment.
Fig. 37 is a flowchart illustrating processing of S1035 of Example A1 in the second embodiment.
Fig. 38 is a diagram illustrating Table 3034 of Example A1 in the second embodiment.
Fig. 39 is a diagram illustrating Table 3035 of Example A1 in the second embodiment.
Fig. 40 is a diagram illustrating Table 3036 of Example A1 in the second embodiment.
Fig. 41 is a flowchart illustrating processing of S1036 of Example A1 in the second embodiment.
Fig. 42 is a diagram illustrating Table 3037 of Example A1 in the second embodiment.
Fig. 43 is a flowchart illustrating processing of S1037 of Example A1 in the second embodiment.
Fig. 44 is a flowchart illustrating processing of S1038 of Example A1 in the second embodiment.
Fig. 45 is a diagram illustrating Table 3038 of Example A1 in the second embodiment.
Fig. 46 is a flowchart illustrating processing of S1039 of Example A1 in the second embodiment.
Fig. 47 is a diagram illustrating Table 3039 of Example A1 in the second embodiment.
Fig. 48 is a flowchart illustrating processing of S1040 of Example A1 in the second embodiment.
Fig. 49 is a flowchart illustrating processing of S1061 of Example A1 in the second embodiment.
Fig. 50 is a diagram illustrating Table 3081 of Example A1 in the second embodiment.
Fig. 51 is a flowchart illustrating processing of S1091 of Example A1 in the second embodiment.
Fig. 52 is a flowchart illustrating processing of S1101 of Example A1 in the second embodiment.

Fig. 53 is a flowchart illustrating processing of S1111 of Example A1 in the second embodiment.
Fig. 54 is a diagram illustrating Table 3111 of Example A1 in the second embodiment.
Fig. 55 is a table to be referred to when describing a sum of support degrees of Example A1 in the second embodiment.
Fig. 56 is a diagram illustrating Table 3112 of Example A1 in the second embodiment.
Fig. 57 is a diagram illustrating Table 3113 of Example A1 in the second embodiment.
Fig. 58 is a flowchart illustrating processing of S1120 of Example A1 in the second embodiment.
Fig. 59 is a flowchart illustrating processing of S1121 of Example A1 in the second embodiment.
Fig. 60 is a diagram illustrating an example of a record of a trace route of Example A1 in the second embodiment.
Fig. 61 is a flowchart illustrating processing of S1122 of Example A1 in the second embodiment.
Fig. 62 is a diagram illustrating one-to-one correspondence between an ECU model number and a physical ECU of Example A1 in the second embodiment.
Fig. 63 is a diagram illustrating setting of a network interface of Example A1 in the second embodiment.
Fig. 64 is a diagram illustrating allocation of ECU information of Example A1 in the second embodiment.
Fig. 65 is a diagram illustrating a connection relationship of Example A1 in the second embodiment.
Fig. 66 is a flowchart illustrating processing of S1130 of Example A1 in the second embodiment.
Fig. 67 is a flowchart illustrating processing of S1141 of Example A1 in the second embodiment.
Fig. 68 is a diagram illustrating a record of transmission time and reception time of Example A1 in the second embodiment.
Fig. 69 is a diagram illustrating Table 3141 of Example A1 in the second embodiment.
Fig. 70 is a flowchart illustrating processing of S1151 of Example A1 in the second embodiment.
Fig. 71 is a flowchart illustrating processing of S1152 of Example A1 in the second embodiment.
Fig. 72 is a diagram illustrating a record of transmission time and reception time of Example A1 in the second embodiment.
Fig. 73 is a diagram illustrating Table 3151 of Example A1 in the second embodiment.
Fig. 74 is a flowchart illustrating processing of S1161 of Example A1 in the second embodiment.
Fig. 75 is a diagram illustrating Table 3161 of Example A1 in the second embodiment.
Fig. 76 is a diagram illustrating Table 3162 of Example A1 in the second embodiment.
Fig. 77 is a flowchart illustrating processing of S1171 of Example A1 in the second embodiment.
Fig. 78 is a diagram illustrating one-to-one correspondence between the ECU model number and the physical ECU of Example A1 in the second embodiment.
Fig. 79 is a diagram illustrating addition of a request NW_A-ID to the ECU of Example A1 in the second embodiment.
Fig. 80 is a flowchart illustrating processing of S1172 of Example A1 in the second embodiment.
Fig. 81 is a diagram illustrating an estimation result of NW_A topology of Example A1 in the second embodiment.
Fig. 82 is a diagram illustrating that EUC information is added to the NW_A topology of Example A1 in the second embodiment.
Fig. 83 is a diagram illustrating connection between GWs of Example A1 in the second embodiment.
Fig. 84 is a flowchart illustrating processing of S1180 of Example A1 in the second embodiment.
Fig. 85 is a flowchart illustrating processing of S1191 of Example A1 in the second embodiment.
Fig. 86 is a flowchart illustrating processing of S1192 of Example A1 in the second embodiment.
Fig. 87 is a diagram illustrating a record of ECUReset transmission time of Example A1 in the second embodiment.
Fig. 88 is a flowchart illustrating processing of S1201 of Example A1 in the second embodiment.
Fig. 89 is a diagram illustrating a record of an alert activation time of NW_A-IDS of Example A1 in the second embodiment.
Fig. 90 is a flowchart illustrating processing of S1211 of Example A1 in the second embodiment.
Fig. 91 is a diagram illustrating Table 3211 of Example A1 in the second embodiment.
Fig. 92 is a diagram illustrating a result after addition of Example A1 in the second embodiment.
Fig. 93 is a diagram illustrating Table 3212 of Example A1 in the second embodiment.
Fig. 94 is a configuration diagram of Example A2 in the second embodiment.
Fig. 95 is a configuration diagram of Example A3 in the second embodiment.
Fig. 96 is a configuration diagram of Example A4 in the second embodiment.
Fig. 97 is a configuration diagram of Example A5 in the second embodiment.
Fig. 98 is a configuration diagram of Example A6 in the second embodiment.
Fig. 99 is a configuration diagram of Example A7 in the second embodiment.
Fig. 100 is a configuration diagram of Example B1 in the second embodiment.
Fig. 101 is a configuration diagram of Example B2 in the second embodiment.
Fig. 102 is a configuration diagram of Example B3 in the second embodiment.
Fig. 103 is a configuration diagram of Example B4 in the second embodiment.
Fig. 104 is a configuration diagram of Example C1 in the second embodiment.

Fig. 105 is a configuration diagram of Example C2 in the second embodiment.
Fig. 106 is a configuration diagram of Example C3 in the second embodiment.
Fig. 107 is a configuration diagram of Example C4 in the second embodiment.
Fig. 108 is a diagram illustrating a hardware configuration example of a device.

Description of Embodiments

Hereinafter, embodiments of the present invention (present embodiments) will be described with reference to the drawings. The embodiments described below are merely examples, and embodiments to which the present invention is applied are not limited to the following embodiments.
In the present embodiment (first and second embodiments) described below, an automobile will be described as an example of a target device including an internal network to be a target of estimating configuration information, but the target device to which the technique according to the present invention can be applied is not limited to the automobile. The technique according to the present invention is applicable to a target device having a characteristic that "information can be acquired from a device on a network by diagnostic communication," similar to an automobile. Furthermore, elemental techniques described in the second embodiment can be applied, at least, to application targets with described conditions.
In the present embodiment, the configuration of the in-vehicle network (NW), information regarding the information processing device (IVI, TCU, or the like) on the NW, and information regarding the electronic control unit (ECU) may be collectively referred to as "vehicle configuration information." The "vehicle configuration information" is an example of "configuration information of the internal network."
Note that TCU is an abbreviation for telematics control unit, IVI is an abbreviation for in-vehicle infotainment, and ECU is an abbreviation for an electronic control unit.
In the following description (and drawings), CAN (registered trademark) is referred to as NW_A (network A), and Ethernet (registered trademark) is referred to as NW_B (network B). Note that CAN (registered trademark) is an abbreviation for a controller area network.
However, the NW_A introduced in the following description may be a network other than CAN (registered trademark), and the NW_B may be a network other than Ethernet (registered trademark). For example, the NW_A may be FlexRay (registered trademark), LIN, K-Line, or the like.
In the present embodiment, a method for implementing estimation of configuration information of a network of a target vehicle will be described. The configuration information of the network of the target vehicle is, for example, the following information.
- Topology of target network (in-vehicle NW_B and in-vehicle NW_A)
- Information regarding device connected to network (model number, software version, or the like)
- Information regarding function (= name) of each device
- Information of normal communication performed by each device (in particular, information of normal communication transmitted by each device)

Hereinafter, a first embodiment and a second embodiment will be described as embodiments of the present invention. A basic configuration and operation will be described in the first embodiment, and a more specific configuration and operation will be described in the second embodiment. The configuration and processing described in the first embodiment and the configuration and processing described in the second embodiment can be implemented in combination.

----------First Embodiment----------

(Example of vehicle configuration information)

In the present embodiment, a configuration information estimation system estimates vehicle configuration information of an automobile. Fig. 1 illustrates an example of vehicle configuration information. In the example of Fig. 1, a TCU and an IVI connected to the NW_B are connected to a Gateway-ECU (GW) in a star configuration. Further, the NW_A is connected to the GW, and an ECU connected to the NW_A is connected to the NW_A under the GW in a bus type. In addition, Fig. 1 also illustrates information of each ECU and the like. The OBD-II illustrated in Fig. 1 is a self-diagnostic function.
Hereinafter, the information processing device (IVI, TCU, or the like) and the electronic control unit (ECU) will be collectively referred to as "ECU." The same applies to the second embodiment.

(Diagnostic communication)

In the present embodiment, the configuration information estimation system estimates the vehicle configuration information by collecting and analyzing information obtained by diagnostic communication that is normally supported in a device such as an ECU mounted on an automobile. Note that the diagnostic communication is implemented in almost all automobiles and ECUs. Here, the diagnostic communication will be described.
The diagnostic communication is communication used when a failure diagnosis or reprogramming of the ECU is performed. In addition, the model number of the ECU, the version information of the software, and the like can also be acquired by diagnostic communication. An example of a procedure of the diagnostic communication will be described with reference to Fig. 2. Fig. 2 illustrates an example of a case where the diagnostic communication is performed between an external diagnostic device_A and ECU_B.
In S1, a diagnosis request is transmitted from the external diagnostic device_A to the ECU_B. In S2, the ECU_B executes a process corresponding to a diagnosis request. In S3, the ECU_B transmits a diagnostic response to the external diagnostic device_A. The diagnostic response stores a processing result and the like.

(System configuration)

Fig. 3 illustrates an example of a configuration of the configuration information estimation system in the present embodiment. As illustrated in Fig. 3, the configuration information estimation system in the present embodiment includes a diagnostic communication transmission-reception unit 100, a diagnostic system log DB 200, and a configuration information estimation unit 300. The configuration information estimation unit 300 includes an ECU presence check unit 310, a topology estimation unit 320, an ECU information extraction unit 330, and an output unit 340. The outline of each functional unit is as follows.
The diagnostic communication transmission-reception unit 100 transmits and receives a diagnostic communication according to a flowchart described below, and stores a received response in the diagnostic system log DB 200.
The diagnostic system log DB 200 is a database (DB) that stores a log acquired by the diagnostic communication transmission-reception unit 100 in a predetermined format.
The configuration information estimation unit 300 estimates the vehicle configuration information using information stored in the diagnostic system log DB 200 by operating each internal block according to a flowchart described below. Note that information other than the diagnostic system log may be used as an input to the configuration information estimation unit 300. For example, known information regarding the configuration or a non-diagnostic system log may be used.
Note that, as described in Examples 1 to 6 described below, the diagnostic communication transmission-reception unit 100, the diagnostic system log DB 200, and the configuration information estimation unit 300 can be mounted on one or a plurality of devices in various forms. A device including the diagnostic communication transmission-reception unit 100 and the configuration information estimation unit 300 may be referred to as a network configuration estimation device. The network configuration estimation device may be configured such that the diagnostic communication transmission-reception unit 100 and the configuration information estimation unit 300 are at separate, remote locations and communicate with each other via a network.
Furthermore, a device including the configuration information estimation unit 300 that estimates the configuration information using the response obtained by the diagnostic communication transmission-reception unit 100 may be referred to as a network configuration estimation device.

(Operation of diagnostic communication transmission-reception unit)

Next, an operation example of the diagnostic communication transmission-reception unit 100 will be described. First, UDS, DID, and DoIP introduced in a flow as described below will be described.
UDS is an abbreviation for Unified Diagnostic Services, and is a name of a standard specification (such as ISO 14229-1) that defines a format of a diagnostic message and the like in diagnostic communication.
DID is an abbreviation of Data ID. It is an ID set in a diagnosis request (request message) of the UDS and indicates a diagnosis service target. For example, when a diagnosis request in which a DID specifying a version number of software is set as the DID is transmitted to the ECU, the ECU returns a diagnostic response (response message) in which the version number of the software is set.
Furthermore, as a standard specification that defines specifications of a network layer for mounting the UDS on the NW-A, there is ISO 15765-2 called Diagnostic communication over Controller Area Network (DoCAN).
DoIP is an abbreviation of Diagnostic communication over Internet Protocol, and is a name of a standard specification (ISO 13400-1, ISO 13400-2) that defines specifications of a network layer for implementing the UDS on IP.
In DoIP, for example, as illustrated in Fig. 1, a configuration is employed in which only an ECU serving as a gateway for a diagnosis function (tester) and an ECU particularly requiring high-speed data transfer perform communication in the NW_B, and other ECUs are connected to a gateway ECU through an in-vehicle network such as NW_A, and diagnosis is performed via the gateway ECU.

The diagnostic communication transmission-reception unit 100 and the ECU in the present embodiment perform diagnostic communication conforming to at least the general standard specification described above.

An example of an operation of the diagnostic communication transmission-reception unit 100 will be described with reference to a flowchart of Fig. 4. Note that the contents and order of messages transmitted and received in the example of the operation described with reference to Fig. 4 are merely examples, and the present invention is not limited thereto.

In S101, the diagnostic communication transmission-reception unit 100 broadcasts a Vehicle Identification Request of DoIP to the ECU connected to the NW_B, and receives a response from each ECU. The Vehicle Identification Request is a message requesting address information to the ECU connected to the NW_B.

In S102, the diagnostic communication transmission-reception unit 100 transmits testerPresent of UDS to each ECU connected with the NW_A, and receives a response. The testerPresent is a message for checking presence of an ECU connected to the NW_A and NW_A-ID (that is, CAN-ID).

In S103, the diagnostic communication transmission-reception unit 100 transmits an Entity Status Request of DoIP to each ECU connected to the in-vehicle NW_B and receives a response. The Entity Status Request is a message requesting the ECU for a node type (for example, a gateway) or the like.

In S104, the diagnostic communication transmission-reception unit 100 transmits, to each ECU connected to the invehicle NW_B and each ECU connected to the NW_A, ReadDataByIdentifier of the UDS to which one or more values are set as the DID, and receives a response. The ReadDataByIdentifier is a message requesting the ECU for data specified by the DID.

The DIDs used in S104 are, for example, 0xF181, 0xF183, 0xF184, 0xF188, 0xF189, 0xF18A, 0xF194, 0xF195, 0xF19F, 0xF18B, 0xF18C, 0xF184, 0xF191, 0xF192, 0xF193, and 0xF19F. However, these are examples and the DIDs are not limited thereto.

0xF181 indicates applicationSoftwareIdentificationDataIdentifier. 0xF183 indicates bootSoftwareFingerprintDataIdentifier. 0xF184 indicates applicationSoftwareFingerprintDataIdentifier. 0xF188 indicates vehicleManufacturerECUSoftwareNumberDataIdentifier. 0xF189 indicates vehicleManufacturerECUSoftwareVersionNumberDataIdentifier. 0xF18A indicates systemSupplierIdentifierDataIdentifier. 0xF194 indicates systemSupplierECUSoftwareNumberDataIdentifier. 0xF195 indicates systemSupplierECUSoftwareVersionNumberDataIdentifier. 0xF19F indicates EntityDataIdentifier. 0xF18B indicates ECUManufacturingDateDataIdentifier. 0xF18C indicates ECUSerialNumberDataIdentifier. 0xF184 indicates applicationSoftwareFingerprintDataIdentifier. 0xF191 indicates vehicleManufacturerECUHardwareNumberDataIdentifier. 0xF192 indicates systemSupplierECUHardwareNumberDataIdentifier. 0xF193 indicates systemSupplierECUHardwareVersionNumberDataIdentifier. 0xF19F indicates EntityDataIdentifier.

(Operation example of configuration information estimation unit)

The response received as a response to the request transmitted to the ECU in S101 to S104 is stored in the diagnostic system log DB 200. The configuration information estimation unit 300 estimates configuration information of the internal network of the target device by reading data from the diagnostic system log DB 200.

Hereinafter, an example of the estimation and identification operation by the configuration information estimation unit 300 will be described with reference to the flowchart of Fig. 5. Note that the order and contents of the estimation and identification described here are merely examples, and are not limited to those described here.

<S201>

In S201, the ECU presence check unit 310 checks the presence of the ECU. Specifically, it is as follows.

The ECU presence check unit 310 checks the presence of an ECU connected to the NW_B and the address information of the ECU from the response to the Vehicle Identification Request of DoIP broadcast to the ECU connected to the NW_B. That is, when the address information has been received as a response to the Vehicle Identification Request, it can be estimated that the ECU of the address information exists on the NW_B.

Furthermore, the ECU presence check unit 310 checks the presence of an ECU connected to the NW_A and the NW_AID from the response to the testerPresent of the UDS transmitted to each ECU connected to the NW_A. That is, when the NW_A-ID has been received as a response to the testerPresent, it can be estimated that the ECU with the NW_A-ID is present on the NW_A.

Furthermore, the ECU presence check unit 310 checks the presence of the Gateway-ECU and its address information from the response to the Entity Status Request of DoIP. That is, in a case where a response in which the node type is Gateway is received as a response to the Entity Status Request, it can be estimated that the Gateway-ECU is present.

<S202>

In S202, the topology estimation unit 320 estimates the topology of the internal network of the target device (here, the automobile). Specifically, it is as follows.

The topology estimation unit 320 estimates that the ECU connected to the NW_B has a configuration in which the ECU is connected to one Switch in a star configuration.

For example, the topology estimation unit 320 estimates that, on the basis of a check result in S201 that the presence of one Gateway-ECU (also functioning as Switch) and an ECU is present on the NW_B are confirmed, the internal network has a configuration in which the ECU connected to the NW_B is connected to one Switch in the star configuration. Such estimation can be performed, for example, on the basis of predetermined rules.

Furthermore, the topology estimation unit 320 estimates that the NW_A is connected to the Gateway-ECU. For example, the topology estimation unit 320 estimates that, on the basis of the check result in S201 that the presence of the Gateway-ECU is confirmed and presence of the ECU connected to the NW_A is confirmed, the NW_A is connected to the Gateway-ECU. Such estimation can be performed, for example, on the basis of predetermined rules.

Furthermore, the topology estimation unit 320 estimates that the ECU connected to the NW_A is connected to the NW_A under the control of the Gateway-ECU in a bus type. For example, the topology estimation unit 320 estimates that the ECU connected to the NW_A is connected to the NW_A under the control of the Gateway-ECU in a bus type on the basis of an estimation result that the NW_A is connected to the Gateway-ECU and known information (for example, connected in a bus type) on a connection method of the ECU to the NW_A. Such estimation can be performed, for example, on the basis of predetermined rules.

<S203>

In S203, the ECU information extraction unit 330 extracts ECU information. Specifically, it is as follows.

The ECU information extraction unit 330 identifies ECU information (VIN, model number, software version, and the like) in each ECU from a response to ReadDataByIdentifier of the UDS to which 0xF181, 0xF183, 0xF184, 0xF188, 0xF189, 0xF18A, 0xF194, 0xF195, 0xF19F, 0xF18B, 0xF18C, 0xF184, 0xF191, 0xF192, 0xF193, and 0xF19F(these DIDs are examples) are set as DIDs.

<S204>

In S204, the output unit 340 outputs the information obtained in S201 to S203. For example, the output unit 340 creates a graphical image as illustrated in Fig. 1 from the information obtained in S201 to S203, and outputs (displays) the image. Furthermore, the output unit 340 may output the information obtained in S201 to S203 in the form of a list or a natural language. In addition, a natural language voice may be output.

The configuration information estimation system in the present embodiment illustrated in Fig. 3 can be implemented in various forms. Hereinafter, Examples 1 to 6 will be described as examples of a mounting method in the present embodiment.

(Example 1)

Fig. 6 is a configuration diagram of the configuration information estimation system in Example 1. As illustrated in Fig. 6, in Example 1, an external device including all the functions of the configuration information estimation system, that is, the diagnostic communication transmission-reception unit 100, the diagnostic system log DB 200, and the configuration information estimation unit 300 is connected to the automobile 400.

A connection method of connecting the external device to the automobile 400 may be a method of physically connecting the external device to the automobile 400, or a method of implementing the external device on a network such as a cloud and connecting remotely from the external device on the network to the automobile 400.

(Example 2)

Fig. 7 is a configuration diagram of the configuration information estimation system in Example 2. In Example 2, two devices, i.e., a diagnostic communication transmission-reception device including the diagnostic communication transmission-reception unit 100 and a configuration information estimation device including the diagnostic system log DB 200 and the configuration information estimation unit 300, are connected to the automobile 400.

In the example of Fig. 7, a configuration example is illustrated in which the diagnostic communication transmission-reception device is physically connected to the automobile 400, and the configuration information estimation device is arranged on the cloud and is connected to the diagnostic communication transmission-reception device via a network. Note that such a connection mode is an example, and locations at which the diagnostic communication transmission-reception device and the configuration information estimation device are located are not limited to specific locations.

(Example 3)

Fig. 8 is a configuration diagram of the configuration information estimation system in Example 3. Example 3 is an example in which the diagnostic system log DB 200 is provided in the diagnostic communication transmission-reception device in the configuration of Example 2.

Note that in Examples 2 and 3, the diagnostic system log DB 200 may be arranged outside the diagnostic communication transmission-reception device or the configuration information estimation device, instead of inside these devices.

(Example 4)

Fig. 9 is a configuration diagram of the configuration information estimation system in Example 4. In Example 4, a processing device that implements all functions from the diagnostic communication transmission-reception unit 100 to the configuration information estimation unit 300 is arranged on the in-vehicle NW. That is, as illustrated in Fig. 9, a processing device including a diagnostic communication transmission-reception unit 100, a diagnostic system log DB 200, and a configuration information estimation unit 300 is provided inside the automobile 400.

Note that the processing device included in the automobile 400 may be arranged in a form of being physically connected in the in-vehicle NW, or may be implemented on an arbitrary ECU. That is, one or a plurality of ECUs may include the diagnostic communication transmission-reception unit 100, the diagnostic system log DB 200, and the configuration information estimation unit 300.

(Example 5)

Fig. 10 is a configuration diagram of the configuration information estimation system in Example 5. In Example 5, a processing device that performs processing on the in-vehicle NW is provided inside the automobile 400, and an external device is connected to the automobile 400. As illustrated in Fig. 10, the processing device includes the diagnostic communication transmission-reception unit 100, and the external device includes the diagnostic system log DB 200 and the configuration information estimation unit 300.

Note that the processing device may be arranged in a form in which the device is physically connected in the in-vehicle NW, or may be implemented on any ECU. In addition, the connection method of the external device may be a method of physically connecting the device to the automobile 400, or a method of providing the external device as a device on a network such as a cloud and remotely connecting the device to the automobile 400.

(Example 6)

Fig. 11 is a configuration diagram of the configuration information estimation system in Example 6. Example 6 is an example in which the diagnostic system log DB 200 is provided in the processing device in the configuration of Example 5.

Note that, in Examples 5 and 6, the diagnostic system log DB 200 may be arranged outside the processing device or the external device, instead of inside these devices.

----------Second Embodiment----------

Next, a second embodiment will be described.

(Example of vehicle configuration information)

In the second embodiment, the configuration information estimation system also estimates the vehicle configuration information of the automobile. Fig. 12 illustrates an example of the vehicle configuration information. Three pieces of information included in the vehicle configuration information are the topology of the in-vehicle network in Fig. 12, the ECU information (two tables), and the normal communication (a frame surrounded by a thick line in the right table). Note that these pieces of information are information within the scope of elemental techniques 1 to 3 described below.

In the second embodiment, diagnostic communication is used similar to the first embodiment. The diagnostic communication is as described with reference to Fig. 2.

(Network of Automobile)

Fig. 13 illustrates a network of an automobile assumed in the second embodiment. As illustrated in Fig. 13, in the network, one OBD-II port is connected to both the NW_A bus and the in-vehicle NW-B. The diagnostic communication of the following (1) and (2) is possible from one OBD-II port.

(1) Diagnostic communication with the ECU connected to NW_A can be executed using only NW_A (not via SW). Furthermore, diagnostic communication with the ECU connected to the NW_A can be executed by using the in-vehicle NW_B from OBD-II to the GW and using the NW_A after the GW.

(2) For the ECU connected to the in-vehicle NW_B, diagnostic communication is performed using only the in-vehicle NW_B (via SW).

(Elemental techniques)

Here, elemental techniques in the second embodiment will be described. The elemental techniques in the second embodiment are the following (1) to (3). Note that (4) and (5) describe the techniques described in the first embodiment as elemental technique 4 and elemental technique 5.

(1) Technique for estimating topology of NW_A (elemental technique 1)

(2) Technique for specifying normal (non-diagnostic) NW_A-ID (000 to 6FF) transmitted by ECU connected to NW_A (elemental technique 2)

(3) Technique for estimating function (= name) of each ECU (elemental technique 3)

(4) Technique for acquiring ECU information of each ECU (elemental technique 4)

(5) Technique for estimating topology of NW_B

(elemental technique 5)

Each of the elemental techniques 1 to 3 in the second embodiment will be described below.

(Elemental technique 1)

<Technique according to related art and problems related to elemental technique 1>

The technique according to related art in regard to the elemental technique 1 is a technique disclosed in Non-Patent Literature 1 described above. As described above, in the technique disclosed in Non-Patent Literature 1, the MAC address forwarding table of each Switch in the target NW is acquired using the SNMP, and the L2 topology of the target NW is estimated by analyzing the acquired information.

However, in order to acquire the topology of the NW_A bus by the SNMP-based method as in Non-Patent Literature 1, each ECU needs resource enhancement and support of the SNMP for enabling operation of the SNMP agent, and additional cost is required.

<Points and effects of elemental technique 1>

Also in the elemental technique 1, transmission and reception of diagnostic communication that is standardly available in most automobiles are used. Specifically, the topology of the NW_A bus is estimated using RTT of the diagnostic communication when occupancy of a specific bus is forcibly increased (congested). Details of the present technique will be described below.

A diagnostic communication protocol is supported in each ECU in a standard manner, and thus the present technique enables estimation of the topology of the NW_A bus without additional cost such as resource enhancement or support of a new protocol.

<Aim of elemental technique 1, application target>

The elemental technique 1 aims to specify ECUs connected to the same NW_A bus. For example, in a case of the configuration illustrated in Fig. 14, the following information is estimated.

- ECU-A and ECU-B are connected to the same bus
- ECU-A and ECU-C are connected to different buses
- ECU-B and ECU-C are connected to different buses

An application target of the elemental technique 1 is that there is a bus having a domain architecture, and for example, as illustrated in Fig. 15, there is a plurality of buses under the GW. The GW routes diagnostic communications to an appropriate bus. For example, the diagnostic communication having the NW_A-ID corresponding to the ECU-A is transmitted from the GW only to the bus to which the ECU-A is connected.

<Points of estimation method of elemental technique 1>

As described above, in the elemental technique 1, the topology of the NW_A is estimated by using a round trip time (RTT) of the diagnostic communication when occupancy of a specific bus is forcibly increased (congested).

The definition of the RTT of the diagnostic communication will be described with reference to Fig. 16. Note that Fig. 16 illustrates an example of a case where diagnostic communication is performed from the PC to the ECU-A as an example. The RTT of the diagnostic communication is a time from a start of a transmission of a diagnosis request by the PC (S1) until an end of a reception of a diagnostic response (S2) from the ECU by the PC.

Here, as illustrated in Fig. 17, it is assumed that only the bus 1 is congested. In a case where only the bus 1 is congested, the RTT of diagnostic communication with the ECU connected to the bus 1 is larger than that in a case where there is no congestion. In contrast, the RTT of the diagnostic communication with the ECU connected to the bus 2 does not change as compared with that in the case where there is no congestion. In the elemental technique 1, topology is estimated using such an event.

<Outline of estimation procedure of elemental technique 1>

An outline of the estimation procedure of the elemental technique 1 will be described with reference to Figs. 18 to 20. First, as illustrated in Fig. 18, a diagnosis request is transmitted several times to the ECU-B and the ECU-C, and an average value of RTTs of the ECU-B and the ECU-C is checked. An image of the average value of RTTs of the ECU-B and the ECU-C is illustrated at a lower left of Fig. 18 (and Figs. 19 and 20).

Next, as illustrated in Fig. 19, by frequently transmitting the diagnosis request to the ECU-A, the occupancy of the bus connected between the ECU-A and the ECU-B is increased. In the example of Fig. 19, it is indicated that the occupancy of the bus is 99%.

Subsequently, as illustrated in Fig. 20, under a situation where the bus to which the ECU-A is connected is congested, the diagnosis request is transmitted several times to the ECU-B and the ECU-C, and the average value of RTTs of the ECU-B and the ECU-C is checked.

As illustrated in a lower left of Fig. 20, when the average value of the statistical values of the RTTs is increased (lower left diagram) as compared with that when there is no congestion, it is determined that the ECU is connected to the same bus as the ECU-A. In the example of Fig. 20, it is determined that "ECU-A and B are connected to the same bus."

(Elemental technique 2)

Next, the elemental technique 2 will be described.

<Technique according to related art and problems related to elemental technique 2>

As a technique according to related art in regard to the elemental technique 2, there is "Sekar Kulandaivel, Tushar Goyal, Arnav Kumar Agrawal, and Vyas Sekar, "CANvas: Fast and Inexpensive Automotive Network Mapping", In the Proceedings of the 28th USENIX Security Symposium, pp. 389-405, (2019)."

In this technique according to related art, all NW_A-IDs of NW_A messages transmitted by one ECU are specified by using a characteristic of the NW_A that, when a collision of messages transmitted by the ECU abnormally occurs a certain number of times, message transmission of the ECU is stopped (bus off).

Specific examples of the method according to related art are as follows.

The NW_A message of NW_A-ID = 0x300 is transmitted from the estimation device connected to the NW_A bus, so that the timing of the transmission matches the timing at which a certain ECU-A on the NW_A bus transmits the NW_A message of NW_A-ID = 0x300.

Thus, a collision of the NW_A message of NW_A-ID = 0x300 occurs. By repeating this collision, bus off of the ECU-A occurs.

When the bus off of the ECU-A occurs, the NW_A messages (for example, 0x301 and 0x302 as others) of all NW_A-IDs including the NW_A-ID = 0x300 transmitted by the ECU-A are also stopped.

At this time, the NW_A-ID of the NW_A message that is no longer transmitted is checked by the estimation device to identify the NW_A-ID of the NW_A message transmitted by the ECU-A. In this example, "ECU-A transmits NW_A messages of NW_A-ID = 0x300, 0x301, and 0x302" is identified.

However, the above-described technique according to related art has the following problems.

The OBD-II port mounted for access to the in-vehicle NW_A bus is set to transmit and receive only diagnostic communications in most recent automobiles. In contrast, in order to cause a collision of the NW_A message in the above-described technique according to related art, it is necessary to be capable of transmitting a non-diagnostic communication to the in-vehicle NW_A bus. Accordingly, it is difficult to implement the technique according to related art in a general form of using the OBD-II port.

<Point and effect of elemental technique 2>

In the elemental technique 2, the transmission cycle of the NW_A message of the target ECU is deviated using the diagnostic communication, and the deviation of the transmission cycle of the NW_A message is detected by the NW_A-IDS. Then, by associating a detection result thereof with the information of the target ECU, the NW_A-ID of the NW_A message transmitted by the ECU is identified.

According to the present technique, it is possible to identify the "NW_A-ID of NW_A message transmitted by ECU" for most recent automobiles by using the OBD-II port.

<Aim of elemental technique 2, application target>

As illustrated in Fig. 21, for example, the elemental technique 2 aims to associate a normal NW_A-ID (000 to 6FF) transmitted by the ECU connected with the NW_A with a diagnostic NW_A-ID (700 to 7FF), and to associate the NW_A-ID with the ECU information.

In the elemental technique 2, it is assumed that an IDS exists on the target NW and a normal message is monitored. The IDS issues an alert in a case where the interval of the transmission time of the normal message is shorter or longer than the design value or in a case where there is an abnormal change in the payload. The alert of the IDS includes information (NW_A-ID in the example of the automobile) of the message detected as the abnormality. Furthermore, a vehicle configuration estimation device can acquire the alert of the IDS in some way.

<Points and procedure of estimation method of elemental technique 2>

A processing procedure that is a point of the elemental technique 3 will be described with reference to Fig. 22.

(1) By using ECUReset (for example, with NW_A-ID = 7E0), periodicity and a payload change of message transmission of normal NW_A-ID (for example, NW_A-ID = 300) transmitted by the target ECU are deviated.
(2) The NW_A-IDS is caused to issue an alert. For example, the alert includes the NW_A-ID = 300.
(3) Then, it is determined that "NW_A-ID included in the alert is the normal NW_A-ID transmitted by the target ECU."

(Elemental technique 3)

Next, the elemental technique 3 will be described.

<Technique according to related art and problems related to elemental technique 3>

As a technique according to related art in regard to the elemental technique 3, there is "X. Feng, et al: Acquisitional Rule-based Engine for Discovering Internet-of-Things Dvices. USENIX (2018)". In this technique according to related art, information (device type, vendor, and model number) of the IoT device is specified by using the response information collected from the IoT device and the web crawling and scraping technique.

More specifically, in this technique according to related art, a plurality of web crawling and scraping results B is obtained for the keyword A extracted from the response of a certain IoT device. In the example of the automobile, it is assumed that an ECU model number "12345-67890" is acquired from a certain ECU. At this time, A = 12345-67890. Then, it is assumed that the crawling and scraping result using A is as illustrated in Fig. 23.

In this technique according to related art, the following certainty factor conf(A :::::> B) is calculated for the plurality of results B.

$$\text{conf}(A \Rightarrow B) = (\text{the number of results including both A and B})/(\text{the number of results including A})$$

Then, a result having the highest certainty factor is extracted as one result. In the example of Fig. 23, A = 12345-67890 and B = Engine Module are extracted with conf(A ⇒ B) = 0.67.

The above-described technique according to related art has the following problems.

When crawling and scraping is performed using the entire ECU model number as a keyword, it is often impossible to estimate the function of the ECU due to the absence of the search result.

Furthermore, in a case where a result with the highest certainty factor is extracted as in the above-described technique according to related art, a result with a small amount of information may be selected. For example, in a case of Fig. 23, since the "hybrid engine module" has a larger information amount, this result is desirably extracted. However, in the case of the technique according to related art, in a case where scraping results (table) as illustrated in Fig. 23 are obtained, the "Engine Module" having a large number of appearances is selected.

<Point and effect of elemental technique 3>

Points of the elemental technique 3 include following points 1 and 2.

Point 1 is to also use a scraping result using only the digit indicating the function on the basis of a naming rule of the ECU model number. Point 2 is to extract a result in which the sum of the support degree of the words included in each web crawling and scraping result is maximum.

According to the present technique, it is possible to avoid the inability to estimate the function (name) of the ECU due to the absence of the search result. Furthermore, it is possible to output a result with high reliability and a large amount of information.

<Aim of elemental technique 3, application target>

The elemental technique 3 aims to estimate the function (name) of each ECU (including NW_B connection). For example, in the example illustrated in Fig. 24, "ECU-X is IVI," "ECU-Y is TCU," "ECU-A is engine ECU," and the like are estimated. Furthermore, in the elemental technique 3, it is possible to acquire information uniquely specifying a device, and in an example of an automobile, it is possible to acquire an "ECU model number."

<Points and procedure of estimation method of elemental technique 3>

First, an overall image of an estimation method of the elemental technique 3 will be described. In the elemental technique 3, a function (name) is specified by using each ECU model number acquired by diagnostic communication and a web crawling and scraping technique. Fig. 25 illustrates an image thereof. Hereinafter, the points 1 and 2 described above will be described in more detail.

<Point 1>

In point 1, the web crawling and scraping result using only one or more digits related to the function of the ECU model number is also used on the basis of the naming rule of the ECU model number.

Many of the ECU model numbers have a configuration in which a digit indicating the functional information and a digit indicating the vehicle model year are combined. When a digit indicating the functional information is indicated by o and a digit indicating the vehicle model year is indicated by Δ, for example, there is the following ECU model number configuration.

- ooooo-ΔΔΔΔΔ
- ΔΔΔ-oooooo-Δ

The reason why the search result absence is reduced by using only the one of more digits related to the function like the point 1 is as follows.

Performing the search under the condition of "all digits of the ECU model number match" means searching for the ECU that is "mounted on the vehicle of the specified vehicle model year" and has a "specified function." In contrast, performing the search under the condition that "only the digit indicating the function of the ECU model number is matched" means searching for the ECU having the "specified function." That is, since the restriction conditions at the time of search can be reduced, the absence of search results can be reduced.

The method of extracting the one or more digits relating to the function is not limited to a specific extraction method, but for example, any one of the following extraction methods 1 to 3 can be used.

Extraction method 1)

In the extraction method 1, the one or more digits relating to the function are determined on the basis of the publicly available "information of the naming rule of the ECU model number." For example, in a case where the naming rule is disclosed on a website of an automobile company or the like, the one or more digits relating to the function is determined on the basis of the public information.

Extraction method 2)

In the extraction method 2, only the ECU model number related to a certain function is extracted and analyzed, and the one or more digits related to the function is determined on the basis of the analysis result. For example, when only the ECU model number related to the engine ECU is extracted and analyzed, there is a digit in which the value does not change in any ECU model number. The digit is determined as the one or more digits related to the function.

Extraction method 3)

In the extraction method 3, an ECU model number of an ECU mounted on a certain automobile is extracted and analyzed, and one or more digits relating to a function are determined on the basis of an analysis result. For example, when an ECU model number of an ECU mounted on one automobile is extracted and analyzed, there is a digit in which the value does not change in any ECU model number. Since the digit is considered to be a digit indicating the vehicle type instead of the function, one or more digits obtained by excluding the digit is determined as the one or more digits related to the function.

<Point 2>

In Point 2 of the elemental technique 3, a result in which the sum of the support degree of the words included in each web crawling and scraping result is maximum is extracted. Specifically, it is as follows.

It is assumed that web crawling and scraping results illustrated in Fig. 26 are obtained when the function (name) of the ECU with the ECU model number "12345-67890" is estimated. The following support degree sup(X) is calculated for the word X included in Fig. 26.

$$\text{sup}(X) = (\text{the number of results including } X)/(\text{the number of all web crawling and scraping results})$$

Then, the sum of the support degree of words included in each row is calculated in each row, and a result having the largest sum is extracted as one result. In the example of Fig. 26, a hybrid engine module is extracted. Here, sup(Engine) = 1, sup(Module) = 1, sup(Hybrid) = 0.3, and sum = 2.3.

(Examples)

Hereinafter, a specific device configuration and operation in the second embodiment will be described as examples. The outline of each example is as follows.

A. A list of Examples in terms of combinations of elemental techniques

- Example A1: Example in combination of most basic elemental techniques (description of details of processing flow)
- Examples A2 to A4: Examples in which each elemental technique is used alone
- Examples A5 to A7: Examples in which elemental techniques are partially combined

B. A list of Examples in terms of physical function deployment

- Example B1: Example in which function according to the present invention is deployed on in-vehicle NW
- Example B2: Example of directly connecting function according to the present invention to OBD-II port
- Example B3: Example in which function according to the present invention is implemented from charging port
  Note that B1 to B3 may be deployed on the cloud by cutting out portions other than an in-vehicle NW 1 and a message transmission-reception unit 23 described below.
- Example B4: Example of performing estimation by a function according to the present invention deployed on external network

C. A list of Examples in terms of objectives

- Example C1: Example of use for security analysis in security operation center (SOC) or the like
- Example C2: Example of use for asset management
- Example C3: Example of performing abnormality detection
- Example C4: Example of use for security diagnosis
  Note that Examples A and B described above are combined in actual implementation. For example, implementing Example A1 in the function deployment of Example B1, or the like. It is then used for the purpose described in C. Hereinafter, each example will be described.

(Example A1)

Example A1 is an example in the most basic combination of the core techniques. Here, as an example, physical deployment of Example B2 will be assumed.

<Device configuration (block diagram)>

Fig. 27 illustrates a configuration diagram of the configuration information estimation system in Example A1. As illustrated in Fig. 27, the configuration information estimation system includes a component estimation unit 2 and a configuration information estimation result DB 22. The component estimation unit 2 may be referred to as a vehicle configuration estimation device or a network configuration estimation device. The configuration information estimation system may be referred to as a configuration information estimation device. The component estimation unit 2 is connected to the in-vehicle NW 1 and the website 7 (web server), and can communicate with them.

The component estimation unit 2 includes an ECU basic information acquisition unit 3, an ECU function estimation unit 4, an NW_B topology estimation unit 12, an NW_A bus topology estimation unit 13, a normal NW_A communication estimation unit 18, the message transmission-reception unit 23, and a configuration information acquisition-registration unit 24.

The ECU function estimation unit 4 includes a web search unit 6, a search result DB 8, an exact match extraction unit 9, a specific partial match extraction unit 10, and an estimation unit 11. Note that the "exact match extraction unit 9, specific partial match extraction unit 10, and estimation unit 11" may be collectively referred to as an estimation unit.

The NW_A bus topology estimation unit 13 includes a base RTT calculation unit 14, a congestion RTT calculation unit 15, an RTT comparison unit 16, and an estimation unit 17. Note that the "RTT comparison unit 16 and estimation unit 17" may be collectively referred to as an estimation unit.

The normal NW_A communication estimation unit 18 includes a restart command transmission unit 19, a vehicle alert reception unit 20, and an estimation unit 21.

Hereinafter, device operation will be described with reference to a flowchart. Note that, in the following description, message transmission and reception to the in-vehicle NW 1 and the in-vehicle ECU are performed via the message transmission-reception unit 23.

<Overall processing flow>

An overall processing flow of the configuration information estimation system will be described with reference to Fig. 28. Note that the order of the processing illustrated in Fig. 28 is an example.

In S1030, the ECU basic information acquisition unit 3 acquires ECU basic information. In S1040, the ECU function estimation unit 4 estimates an ECU function. In S1120, the NW_B topology estimation unit 12 estimates the topology of the NW_B. In S1130, the NW_A bus topology estimation unit 13 estimates the NW_A bus topology. In S1180, the normal NW_A communication estimation unit 18 estimates normal NW_A communication.
Hereinafter, processing contents of individual steps will be described in detail.

<S1030>

S1030 will be described with reference to Fig. 29.
In S1030-1, the vehicle configuration estimation device is connected to the OBD-II port (NW_B) of the in-vehicle NW 1.
In S1030-2, the ECU basic information acquisition unit 3 executes S1031. In S1030-3, the ECU basic information acquisition unit 3 executes S1032. In S1032, S1033 and S1034 are also performed.
In S1030-4, the ECU basic information acquisition unit 3 executes S1035. In S1030-5, the ECU basic information acquisition unit 3 disconnects the vehicle configuration estimation device from the OBD-II port (NW_B) and connects the vehicle configuration estimation device to the OBD-II port (NW_A).
In S1030-6, the ECU basic information acquisition unit 3 executes S1036. In S1030-7, the ECU basic information acquisition unit 3 executes S1037. In S1037, S1038 is also performed. In S1030-8, the ECU basic information acquisition unit 3 executes S1039.

<S1031>

Next, processing of S1031 will be described with reference to Fig. 30.
In S1031-1, the ECU basic information acquisition unit 3 acquires the local IP address on the in-vehicle NW 1 by AutoIP or DHCP in accordance with the regulations of DoIP.
In S1031-2, in a case where the ECU basic information acquisition unit 3 has received the Vehicle Announcement broadcast by each ECU on the in-vehicle NW 1 in accordance with the regulations of DoIP, the processing proceeds to S1031-5, and in a case where the ECU basic information acquisition unit 3 has not received the Vehicle Announcement, the processing proceeds to S1031-3.
In S1031-3, the ECU basic information acquisition unit 3 broadcasts the Vehicle Identification Request (defined by DoIP) on the in-vehicle NW 1.
In S1031-4, each ECU on the in-vehicle NW 1 responds to the Vehicle Identification Request with the Vehicle Identification Response in accordance with the regulations of DoIP. The ECU basic information acquisition unit 3 receives the Vehicle Identification Response.
In S1031-5, the ECU basic information acquisition unit 3 records information such as a transmission source IP address included in the received Vehicle Announcement and Vehicle Identification Response in a storage means such as a memory. The recorded information is illustrated in Fig. 31 (Table 3031). Note that the information to be recorded is not limited to that in Table 3031.

<S1032>

Next, processing of S1032 will be described with reference to Fig. 32. In S1032-1, the ECU basic information acquisition unit 3 declares the following variables.
- List of IP addresses "IP = [192.168.10.1,192.168.10.2,192.168.10.3]" in Table 3031 stored in previous step (S1031)
- Length of IP list "Length(IP)" (in case of this example, Length(IP) = 3)
- "DID = [0xF18C, 0xF190, 0xF191, 0xF194, 0xF195, 0xF19F]"
- Length of DID "Length(DID)" (Length(DID) = 6 in case of this example)
- i = 0
  Note that the variable name may be other than the above. In addition, the content of the IP may be unified with a value other than the IP address. A value other than the above may be added to the DID.

In S1032-2, the ECU basic information acquisition unit 3 determines whether or not i < Length(IP) holds. If Yes, the processing proceeds to S1032-3, and if No, the processing ends.
In S1032-3, the ECU basic information acquisition unit 3 executes processing of S1033. In S1032-4, the ECU basic information acquisition unit 3 executes processing of S1034. In S1032-5, i = i + 1, and the processing returns to S1032-2.

<S1033>

Next, the processing of S1033 will be described with reference to Fig. 33. In S1033-1, the ECU basic information acquisition unit 3 transmits a DoIP Entity Status Request to the IP[i] on the in-vehicle NW 1.

In S1033-2, the ECU having the IP[i] on the in-vehicle NW 1 responds to the DoIP Entity Status Request with a DoIP Entity Status Response in accordance with the regulations of DoIP. The ECU basic information acquisition unit 3 receives the DoIP Entity Status Response.

In S1033-3, the ECU basic information acquisition unit 3 records "Node type" and IP[i] included in the received DoIP Entity Status Response in the storage means. An example of the recorded information is illustrated in Fig. 34 (Table 3032).

<S1034>

Next, the processing of S1034 will be described with reference to Fig. 35. In S1034-1, the ECU basic information acquisition unit 3 declares a variable j = 0. Note that the variable name may be other than j. In S1034-2, the ECU basic information acquisition unit 3 determines whether or not j < Length(DID) is satisfied. If Yes, the processing proceeds to S1034-3, and if No, the processing ends.

In S1034-3, the ECU basic information acquisition unit 3 transmits readDataByIdentifier (defined by UDS) to which DID[j] is set to DID to IP[i], and receives a response. In S1034-4, the ECU basic information acquisition unit 3 records the dataRecord of the received response in the storage means together with the IP[i] and the DID[j]. An example of the recorded information is illustrated in Fig. 36 (Table 3033). In S1034-5, the ECU basic information acquisition unit 3 sets j = j + 1, and the processing returns to S1034-2.

<S1035>

Next, S1035 will be described with reference to Fig. 37. In S1035-1, the ECU basic information acquisition unit 3 changes the DID in Fig. 36 (Table 3033) to "description" on the basis of the regulations of UDS, and converts the dataRecord from ASCII (hexadecimal number) → a character string. Results after changing or converting Fig. 36 (Table 3033) are as illustrated in Fig. 38 (Table 3034). Note that the content of the description and the method of converting the dataRecord are not limited thereto.

In S1035-2, the ECU basic information acquisition unit 3 organizes the data of Fig. 38 (Table 3034) using "IP address" and "ECU model number" as composite primary keys. The organized results are as illustrated in Fig. 39 (Table 3035). Note that the method of grouping is not limited thereto.

In S1035-3, the ECU basic information acquisition unit 3 combines Fig. 39 (Table 3035), Fig. 31 (Table 3031), and Fig. 34 (Table 3032) using "IP address" as a key. Results thereof are as illustrated in Fig. 40 (Table 3036).

In S1035-4, the ECU basic information acquisition unit 3 stores the combination result of Fig. 40 (Table 3036) in the configuration information estimation result DB 22 via the configuration information acquisition-registration unit 24.

<S1036>

Next, S1036 will be described with reference to Fig. 41. In S1036-1, the ECU basic information acquisition unit 3 sequentially transmits a TesterPresent request to all of the diagnostic NW_A-ID = 0x700 to 0x7FF and the diagnostic extended NW_A-ID (hereinafter, these are simply collectively referred to as "NW _A-ID") in accordance with the regulations of DoCAN and UDS.

In S1036-2, when a response to the transmission of the TesterPresent request in the previous step occurs on the in-vehicle network, the ECU basic information acquisition unit 3 records the NW_A-ID (request NW_A-ID) and the like transmitted by the ECU basic information acquisition unit 3 in the storage means. For example, when there is a response at the time of transmitting TesterPresent in which NW_A-ID = 700 is set, NW_A-ID = 700 or NW_A-ID (response NW_A-ID) set in the response is recorded. Results thereof are as illustrated in Fig. 42 (Table 3037).

<S1037>

Next, S1037 will be described with reference to Fig. 43. In S1037-1, the ECU basic information acquisition unit 3 declares the following variables.

- Request NW_A-ID list "NW_A-ID = [0x700, 0x724, 0x750, 0x7E0, 0x7E1]" in Fig. 42 (Table 3037) recorded in previous step

- Length of list "Length(NW_A-ID)" (Length(NW_A-ID) = 5 in case of this example)
- "DID = [0xF18C, 0xF190, 0xF191, 0xF194, 0xF195, 0xF19F]"
- DID length "Length(DID)" (Length(DID) = 6 in case of this example)
- i = 0

  Note that the variable name may be other than the above. In addition, the contents of the NW_A-ID may be unified with values other than the NW _A-ID. A value other than the above may be added to the DID.

In S1037-2, it is checked whether i < Length(NW_AID) is satisfied. If Yes, the processing proceeds to S1037-3, and if No, the processing ends. In S1037-3, the ECU basic information acquisition unit 3 executes S1038. In S1037-4, i = i + 1, and the processing returns to S1037-2.

<S1038>

Next, S1038 will be described with reference to Fig. 44. In S1038-1, the ECU basic information acquisition unit 3 declares a variable j = 0. Note that the variable name may be other than j.

In S1038-2, the ECU basic information acquisition unit 3 determines whether j < Length(DID) is satisfied. If Yes, the processing proceeds to S1038-3, and if No, the processing ends.

In S1038-3, the ECU basic information acquisition unit 3 transmits readDataByIdentifier (defined by UDS) in which DID[j] is set to DID to NW_A-ID[i], and receives a response.

In S1038-4, the ECU basic information acquisition unit 3 records the dataRecord of the received response in the storage means together with the NW_A-ID[i] (request NW_A-ID), the response NW_A-ID, and DID[j]. An example of the recorded information is illustrated in Fig. 45 (Table 3038). In S1038-5, the processing returns to S1038-2 with j = j + 1.

<S1039>

Next, S1039 will be described with reference to Fig. 46. In S1039-1, the ECU basic information acquisition unit 3 changes the DID in Fig. 45 (Table 3038) to "description" on the basis of the regulations of UDS, and converts the dataRecord from ASCII (hexadecimal number) → a character string. Note that the content of the description and the method of converting the dataRecord are not limited thereto.

In S1039-2, the ECU basic information acquisition unit 3 organizes the data in the previous step using the "NW_A-ID" and "ECU model number" as composite primary keys. The organized results are as illustrated in Fig. 47 (Table 3039). Note that the method of grouping is not limited thereto.

In S1039-3, the ECU basic information acquisition unit 3 passes the organized result of Fig. 47 (Table 3039) to the configuration information estimation result DB 22 via the configuration information acquisition-registration unit 24.

<S1040>

Next, S1040 will be described with reference to Fig. 48. In S1040-1, the ECU function estimation unit 4 declares the following variables.

- A list of non-overlapping ECU model numbers in Fig. 40 (Table 3036) and Fig. 47 (Table 3039) acquired from configuration information estimation result DB 22 via configuration information acquisition-registration unit 24
- "PN = [11111-56789, 22222-56789, 33333-56789, 44444-56789, 55555-56789, 66666-56789, 77777-56789, 88888-56789]"
- Length of PN list "Length(PN)" (Length(PN) = 8 in case of this example)
- i = 0

  Note that the variable name may be other than the above. In addition, the content of the IP may be unified with a value other than the IP address.

In S1040-2, the ECU function estimation unit 4 determines whether i < Length(PN) is satisfied. If Yes, the processing proceeds to S1040-3, and if No, the processing ends. In S1040-3, S1061 is performed on PN[i], in S1040-4, S1091 is performed on PN[i], in S1040-5, S1101 is performed on PN[i], and in S1040-6, S1111 is performed on PN[i]. In S1040-7, i = i + 1, and the processing returns to S1040-2.

<S1061>

Next, S1061 will be described with reference to Fig. 49. In S1061-1, the web search unit 6 crawls a web page using the ECU model number acquired from the configuration information estimation result DB 22 as a search word. The web page to be crawled at this time is preferably a website suitable for searching for the function (= name) of the ECU from the model number of the ECU. Furthermore, as two types of search words, the entire ECU model numbers and one or more digits related to the function of the ECU model number are used.

Note that the one or more digits relating to the function of the ECU model number are identified by the method described in the description of point 1 of the elemental technique 3, or the like. Note that the identification method is not limited thereto.

In S1061-2, the web search unit 6 scrapes the pair information of the ECU model number and the function corresponding to the ECU model number from the web page crawled in the previous step.

In S1061-3, the web search unit 6 stores the pair information in the past search result DB 8. Note that the past search result DB 8 has, for example, a DB structure as illustrated in Fig. 50 (Table 3081).

<S1091>

Next, S1091 will be described with reference to Fig. 51. In S1091, the exact match extraction unit 9 acquires the pair information in which the ECU model numbers exactly match from the search result DB 8.

<S1101>

Next, S1101 will be described with reference to Fig. 52. In S1101, the specific partial match extraction unit 10 acquires pair information in which one or more digits related to the function of the ECU model number match from the search result DB 8.

<S1111>

Next, S1111 will be described with reference to Fig. 53. In S1111-1, the estimation unit 11 divides information of function among pieces of the pair information acquired in the above step for each word. For example, in a case where pair information having information of a function of "Genuine Engine Control Module" is obtained, the pair information is divided into four pieces of "Genuine," "Engine," "Control," and "Module."

In step S1111-2, the estimation unit 11 deletes frequently appearing words irrelevant to the function among the words divided in the previous step. For example, in the example of the previous step, "Genuine" is deleted. Note that it is not necessary to perform the deletion.

In S1111-3, the estimation unit 11 calculates the support degree of each word divided. Specifically, the support degree of the word x is calculated by the following expression. An example of the calculation result of the support degree is illustrated in Fig. 54 (Table 3111).

Support degree (x) = (the number of pieces of pair information including x)/(the number of all pieces of pair information)

In S1111-4, the estimation unit 11 calculates the sum of the support degrees of the words included in the function information of each piece of the pair information. Then, the pair information having the largest sum is output. Note that, in addition to the sum, the pair information having the largest average or the largest product may be selected.

As an example, a process and a result of calculating the sum based on the example of the support degree illustrated in Fig. 55 will be described below.

1. Gas Motor Module

$$\text{Sum} = 0.25 + 0.5 + 1.0 = 1.75$$

2. Engine Motor Control Module

$$\text{Sum} = 0.75 + 0.5 + 0.75 + 1.0 = 3.0$$

3. Engine Control Module

$$\text{Sum} = 0.75 + 0.75 + 1.0 = 2.5$$

4. Engine Control Module

$$\text{Sum} = 0.75 + 0.75 + 1.0 = 2.5$$

Since the information of 2 has the maximum value, the pair information of 2 is output. Note that the function information of the pair information that is the basis of Fig. 55 is as follows.
1. Gas Motor Module
2. Engine Motor Control Module
3. Engine Control Module
4. Engine Control Module

In S1111-5, the estimation unit 11 adds the result of labeling described below to the row having the appropriate ECU model number in Fig. 40 (Table 3036) or Fig. 47 (Table 3039) of the configuration information estimation result DB 22 via the configuration information acquisition-registration unit 24. Examples of results thereof are illustrated in Fig. 56 (Table 3112) and Fig. 57 (Table 3113). The labeling is as follows.
In a case where the "pair information with exactly matched ECU model numbers" acquired from the search result DB 8 is used in the present processing, the processing is performed using only the pair information with exactly matched ECU model numbers. Then, the output result is labeled as "exact match." In this regard, in a case where "the pair information in which specific portions of the ECU model numbers match" acquired from the search result DB 8 is used in the present processing, the processing is performed using only the pair information in which the specific portions of the ECU model numbers match. Then, the output result is labeled as "partial match."

<S1120>

Next, S1120 will be described with reference to Fig. 58. In S1120-1, the NW_B topology estimation unit 12 executes S1121. In S1120-2, the NW_B topology estimation unit 12 executes S1122.

<S1121>

Next, S1121 will be described with reference to Fig. 59. In S1121-1, the NW_B topology estimation unit 12 declares the following variables.
- List of IP addresses "IP = [192.168.10.1,192.168.10.2,192.168.10.3]" in Fig. 54 (Table 3111) acquired from the configuration information estimation result DB 22 via the configuration information acquisition-registration unit 24
- Length of IP list "Length(IP)" (Length(IP) = 3 in case of this example)
- i = 0
  Note that the variable name may be other than the above. In addition, the content of the IP may be unified with a value other than the IP address.

In S1121-2, the NW_B topology estimation unit 12 determines whether or not i < Length(IP) is satisfied. If Yes, the processing proceeds to S1121-3, and if No, the processing ends.
In S1121-3, the NW_B topology estimation unit 12 performs traceroute of ICMP to the IP[i] on the in-vehicle NW 1, and records the result in the storage means. An example of information to be recorded is illustrated in Fig. 60. In S1121-4, i = i + 1, and the processing returns to S1121-2.

<S1122>

S1122 will be described with reference to Fig. 61.
In S1122-1, the NW_B topology estimation unit 12 extracts all the ECU model numbers from Fig. 56 (Table 3112) of the configuration information estimation result DB 22 via the configuration information acquisition-registration unit 24. Next, the NW_B topology estimation unit 12 deletes overlaps of the extracted ECU model numbers. Subsequently, one-to-one correspondence is to be defined between the ECU model number from which the overlaps are deleted and the physical ECU. An example of the results is illustrated in Fig. 62.
In S1122-2, the NW_B topology estimation unit 12 adds the network interface to the information in Fig. 62 on the basis of the "ECU model number," the "MAC address," and the "IP address" in Fig. 56 (Table 3112) acquired from the configuration information estimation result DB 22 via the configuration information acquisition-registration unit 24. Results thereof are as illustrated in Fig. 63.

In S1122-3, the NW_B topology estimation unit 12 appropriately allocates all pieces of the information of Fig. 56 (Table 3112) acquired from the configuration information estimation result DB 22 via the configuration information acquisition-registration unit 24 to the ECU or the interface of the ECU. Results thereof are as illustrated in Fig. 64.

In S1122-4, the NW_B topology estimation unit 12 organizes the connection relationship among the OBD-II port, the network interface of the ECU (and the physical ECU), and the IP router via the NW_B cable based on the traceroute record (Fig. 62). Note that, in a case where a plurality of ECUs is present under the control of the same IP router, it is estimated that the ECUs and the IP router are connected by one NW_B switch. Furthermore, in a case where a plurality of ECUs is present in the in-vehicle network but no IP router is present, it is estimated that these ECUs are connected by one NW_B switch. Results thereof are as illustrated in Fig. 65. Note that the method of organizing the connection relationship between the ECUs is not limited to this.

In S1122-5, the NW_B topology estimation unit 12 stores the estimation result of Fig. 65 in the configuration information estimation result DB 22 via the configuration information acquisition-registration unit 24.

<S1130>

Next, S1130 performed by the NW_A bus topology estimation unit 13 will be described with reference to Fig. 66.

In S1130-1, the base RTT calculation unit 14 executes S1141. In S1130-2, the congestion RTT calculation unit 15 executes S1151. In S1130-3, the congestion RTT calculation unit 15 executes S1152. In S1130-4, the RTT comparison unit 16 executes S1161. In S1130-5, the estimation unit 17 executes S1171. In S1130-6, the estimation unit 17 executes S1172.

<S1141>

Next, S1141 will be described with reference to Fig. 67.

In S1141-1, the base RTT calculation unit 14 transmits the TesterPresent request specified in the UDS to the NW_A-ID[i] 100 times at 200 ms intervals. Then, a response thereto is received. Moreover, the transmission time and the reception time are recorded in the storage means. An example of the recorded information is illustrated in Fig. 68. Note that the transmission interval and the number of transmissions are not limited thereto.

In S1141-2, the base RTT calculation unit 14 calculates the statistical value of the response time (hereinafter referred to as pace response time) using the record of the previous step (Fig. 68). Then, a result thereof is recorded together with the NW_A-ID[i] (for example, Fig. 69 (Table 3141)). Note that a difference between the time at which the TesterPresent is transmitted with the request NW_A-ID (0x700 in Fig. 68) and the time at which the TesterPresent is received with the response NW_AID (0x708 in Fig. 68) immediately after the transmission is defined as a base response time. Furthermore, an average valuem, a maximum value, a minimum value, and a standard deviation are calculated as statistical values. However, other statistical values may be calculated.

<S1151>

Next, S1151 will be described with reference to Fig. 70.

In S1151-1, the congestion RTT calculation unit 15 declares the following variables.

- a list "NW_A-ID = [0x700, 0x724, 0x750, 0x7E0, 0x7E1]" in which the request NW_A-ID of Fig. 57 (Table 3113) acquired from the configuration information estimation result DB 22 via the configuration information acquisition-registration unit 24 are arranged in ascending order.
- Length of list "Length(NW_A-ID)" (Length(NW_A-ID) = 5 in case of this example)
- i = 0

  Note that the variable name may be other than the above. In addition, the contents of the NW_A-ID may be unified with values other than the NW_A-ID.

In S1151-2, the congestion RTT calculation unit 15 determines whether or not i < Length(NW_A-ID) is satisfied. If Yes, the processing proceeds to S1151-2, and if No, the processing ends. In S1151-3, j = i + 1.

In S1151-4, the congestion RTT calculation unit 15 determines whether or not j < Length(NW_A-ID) is satisfied. If Yes, the processing proceeds to S1151-5, and if No, the processing ends. In S1151-5, the congestion RTT calculation unit 15 executes S1152 and returns to S1151-2.

<S1152>

Next, S1152 will be described with reference to Fig. 71.

In S1152-1, the congestion RTT calculation unit 15 continues to transmit the TesterPresent request specified in the UDS to the NW_A-ID[i] at 0.5 ms intervals until S1152 ends, and congests the NW_A bus on which the NW_A message of the NW_A-ID[i] is transmitted. Note that the transmission interval is not limited thereto.

In S1152-2, the congestion RTT calculation unit 15 transmits the TesterPresent request specified in the UDS to NW_A-ID[j] 100 times at 200 ms intervals. Then, a response thereto is received. Moreover, the transmission time and the reception time are recorded in the storage means. An example of the recorded information is illustrated in Fig. 72. Note that the transmission interval and the number of transmissions are not limited thereto.

In S1152-3, the congestion RTT calculation unit 15 calculates a statistical value of the response time (hereinafter, referred to as a congestion response time) using the record of the previous step. Then, a result thereof is recorded in the storage means together with the NW_A-ID[i] (referred to as congestion NW_A-ID in Fig. 73 (Table 3151)) and the NW_A-ID[j] (referred to as statistical value calculation target NW_A-ID in Fig. 73 (Table 3151)). An example of the recorded information is illustrated in Fig. 73 (Table 3151).

Note that the difference between the time at which the TesterPresent is transmitted with the request NW_A-ID and the time at which the TesterPresent is received with the response NW_A-ID immediately after the transmission is defined as the congestion response time. Furthermore, an average value, a maximum value, a minimum value, and a standard deviation are calculated as statistical values. However, other statistical values may be calculated.

<S1162>

Next, S1161 will be described with reference to Fig. 74.

In S1161-1, the RTT comparison unit 16 compares the statistical value of NW_A-ID = x in Fig. 69 (Table 3141) with the statistical value of the NW_A-ID = x for statistical value calculation in Fig. 73 (Table 3151) for a certain NW_A-ID = x. Then, a row in which any value of the statistical value on the side of Fig. 73 (Table 3151) is increased by 50% or more from Fig. 69 (Table 3141) is extracted from Fig. 73 (Table 3151). The extraction results are as illustrated in Fig. 75 (Table 3161). Note that the extraction method in Fig. 75 (Table 3161) is not limited thereto.

In S1161-2, the RTT comparison unit 16 groups the congestion NW_A-ID and the statistical value calculation target NW_A-ID of each row in Fig. 75 (Table 3161). For example, 0x700 and 0x724 are one group, 0x700 and 0x7E0 are one group, 0x724 and 0x7E0 are one group, and 0x750 and 0x7E1 are one group.

In S1161-3, the RTT comparison unit 16 consolidates the groups created in the previous step as much as possible. For example, since 0x700 and 0x724 are one group, 0x700 and 0x7E0 are one group, and 0x724 and 0x7E0 are one group, it is assumed that these three are one group. Results thereof are as illustrated in Fig. 76 (Table 3162).

<S1171>

Next, S1171 will be described with reference to Fig. 77.

In S1171-1, the estimation unit 17 extracts all the ECU model numbers from the information corresponding to Fig. 56 (Table 3112) stored in the configuration information estimation result DB 22. Next, the overlaps of the extracted ECU model numbers are deleted. Subsequently, one-to-one correspondence is to be defined between the ECU model number from which the overlaps are deleted and the physical ECU. Results are as illustrated in Fig. 78.

In S1171-2, the estimation unit 17 adds the information of the request NW_A-ID to Fig. 78 on the basis of the information corresponding to Fig. 56 (Table 3112) stored in the configuration information estimation result DB 22. Results thereof are as illustrated in Fig. 79.

In S1171-3, the estimation unit 17 compares the statistical value of the NW_A-ID = x in Fig. 69 (Table 3141) with the statistical value of the NW_A-ID = x for statistical value calculation in Fig. 73 (Table 3151) for a certain NW_A-ID = x. Then, a row in which any value of the statistical value on the side of Fig. 73 (Table 3151) is increased by 50% or more from Fig. 69 (Table 3141) is extracted from Fig. 73 (Table 3151). The extraction results are as illustrated in Fig. 75 (Table 3161). Note that the extraction method in Fig. 75 (Table 3161) is not limited thereto.

In S1171-4, the estimation unit 17 groups the congestion NW_A-ID and the statistical value calculation target NW_A-ID of each row in Fig. 75 (Table 3161). For example, 0x700 and 0x724 are one group, 0x700 and 0x7E0 are one group, 0x724 and 0x7E0 are one group, and 0x750 and 0x7E1 are one group.

In S1171-5, the estimation unit 17 consolidates the groups created in the previous step as much as possible. For example, since 0x700 and 0x724 are one group, 0x700 and 0x7E0 are one group, and 0x724 and 0x7E0 are one group, it is assumed that these three are one group. Results thereof are as illustrated in Fig. 76 (Table 3162).

<S1172>

Next, S1172 will be described with reference to Fig. 80.

In S1172-1, the estimation unit 17 determines that the ECUs responding to the NW_A message of NW_A-ID grouped into one group in Fig. 76 (Table 3162) are connected to the same NW_A bus. Then, the estimation unit 17 converts the information in Fig. 79 into a topology diagram of the NW_A bus (Fig. 81) on the basis of the determination result.

In S1172-2, the estimation unit 17 appropriately allocates, to the ECU, all the information of Fig. 56 (Table 3112) passed to the configuration information estimation result DB 22 (configuration information arrangement unit). Results thereof are as illustrated in Fig. 82.

In S1172-3, the estimation unit 17 searches for an ECU in which the GW (gateway) is included in "exact match" or "partial match" of the functions of the ECU of NodeType = 0x1 in Fig. 65 and the ECU in Fig. 82 passed to the configuration information estimation result DB 22 (configuration information arrangement unit).

In S1172-4, the estimation unit 17 connects the ECUs found in the previous step via the NW_A bus. Results thereof are as illustrated in Fig. 83.

In S1172-5, the estimation unit 17 stores the information illustrated in Fig. 83 in the configuration information estimation result DB 22 via the configuration information acquisition-registration unit 24.

<S1180>

Next, S1180 performed by the normal NW_A communication estimation unit 18 will be described with reference to Fig. 84.

In S1180-1, the restart command transmission unit 19 executes S1191. In S1180-2, the restart command transmission unit 19 executes S1192. In S1180-3, the vehicle alert reception unit 20 executes S1201. In S1180-4, the vehicle alert reception unit 20 executes S1211.

<S1191>

Next, S1191 will be described with reference to Fig. 85.

In S1191-1, the restart command transmission unit 19 declares the following variables.

- Request NW_A-ID list "NW_A-ID = [0x700, 0x724, 0x750, 0x7E0, 0x7E1]" in Fig. 56 (Table 3112) stored in the configuration information estimation result DB 22
- Length of list "Length(NW_A-ID)" (Length(NW_A-ID) = 5 in case of this example)
- i = 0

  Note that the variable name may be other than the above. In addition, the contents of the NW_A-ID may be unified with values other than the NW_A-ID.

In S1191-2, the restart command transmission unit 19 determines whether i < Length(NW_A-ID) holds. If Yes, the processing proceeds to S1191-3, and if No, the processing ends. In S1191-3, the restart command transmission unit 19 executes S1192. In S1191-3, the restart command transmission unit 19 sets i = i + 1, and returns to S1191-2.

<S1192>

Next, S1192 will be described with reference to Fig. 86.

In S1192-1, the restart command transmission unit 19 transmits the ECUReset (ResetType = HardReset) request specified in the UDS to the NW_A-ID[i] 10 times at random intervals of 5 seconds to 10 seconds. Note that the transmission interval, the number of transmissions, and ResetType are not limited thereto.

In S1192-2, the restart command transmission unit 19 records the time at which the ECUReset request is transmitted in the previous step in the storage means together with the NW_A-ID[i]. An example of the recorded information is illustrated in Fig. 87.

<S1201>

Next, S1201 will be described with reference to Fig. 88.

First, an assumption will be described. The ECU on the in-vehicle network 1 transmits the NW_A message of a certain NW_A-ID at constant (design value) time intervals (transmission intervals). Furthermore, the NW_A-IDS on the in-vehicle network 1 issues an alert in a case where the transmission interval of the NW_A message of a certain NW_A-ID greatly deviates from a design value. Note that it is assumed that the alert stores the issuing time and the NW_A-ID of the detected NW_A message.

The ECU that has received ECUReset temporarily stops transmission of the NW_A message in order to restart the ECU. Furthermore, after the restart, the transmission of the NW_A message is resumed at an arbitrary time interval. Thus, the transmission interval of the NW_A message transmitted by the ECU that has received ECUReset temporarily increases or decreases. The NW_A-IDS determines that this is abnormal and issues an alert.
In S1201-1, the vehicle alert reception unit 20 records the alert of the NW_A-IDS in the storage means together with the time. An example of the stored information is illustrated in Fig. 89.

<S1211>

Next, S1211 will be described with reference to Fig. 90.
In S1211-1, the estimation unit 21 associates the NW_A-ID recorded as the information illustrated in Fig. 87 with the NW_A-ID recorded as the information illustrated in Fig. 89. The association is performed on the basis of similarity of recorded times. Fig. 91 (Table 3211) illustrates an example of the result of the association.
In S1211-2, the estimation unit 21 adds the result in Fig. 91 (Table 3211) to a result of a vehicle configuration estimation (for example, Fig. 83 or Fig. 56 (Table 3112)). At that time, a row satisfying the condition of "NW_A-ID column of ECUReset in Table 3211" = "request NW_A-ID in Fig. 83 or 3112" is added to Fig. 83 or 56 (Table 3112).
Note that, at the time of adding, for example, a column name "steady transmission NW_A-ID" is added. Examples of results thereof are as illustrated in Fig. 92 and Fig. 93 (Table 3212).

(Example A2)

Next, Example A2 will be described. Fig. 94 is a configuration diagram of a system in Example A2. As illustrated in Fig. 94, the configuration of Example A2 includes only the ECU function estimation unit 4 corresponding to the elemental technique 3 as the estimation unit. The processing of each unit is the same as the processing described in Example A1.

(Example A3)

Next, Example A3 will be described. Fig. 95 is a configuration diagram of a system in Example A3. As illustrated in Fig. 95, the configuration of Example A3 includes only the NW_A bus topology estimation unit 13 corresponding to elemental technique 1 as the estimation unit. The processing of each unit is the same as the processing described in Example A1.

(Example A4)

Next, Example A4 will be described. Fig. 96 is a configuration diagram of a system in Example A4. As illustrated in Fig. 96, the configuration of Example A4 includes only the normal NW_A communication estimation unit 18 corresponding to the elemental technique 2 as the estimation unit. The processing of each unit is the same as the processing described in Example A1.

(Example A5)

Next, Example A5 will be described. Fig. 97 is a configuration diagram of a system in Example A5. As illustrated in Fig. 97, the configuration of Example A5 is obtained by removing the normal NW_A communication estimation unit 18 from the configuration of Example A1 (Fig. 27). The processing of each unit is the same as the processing described in Example A1.

(Example A6)

Next, Example A6 will be described. Fig. 98 is a configuration diagram of a system in Example A6. As illustrated in Fig. 98, the configuration of Example A6 is obtained by removing the NW_A bus topology estimation unit 13 from the configuration of Example A1 (Fig. 27). The processing of each unit is the same as the processing described in Example A1.

(Example A7)

Next, Example A7 will be described. Fig. 99 is a configuration diagram of a system in Example A7. As illustrated in Fig. 99, the configuration of Example A7 is obtained by removing the ECU function estimation unit 4 from the configuration of Example A1 (Fig. 27). The processing of each unit is the same as the processing described in Example A1.

(Example B1)

Next, Example B1 will be described. Example B1 is an example in which the configuration information estimation system according to the present invention is deployed on the in-vehicle NW. Fig. 100 is a configuration diagram of an automobile (in-vehicle NW) in Example B1. As illustrated in Fig. 100, the vehicle configuration estimation device 2 and the configuration information estimation result DB 22 are provided as functions of the ECU on the in-vehicle NW.

Note that, instead of providing the configuration information estimation result DB 22 in the ECU as illustrated in Fig. 100, the configuration information estimation result DB 22 may be provided on the cloud. In addition, the vehicle configuration estimation device 2 may include one or a plurality of functional units other than the message transmission-reception unit 23 on the cloud. For example, only the ECU function estimation unit 4 in the vehicle configuration estimation device 2 may be provided on the cloud.

(Example B2)

Next, Example B2 will be described. Example B2 is an example in which the configuration information estimation system (device) according to the present invention is directly connected to an OBD-II port. Fig. 101 is a configuration diagram of a system in Example B2. As illustrated in Fig. 101, the configuration information estimation system is directly connected to the OBD-II port.

Note that, instead of providing the configuration information estimation result DB 22 on the configuration information estimation system (device) as illustrated in Fig. 101, the configuration information estimation result DB 22 may be provided on the cloud. In addition, the vehicle configuration estimation device 2 may include one or a plurality of functional units other than the message transmission-reception unit 23 on the cloud. For example, only the ECU function estimation unit 4 in the vehicle configuration estimation device 2 may be provided on the cloud.

(Example B3)

Next, Example B3 will be described. Fig. 102 illustrates a configuration of a system in Example B3. As illustrated in Fig. 102, in Example B3, the configuration information estimation system according to the present invention is provided in a charger and connected to a charging port. The processing of the configuration information estimation system is executed via the charging port.

Note that, instead of providing the configuration information estimation result DB 22 on the charger as illustrated in Fig. 102, the configuration information estimation result DB 22 may be provided on the cloud. In addition, the vehicle configuration estimation device 2 may include one or a plurality of functional units other than the message transmission-reception unit 23 on the cloud. For example, only the ECU function estimation unit 4 in the vehicle configuration estimation device 2 may be provided on the cloud.

(Example B4)

Next, Example B4 will be described. Fig. 103 illustrates a configuration of a system in Example B4. As illustrated in Fig. 103, in Example B4, the configuration information estimation system according to the present invention is provided on an external network, and the processing of the configuration information estimation system is executed via the external network.

(Example C1)

Next, Example C1 will be described. Example C1 is an example in which the configuration information estimation system is used for security analysis in an SOC or the like. Fig. 104 is a system configuration diagram in Example C1.

As illustrated in Fig. 104, the present system includes a configuration information acquisition unit 30, a security analysis unit 31, and an analysis result presentation unit 32 in addition to the vehicle configuration estimation device 2 and the configuration information estimation result DB 22 connected to the automobile. The respective units are connected as illustrated in the drawing.

The configuration information acquisition unit 30 extracts necessary configuration information from the configuration information estimation result DB 22 and passes the configuration information to the security analysis unit 31. The security analysis unit 31 performs a more advanced security analysis using the vehicle configuration information estimated by the vehicle configuration estimation device 2. Then, an analysis result is passed to the analysis result presentation unit 32.

The analysis result presentation unit 32 receives the analysis result, appropriately performs a process, and presents the result to an analyst. Note that the analyst is not limited to a person, and may be a program that further performs another analysis using the analysis result.

The security analysis performed by the security analysis unit 31 is not limited to a specific one, but for example, there is an example listed below.

- Estimation of an attack path using acquisition of topology information
- Estimation of entry point using topology information and software version of each ECU
- Cause estimation using topology information and software version of each ECU
- Estimation of abnormal communication and process using topology information, software version of each ECU, and normal communication information
- Estimation of impact using information of normal communication and information of function of each ECU using topology information and software version of each ECU
- Estimation of counting method using topology information and software version of each ECU

(Example C2)

Next, Example C2 will be described. Example C2 is an example in which the configuration information estimation system is used for asset management. Fig. 105 is a system configuration diagram in Example C2.

As illustrated in Fig. 105, the present system includes the configuration information acquisition unit 30, an asset management unit 33, and a management information presentation unit 34 in addition to the vehicle configuration estimation device 2 and the configuration information estimation result DB 22 connected to the automobile. The respective units are connected as illustrated in the drawing.

The configuration information acquisition unit 30 extracts necessary configuration information from the configuration information estimation result DB 22 and passes the configuration information to the asset management unit 33. The asset management unit 33 holds the management information and manages whether there is an ECU not included in the management information or an ECU out of support, and the like on the basis of the received configuration information. At this time, public information, such as a support status of software of the ECU, is also used.

The management information presentation unit 34 acquires the management information from the asset management unit 33, performs appropriate processing (for example, extracts and organizes only the device name and address information of the ECU not included in the management information), and presents a result to an administrator. Note that the administrator is not limited to a person, and may be a program that performs another analysis using the management information.

(Example C3)

Next, Example C3 will be described. Example C3 is an example in which the configuration information estimation system is used for abnormality detection. Fig. 106 is a system configuration diagram in Example C3.

As illustrated in Fig. 106, the present system includes the configuration information acquisition unit 30 and an abnormality detection unit 35 in addition to the vehicle configuration estimation device 2 and the configuration information estimation result DB 22 connected to the automobile. The respective units are connected as illustrated in the drawing.

The configuration information acquisition unit 30 extracts necessary configuration information from the configuration information estimation result DB 22 and passes the configuration information to the abnormality detection unit 35. The abnormality detection unit 35 detects an abnormal state of the vehicle configuration information by using information in the DB in which the normal vehicle configuration information is stored, abnormality detection rules, and public information (for example, information in a vulnerability DB). Moreover, an administrator of the automobile or an analyst of an SOC or the like is notified of an abnormality detection result.

The abnormality detection method is not limited to a specific method, but for example, there are examples listed below.

- The vehicle configuration information stored in a normal vehicle configuration information DB and the vehicle configuration information stored in the configuration information estimation result DB are compared, and if there is a difference therebetween, it is detected as an abnormality.
- When the vehicle configuration information stored in the configuration information estimation result DB 22 satisfies an abnormality detection rule or has configuration information defined as an abnormal state in public information (vulnerability DB) or the like, it is detected that there is an abnormality.
- Machine learning is performed on vehicle configuration information of normal automobile, and machine learning based abnormality detection is performed on the basis of learned model.

(Example C4)

Next, Example C4 will be described. Example C4 is an example in which the configuration information estimation system is used for security diagnosis. Fig. 107 is a system configuration diagram in Example C4.

As illustrated in Fig. 107, the present system includes the configuration information acquisition unit 30, a security diagnosis unit 36, and a diagnosis result presentation unit 37 in addition to the vehicle configuration estimation device 2 and the configuration information estimation result DB 22 connected to the automobile. The respective units are connected as illustrated in the drawing.

The configuration information acquisition unit 30 extracts necessary configuration information from the configuration information estimation result DB 22 and passes the configuration information to the security diagnosis unit 36. On the basis of the received configuration information, the security diagnosis unit 36 diagnoses whether an ECU having a security problem is present in the automobile, and the like. At this time, the presence or absence of a problem is checked using public information such as a support status of software of the

ECU.

The diagnosis result presentation unit 37 acquires the diagnosis result from the security diagnosis unit 36, performs processing (for example, scoring the diagnosis result, and the like) as appropriate, and presents the result to the administrator. Note that the administrator is not limited to a person, and may be a program that performs another analysis using the management information.

For example, an ECU model number of an ECU and version information (blacklist) of software in which vulnerability is confirmed are recorded in the diagnosis rule used by the security diagnosis unit 36. The security diagnosis unit 36 compares the vehicle configuration information (blacklist) stored in the diagnosis rule with the vehicle configuration information in the configuration information estimation result DB 22, and points out the vulnerability when there is information corresponding to the blacklist.

(Hardware configuration example)

The device including the diagnostic communication transmission-reception unit 100, the diagnostic system log DB 200, and the configuration information estimation unit 300, the device including the diagnostic communication transmission-reception unit 100 and the diagnostic system log DB 200, the device including the diagnostic system log DB 200 and the configuration information estimation unit 300, the device including the diagnostic communication transmission-reception unit 100 and the configuration information estimation unit 300, the device including the diagnostic communication transmission-reception unit 100, the device including the diagnostic system log DB 200, and the device including the configuration information estimation unit 300 described in the first embodiment can all be implemented by, for example, causing a computer to execute a program. The computer may be a physical computer or a virtual machine on a cloud.

In addition, the system, the device, and the functional unit described in the second embodiment can also be implemented, for example, by causing a computer to execute a program. The computer may be a physical computer or a virtual machine on a cloud.

A subject on which the program is operated is referred to as a "device." The device can be implemented by executing a program corresponding to processing executed by the device using hardware resources such as a CPU and a memory built in the computer. The above program can be stored and distributed by being recorded in a computer-readable recording medium (portable memory or the like). Furthermore, the above program can also be provided through a network such as the Internet or an electronic mail.

Fig. 108 is a diagram illustrating a hardware configuration example of the computer. The computer in Fig. 108 includes a drive device 1000, an auxiliary storage device 1002, a memory device 1003, a CPU 1004, an interface device 1005, a display device 1006, an input device 1007, an output device 1008, and the like which are connected to each other by a bus BS. Note that a part of these devices does not need to be provided. For example, a device that does not perform display does not have to include the display device 1006.

The program for implementing the processing in the computer is provided by, for example, a recording medium 1001 such as a CD-ROM or a memory card. When the recording medium 1001 storing the program is set in the drive device 1000, the program is installed from the recording medium 1001 to the auxiliary storage device 1002 via the drive device 1000. However, the program is not necessarily installed from the recording medium 1001, and may be downloaded from another computer via a network. The auxiliary storage device 1002 stores the installed program and also stores necessary files, data, and the like.

In a case where an instruction to start the program is made, the memory device 1003 reads and stores the program from the auxiliary storage device 1002. The CPU 1004 implements a function related to the device in accordance with a program stored in the memory device 1003. The interface device 1005 is used as an interface for connecting to a network, and functions as a transmission unit and a reception unit. The display device 1006 displays a graphical user interface (GUI) or the like by the program. The input device 1007 includes a keyboard and mouse, buttons, a touch panel, or the like, and is used to input various operation instructions. The output device 1008 outputs a calculation result.

(Effects of embodiments)

As described above, in the embodiment of the present invention, information effective for estimating the vehicle configuration information is collected by transmitting and receiving a diagnostic communication using the diagnostic communication protocol (DoCAN, DoIP, UDS, or the like) that is standardly supported in each ECU, and the vehicle configuration information is estimated by analyzing the collected information. Thus, it is not necessary to increase resources or support a new protocol in estimating the vehicle configuration information, and an additional cost can be reduced.

(Summary of embodiments)

The present description discloses at least the network configuration estimation device, network configuration estimation method, and program of the following clauses.

(Clause 1)
A network configuration estimation device for estimating configuration information of an internal network in a target device, the network configuration estimation device including:

a diagnostic communication transmission-reception unit that transmits a message to an electronic control unit on the internal network by using a diagnostic communication method supported in a standard manner in the electronic control unit on the internal network and receives a response to the message; and
a configuration information estimation unit that estimates the configuration information of the internal network based on the response obtained by the diagnostic communication transmission-reception unit.

(Clause 2)
The network configuration estimation device according to clause 1, in which

the configuration information estimation unit includes
a presence check unit that determines whether the electronic control unit is present or absent on the internal network based on the response,
a topology estimation unit that estimates a topology of the internal network on based on a result of the determination of the presence or absence of the electronic control unit by the presence check unit, and
an information extraction unit that extracts information regarding the electronic control unit on the internal network based on the response.

(Clause 3)
The network configuration estimation device according to clause 1 or 2, in which

the diagnostic communication transmission-reception unit transmits a message to each of a first network and a second network in the internal network and receives a response to the message, and
the configuration information estimation unit
determines presence of an electronic control unit connected to the first network by using a response to the message transmitted to the first network, and
determines presence of an electronic control unit connected to the second network by using a response to the message transmitted to the second network.

(Clause 4)
The network configuration estimation device according to any one of causes 1 to 3, in which

the diagnostic communication transmission-reception unit transmits a message in which a data identifier (ID) is set and receives a response to the message, and
the configuration information estimation unit extracts information corresponding to the data ID from a response to the message in which the data ID is set.

(Clause 5)
A network configuration estimation device for estimating configuration information of an internal network in a target device, the network configuration estimation device including
a configuration information estimation unit that estimates the configuration information of the internal network based on a response obtained by a device that transmits a message to an electronic control unit on the internal network by using a diagnostic communication method supported in a standard manner in the electronic control unit on the internal network and receives the response to the message.
(Clause 6)
A network configuration estimation device for estimating configuration information of an internal network in a target device, the network configuration estimation device including:

a base RTT calculation unit that calculates a round trip time of a first electronic control unit on the internal network by using a diagnostic communication method supported in a standard manner in an electronic control unit on the internal network in a state of non-congestion,
a congestion RTT calculation unit that calculates the round trip time of the first electronic control unit in a state of congestion in which a diagnosis request is frequently transmitted to the second electronic control unit, and
an estimation unit that estimates whether the first electronic control unit and the second electronic control unit are connected to a same bus by comparing the round trip time in the state of non-congestion with the round trip time in the state of congestion.

(Clause 7)
A network configuration estimation device for estimating configuration information of an internal network in a target device, the network configuration estimation device including:

a restart command transmission unit that transmits a restart command to a target electronic control unit on the internal network by using a diagnostic communication method supported in a standard manner in an electronic control unit on the internal network;
an alert reception unit that receives an alert generated due to the restart command from the internal network; and
an estimation unit that estimates an identifier (ID) included in the alert as an ID of normal communication transmitted by the target electronic control unit.

(Clause 8)
A network configuration estimation device for estimating configuration information of an internal network in a target device, the network configuration estimation device including:

a web search unit that searches for a function of an electronic control unit by using an entire model number of a target electronic control unit acquired by using a diagnostic communication method supported in a standard manner in the electronic control unit on the internal network and by using one or more digits related to a function in the model number; and
an estimation unit that estimates a function that maximizes a sum of support degrees of respective words included in a search result obtained by the web search unit as a function of the target electronic control unit.

(Clause 9)
A network configuration estimation method executed by a network configuration estimation device for estimating configuration information of an internal network in a target device, the network configuration estimation method including:

a step of transmitting a message to an electronic control unit on the internal network by using a diagnostic communication method supported in a standard manner in the electronic control unit on the internal network and receiving the response to the message; and
a step of estimating the configuration information of the internal network based on a response.

(Clause 10)
A program for causing a computer to function as each unit in the network configuration estimation device according to any one of clauses 1 to 8.

Although the present embodiment has been described above, the present invention is not limited to such a specific embodiment, and various modifications and changes can be made within the scope of the gist of the present invention described in the claims.

The present patent application claims the priority based on International Patent Application PCT/JP2020/035621 filed on September 18, 2020, and the entire contents of International Patent Application PCT/JP2020/035621 are incorporated herein by reference.

Reference Signs List

| | |
|---|---|
| 1 | In-vehicle NW |
| 2 | Component estimation unit |
| 3 | ECU basic information acquisition unit |
| 4 | ECU function estimation unit |
| 6 | Web search unit |
| 7 | Website |
| 8 | Search result DB |
| 9 | Exact match extraction unit |
| 10 | Specific partial match extraction unit |
| 11 | Estimation unit |
| 12 | NW_B topology estimation unit |
| 13 | NW_A bus topology estimation unit |
| 14 | Base RTT calculation unit |
| 15 | Congestion RTT calculation unit |
| 16 | RTT comparison unit |
| 17 | Estimation unit |
| 18 | Normal NW_A communication estimation unit |
| 19 | Restart command transmission unit |
| 20 | Vehicle alert reception unit |
| 21 | Estimation unit |
| 22 | Configuration information estimation result DB |
| 23 | Message transmission-reception unit |
| 24 | Configuration information acquisition-registration unit |
| 30 | Configuration information acquisition unit |
| 31 | Security analysis unit |
| 32 | Analysis result presentation unit |
| 33 | Asset management unit |
| 34 | Management information presentation unit |
| 35 | Abnormality detection unit |
| 36 | Security diagnosis unit |
| 37 | Diagnosis result presentation unit |
| 500 | ECU |
| 100 | Diagnostic communication transmission-reception unit |
| 200 | Diagnostic system log DB |
| 300 | Configuration information estimation unit |
| 310 | ECU presence check unit |
| 320 | Topology estimation unit |
| 330 | ECU information extraction unit |
| 340 | Output unit |
| 400 | Automobile |
| 1000 | Drive device |
| 1001 | Recording medium |
| 1002 | Auxiliary storage device |
| 1003 | Memory device |
| 1004 | CPU |
| 1005 | Interface device |
| 1006 | Display device |
| 1007 | Input device |
| 1008 | Output device |

## Claims

1. A network configuration estimation device for estimating configuration information of an internal network in a target device, the network configuration estimation device comprising:

   a diagnostic communication transmission-reception unit that transmits a message to an electronic control unit on the internal network by using a diagnostic communication method supported in a standard manner in the electronic control unit on the internal network and receives a response to the message; and
   a configuration information estimation unit that estimates the configuration information of the internal network based on the response obtained by the diagnostic communication transmission-reception unit.

2. The network configuration estimation device according to claim 1, wherein

   the configuration information estimation unit includes
   a presence check unit that determines whether the electronic control unit is present or absent on the internal network based on the response,
   a topology estimation unit that estimates a topology of the internal network based on a result of the determination of the presence or absence of the electronic control unit by the presence check unit, and
   an information extraction unit that extracts information regarding the electronic control unit on the internal network based on the response.

3. The network configuration estimation device according to claim 1 or 2, wherein

   the diagnostic communication transmission-reception unit transmits a message to each of a first network and a second network in the internal network and receives a response to the message, and
   the configuration information estimation unit determines presence of an electronic control unit connected to the first network by using a response to the message transmitted to the first network, and
   determines presence of an electronic control unit connected to the second network by using a response to the message transmitted to the second network.

4. The network configuration estimation device according to any one of claims 1 to 3, wherein

   the diagnostic communication transmission-reception unit transmits a message in which a data identifier (ID) is set and receives a response to the message, and
   the configuration information estimation unit extracts information corresponding to the data ID from a response to the message in which the data ID is set.

5. A network configuration estimation device for estimating configuration information of an internal network in a target device, the network configuration estimation device comprising:
   a configuration information estimation unit that estimates the configuration information of the internal network based on a response obtained by a device that transmits a message to an electronic control unit on the internal network by using a diagnostic communication method supported in a standard manner in the electronic control unit on the internal network and receives the response to the message.

6. A network configuration estimation device for estimating configuration information of an internal network in a target device, the network configuration estimation device comprising:

   a base RTT calculation unit that calculates a round trip time of a first electronic control unit on the internal network by using a diagnostic communication method supported in a standard manner in an electronic control unit on the internal network in a state of non-congestion,
   a congestion RTT calculation unit that calculates the round trip time of the first electronic control unit in a state of congestion in which a diagnosis request is frequently transmitted to the second electronic control unit, and
   an estimation unit that estimates whether the first electronic control unit and the second electronic control unit are connected to a same bus by comparing the round trip time in the state of non-congestion with the round trip time in the state of congestion.

7. A network configuration estimation device for estimating configuration information of an internal network in a target device, the network configuration estimation device comprising:

a restart command transmission unit that transmits a restart command to a target electronic control unit on the internal network by using a diagnostic communication method supported in a standard manner in an electronic control unit on the internal network;
an alert reception unit that receives an alert generated due to the restart command from the internal network; and
an estimation unit that estimates an identifier (ID) included in the alert as an ID of normal communication transmitted by the target electronic control unit.

**8.** A network configuration estimation device for estimating configuration information of an internal network in a target device, the network configuration estimation device comprising:

a web search unit that searches for a function of an electronic control unit by using an entire model number of a target electronic control unit acquired by using a diagnostic communication method supported in a standard manner in the electronic control unit on the internal network and by using one or more digits related to a function in the model number; and
an estimation unit that estimates a function that maximizes a sum of support degrees of respective words included in a search result obtained by the web search unit as a function of the target electronic control unit.

**9.** A network configuration estimation method executed by a network configuration estimation device for estimating configuration information of an internal network in a target device, the network configuration estimation method comprising:

a step of transmitting a message to an electronic control unit on the internal network by using a diagnostic communication method supported in a standard manner in the electronic control unit on the internal network and receiving a response to the message; and
a step of estimating the configuration information of the internal network based on the response.

**10.** A program for causing a computer to function as each unit in the network configuration estimation device according to any one of claims 1 to 8.

# Fig. 1

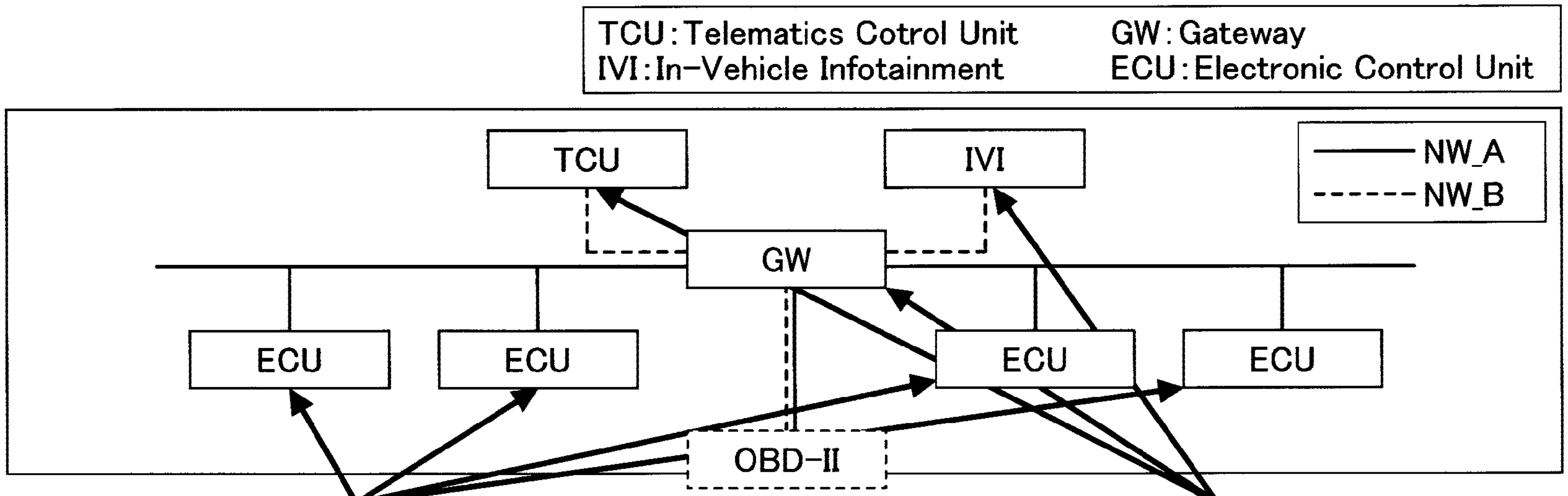


| INFORMATION |
|---|
| VIN |
| NAME |
| MODEL NUMBER |
| SOFTWARE VERSION |
| HARDWARE VERSION |
| NW_A BUS IDENTIFIER |
| NW_A-ID TO BE TRANSMITTED |
| NW_A-ID TO BE RECEIVED |

| INFORMATION |
|---|
| VIN |
| NAME |
| MODEL NUMBER |
| SOFTWARE VERSION |
| HARDWARE VERSION |
| MAC ADDRESS |
| GLOBAL IP ADDRESS |
| LOCAL IP ADDRESS |

Fig. 2

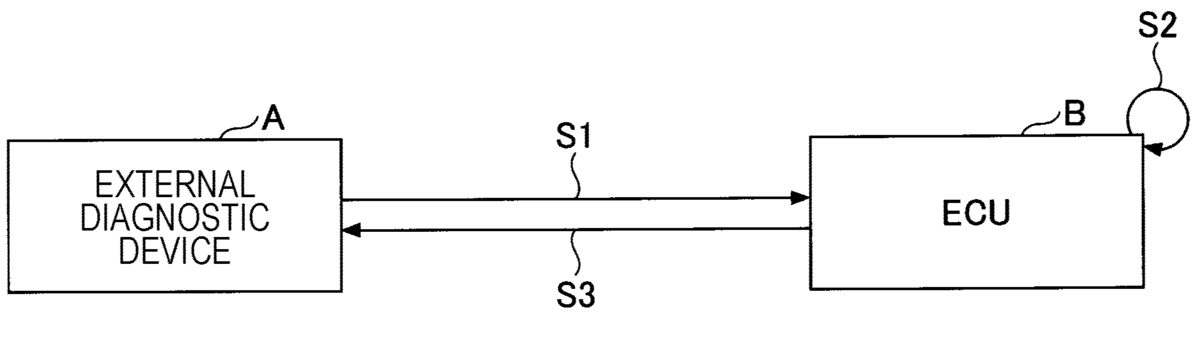

Fig. 3

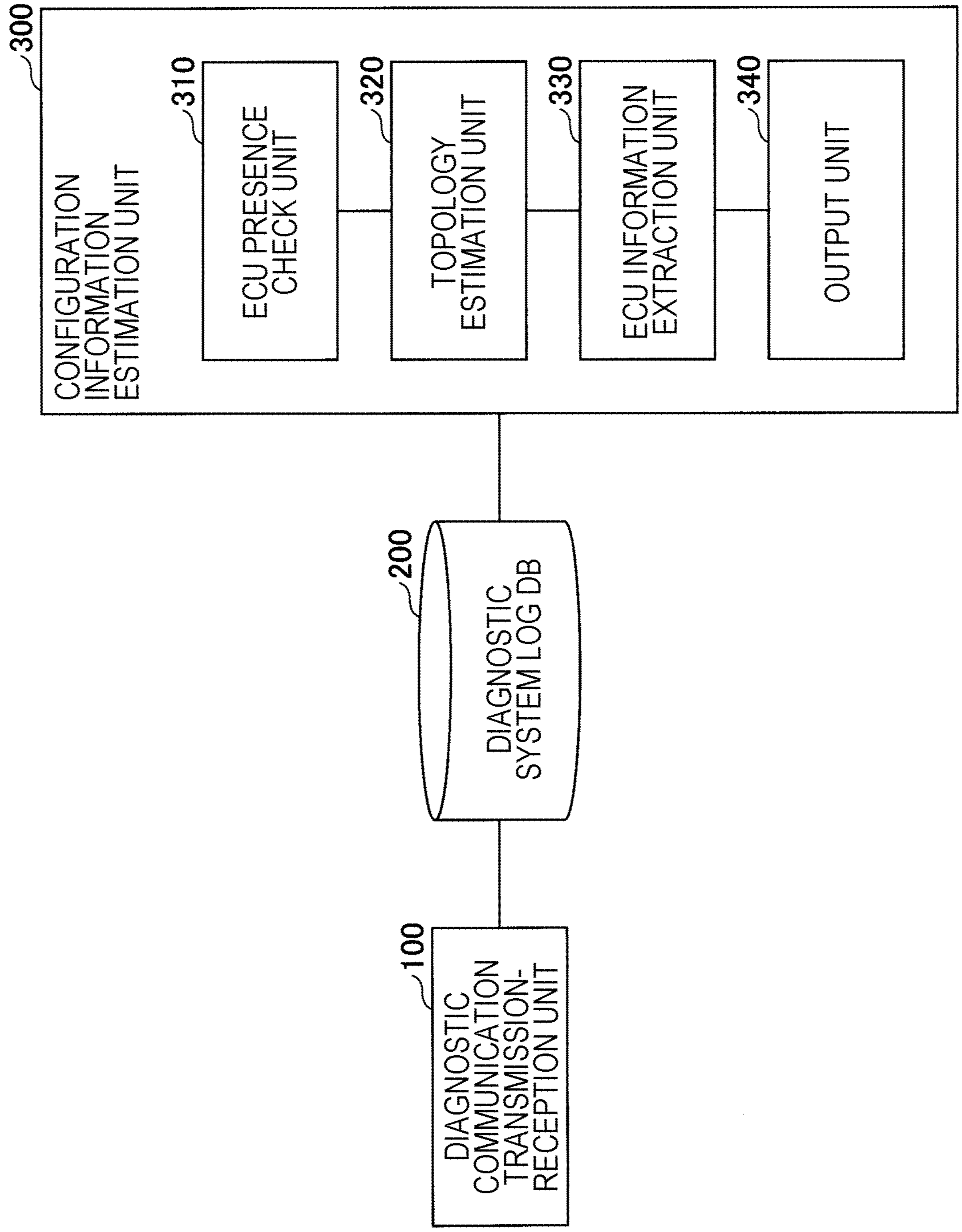
300
CONFIGURATION INFORMATION ESTIMATION UNIT
310
ECU PRESENCE CHECK UNIT
320
TOPOLOGY ESTIMATION UNIT
330
ECU INFORMATION EXTRACTION UNIT
340
OUTPUT UNIT
200
DIAGNOSTIC SYSTEM LOG DB
100
DIAGNOSTIC COMMUNICATION TRANSMISSION-RECEPTION UNIT

Fig. 4

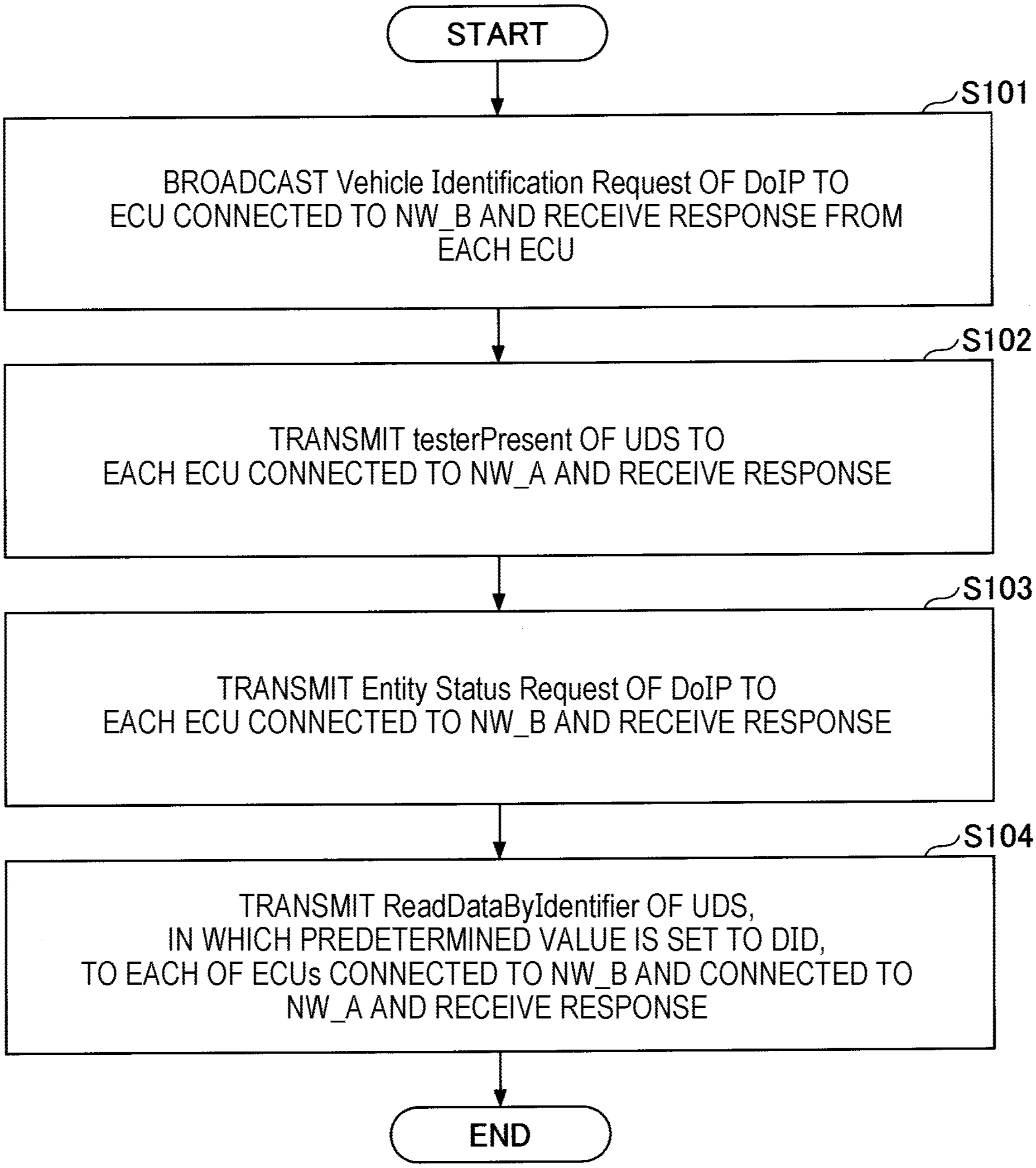
START
S101
BROADCAST Vehicle Identification Request OF DoIP TO ECU CONNECTED TO NW_B AND RECEIVE RESPONSE FROM EACH ECU
S102
TRANSMIT testerPresent OF UDS TO EACH ECU CONNECTED TO NW_A AND RECEIVE RESPONSE
S103
TRANSMIT Entity Status Request OF DoIP TO EACH ECU CONNECTED TO NW_B AND RECEIVE RESPONSE
S104
TRANSMIT ReadDataByIdentifier OF UDS, IN WHICH PREDETERMINED VALUE IS SET TO DID, TO EACH OF ECUs CONNECTED TO NW_B AND CONNECTED TO NW_A AND RECEIVE RESPONSE
END

Fig. 5

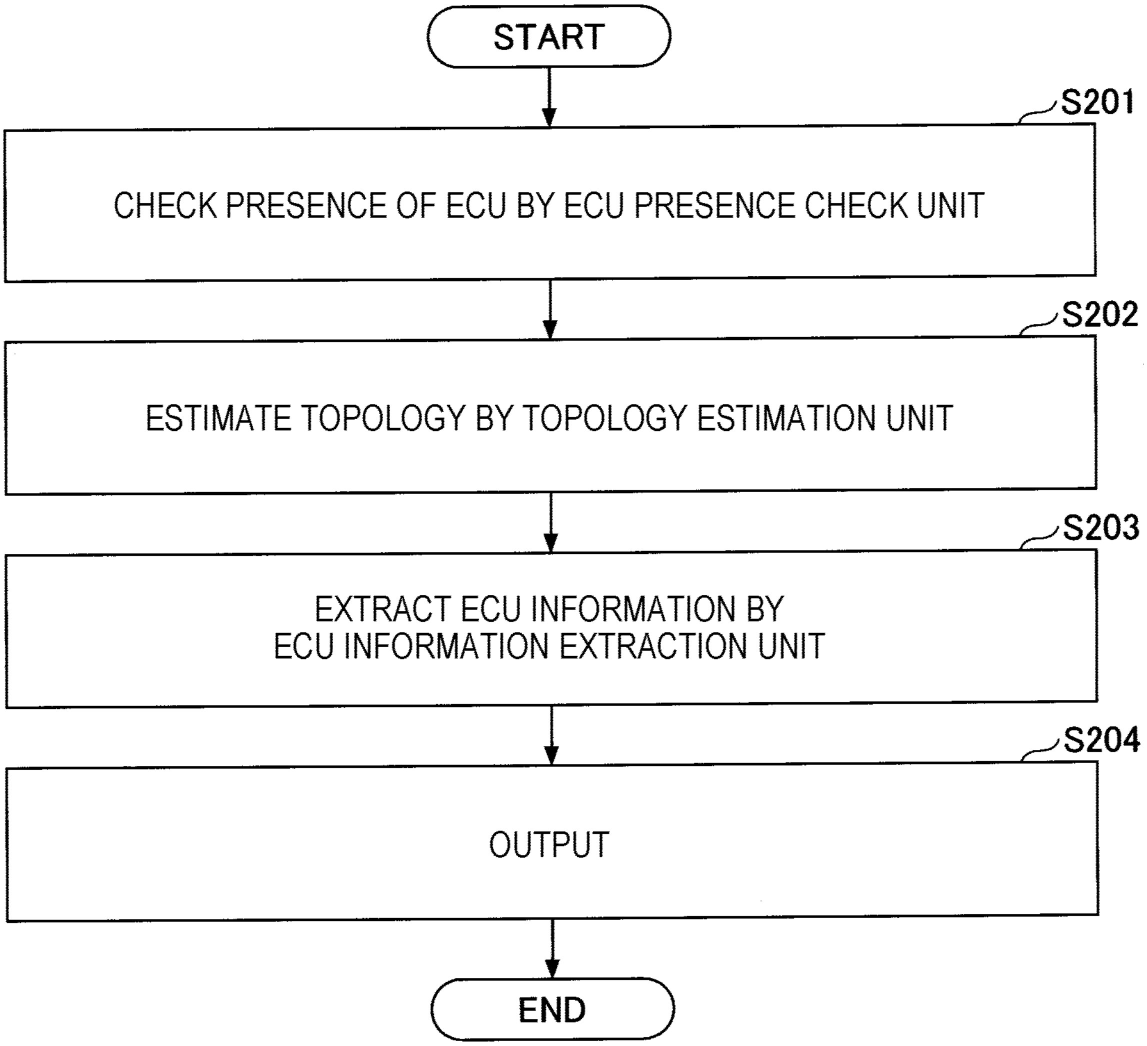
START
S201
CHECK PRESENCE OF ECU BY ECU PRESENCE CHECK UNIT
S202
ESTIMATE TOPOLOGY BY TOPOLOGY ESTIMATION UNIT
S203
EXTRACT ECU INFORMATION BY
ECU INFORMATION EXTRACTION UNIT
S204
OUTPUT
END

Fig. 6

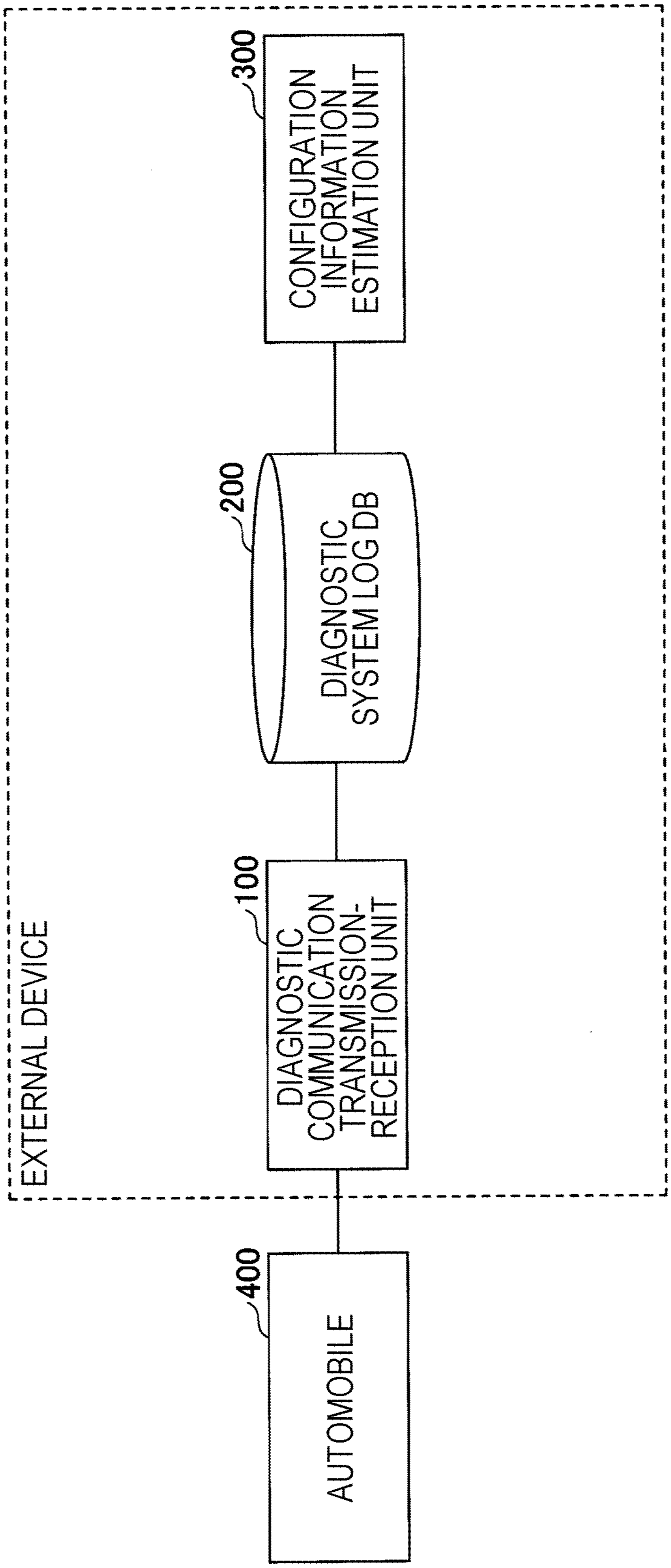
EXTERNAL DEVICE
400
AUTOMOBILE
100
DIAGNOSTIC COMMUNICATION TRANSMISSION-RECEPTION UNIT
200
DIAGNOSTIC SYSTEM LOG DB
300
CONFIGURATION INFORMATION ESTIMATION UNIT

Fig. 7

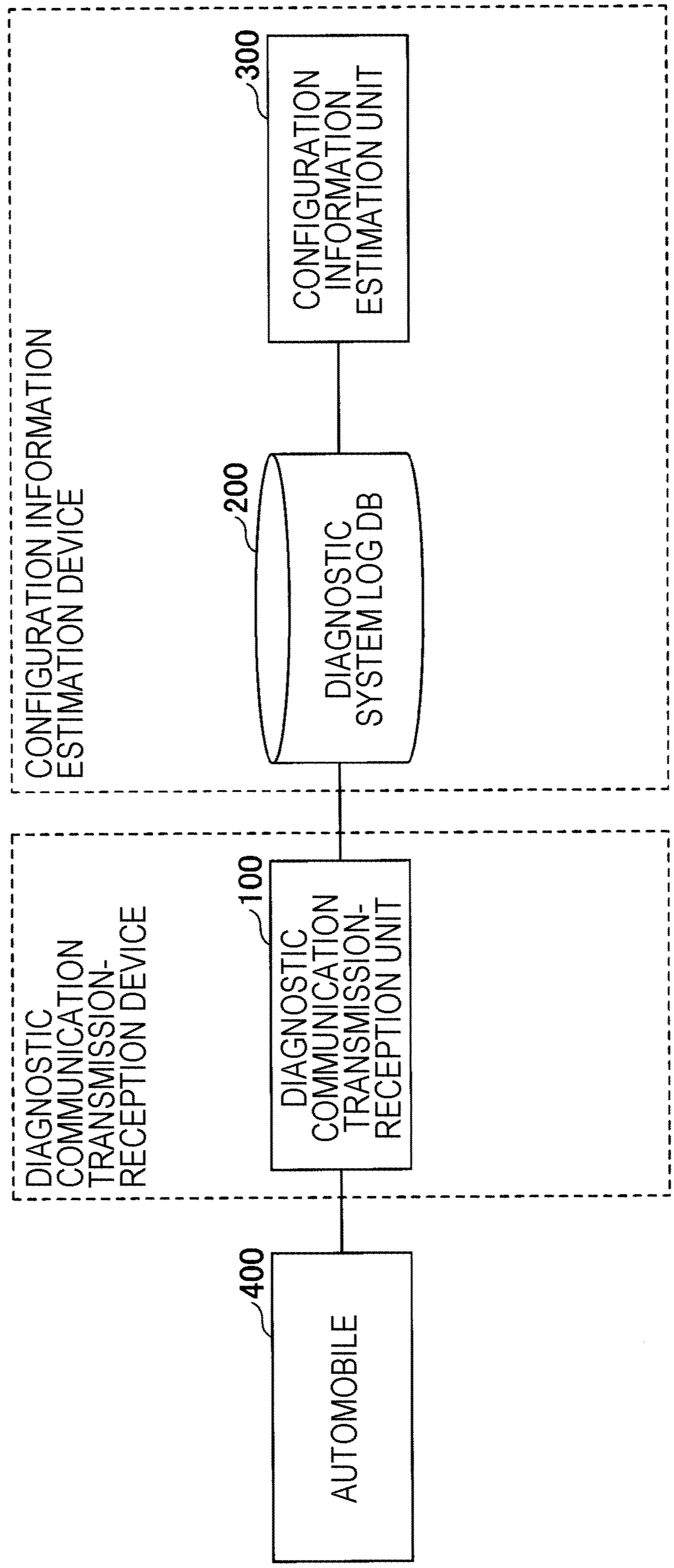
CONFIGURATION INFORMATION ESTIMATION DEVICE
300
CONFIGURATION INFORMATION ESTIMATION UNIT
200
DIAGNOSTIC SYSTEM LOG DB
DIAGNOSTIC COMMUNICATION TRANSMISSION-RECEPTION DEVICE
100
DIAGNOSTIC COMMUNICATION TRANSMISSION-RECEPTION UNIT
400
AUTOMOBILE

Fig. 8

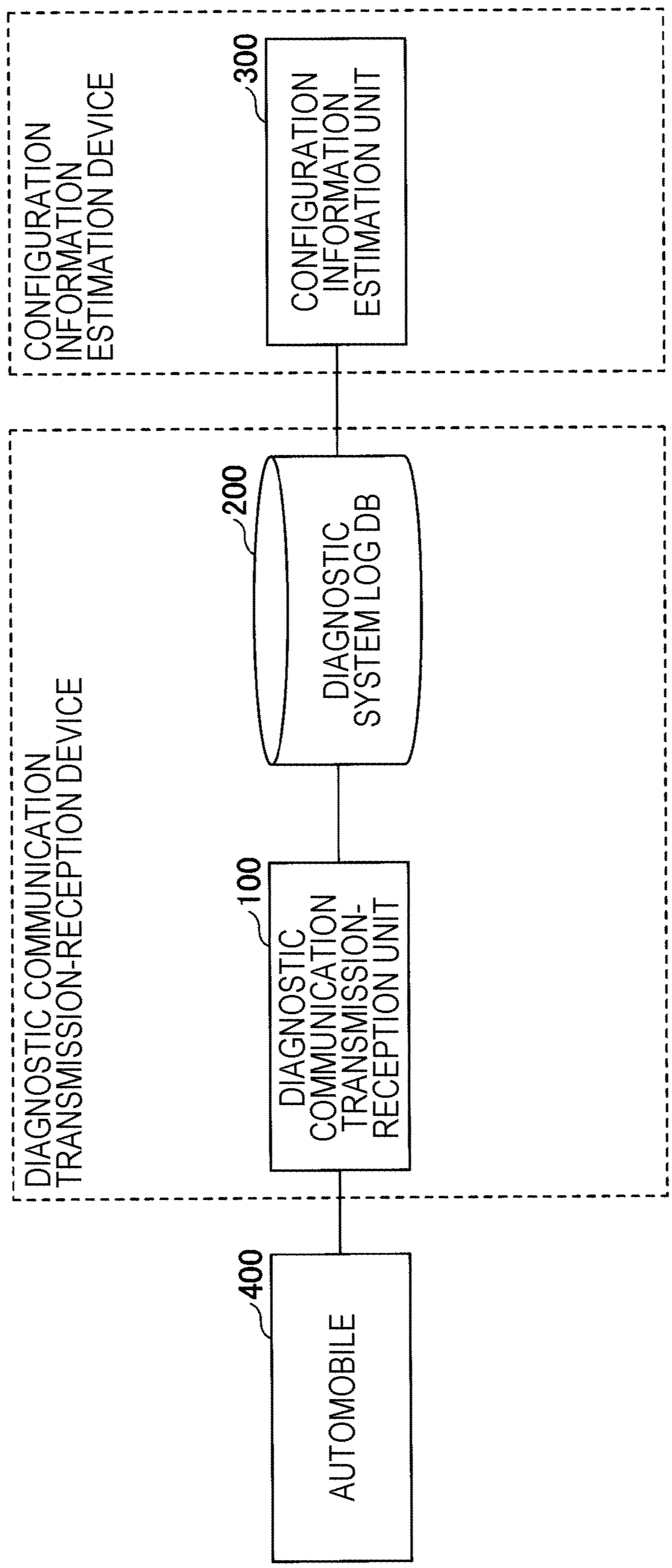
CONFIGURATION INFORMATION ESTIMATION DEVICE
300
CONFIGURATION INFORMATION ESTIMATION UNIT
DIAGNOSTIC COMMUNICATION TRANSMISSION-RECEPTION DEVICE
200
DIAGNOSTIC SYSTEM LOG DB
100
DIAGNOSTIC COMMUNICATION TRANSMISSION-RECEPTION UNIT
400
AUTOMOBILE

Fig. 9

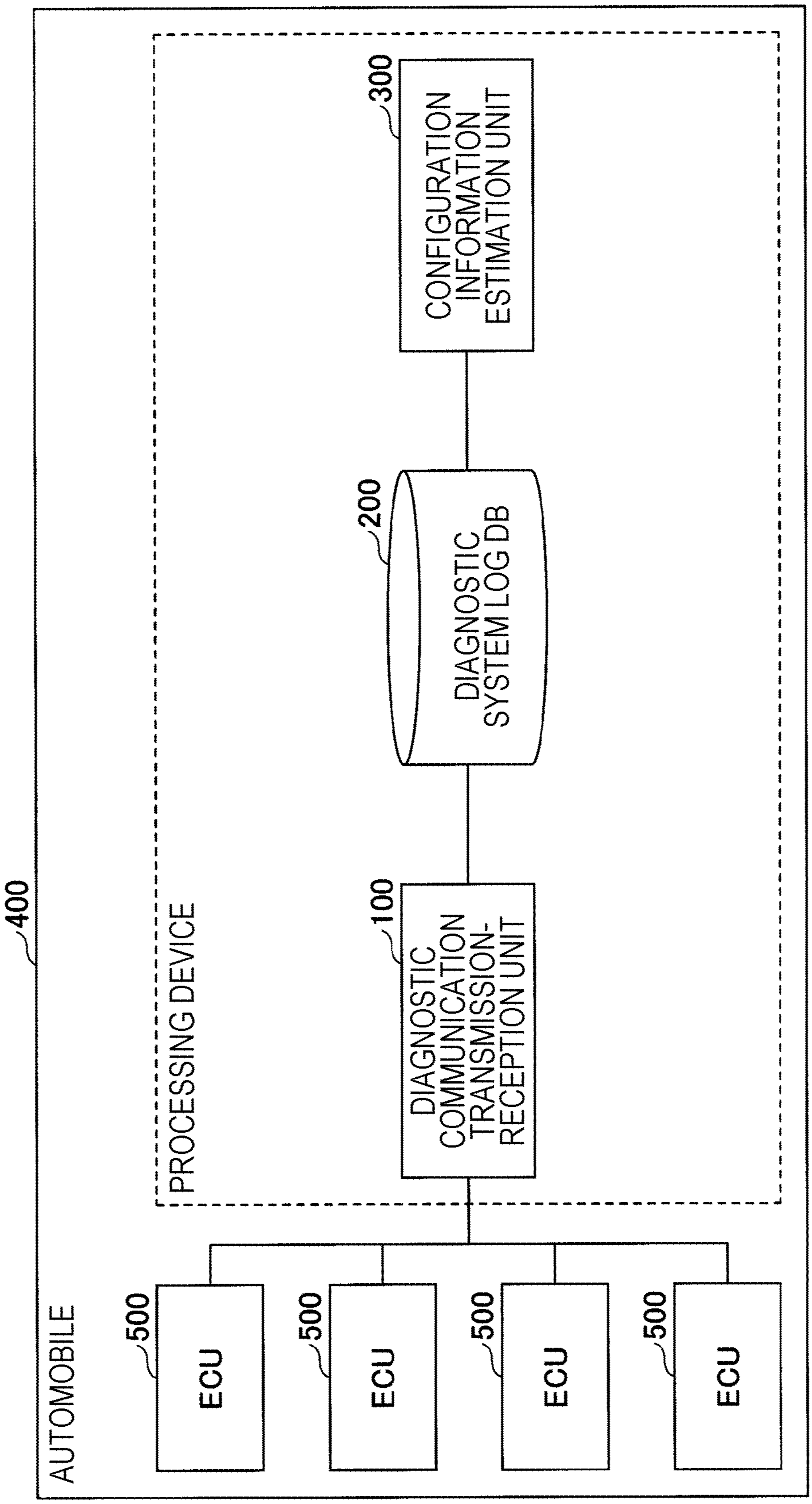
400
AUTOMOBILE
PROCESSING DEVICE
100
DIAGNOSTIC COMMUNICATION TRANSMISSION-RECEPTION UNIT
200
DIAGNOSTIC SYSTEM LOG DB
300
CONFIGURATION INFORMATION ESTIMATION UNIT
500
ECU
500
ECU
500
ECU
500
ECU

Fig. 10

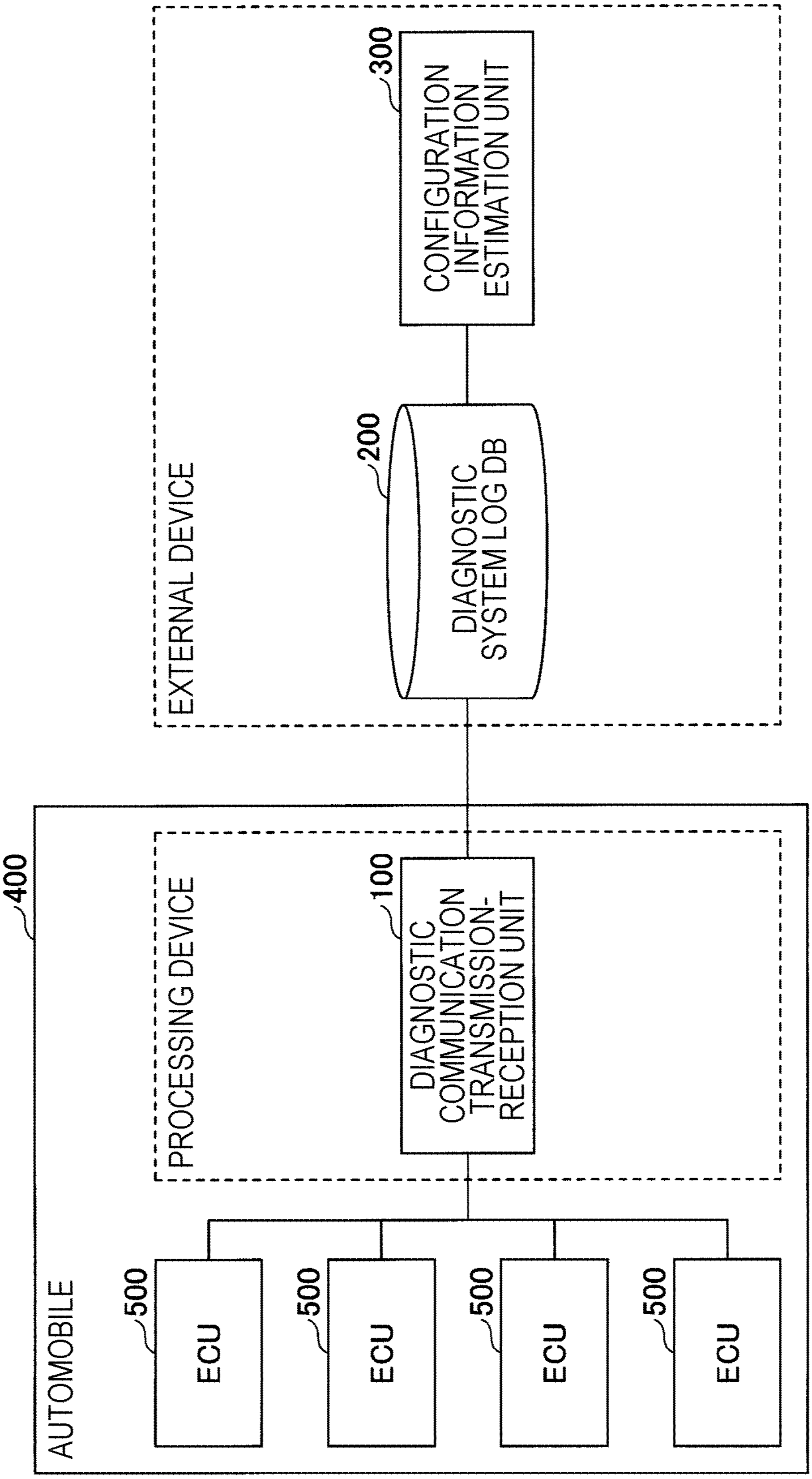
EXTERNAL DEVICE
300
CONFIGURATION INFORMATION ESTIMATION UNIT
200
DIAGNOSTIC SYSTEM LOG DB
400
AUTOMOBILE
PROCESSING DEVICE
100
DIAGNOSTIC COMMUNICATION TRANSMISSION-RECEPTION UNIT
500
ECU
500
ECU
500
ECU
500
ECU

Fig. 11

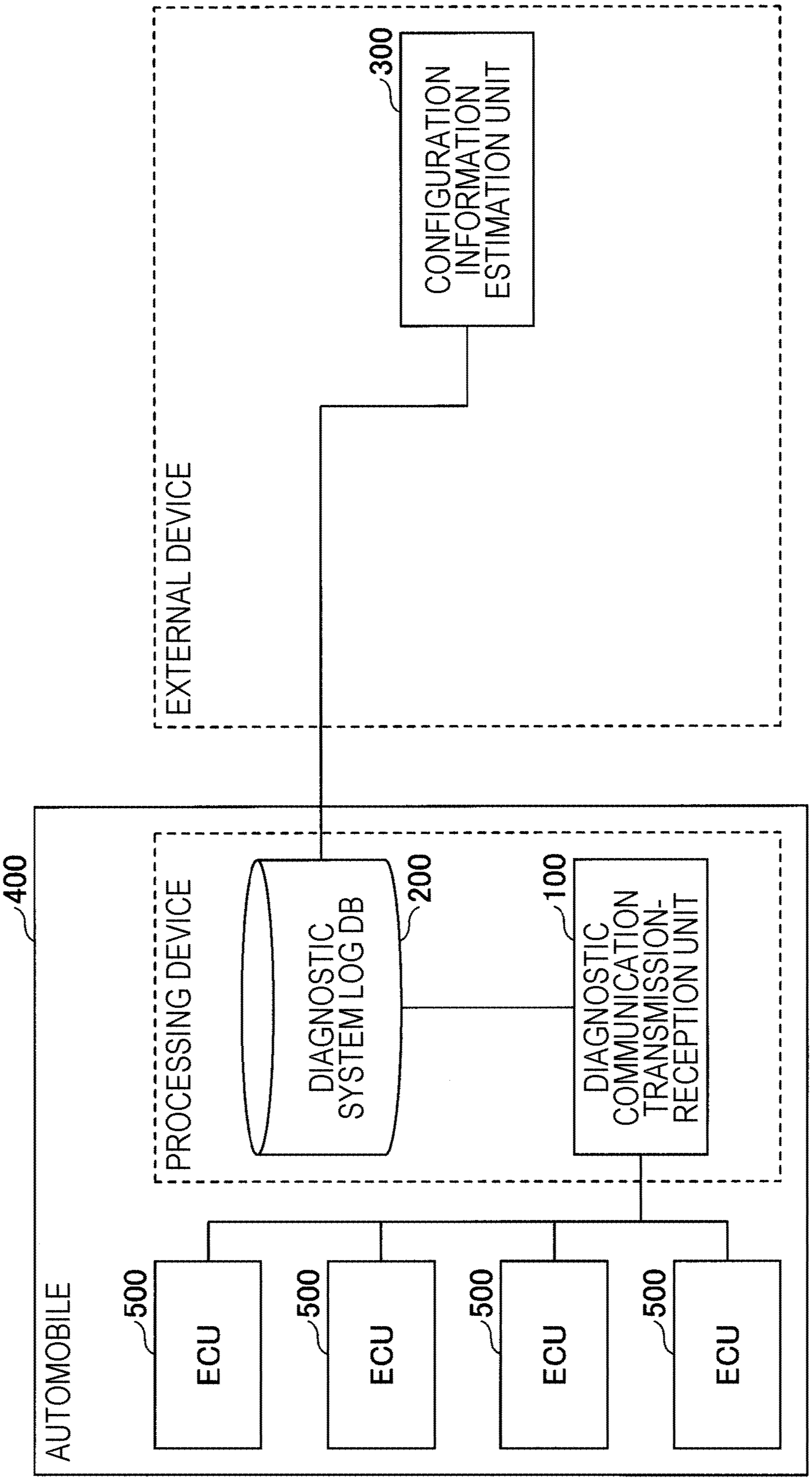
EXTERNAL DEVICE
300
CONFIGURATION INFORMATION ESTIMATION UNIT
400
AUTOMOBILE
PROCESSING DEVICE
200
DIAGNOSTIC SYSTEM LOG DB
100
DIAGNOSTIC COMMUNICATION TRANSMISSION-RECEPTION UNIT
500
ECU
500
ECU
500
ECU
500
ECU

# Fig. 12

| ECU INFORMATION | EXAMPLE VALUE |
|---|---|
| VIN | JP123456789012345 |
| NAME | TCU |
| HARDWARE MODEL NUMBER | 476!605TC0A |
| SOFTWARE MODEL NUMBER | 010!0075FF |
| SOFTWARE VERSION | 1 |
| HARDWARE VERSION | A |
| MAC ADDRESS | B8:27:EB:22:74:18 |
| GLOBAL IP ADDRESS | 142.250.220.30 |
| LOCAL IP ADDRESS | 192.168.0.1 |

| ECU INFORMATION | EXAMPLE VALUE |
|---|---|
| VIN | JP123456789012345 |
| NAME | ENGINE |
| HARDWARE MODEL NUMBER | 476!605TC0A |
| SOFTWARE MODEL NUMBER | 010!0075FF |
| SOFTWARE VERSION | 1 |
| HARDWARE VERSION | A |
| NW_A BUS IDENTIFIER | 1 |
| NORMAL NW_A-ID TO BE TRANSMITTED | 365, 407 |
| DIAGNOSTIC NW_A-ID TO BE TRANSMITTED | 760 |
| DIAGNOSTIC NW_A-ID TO BE RECEIVED | 740 |

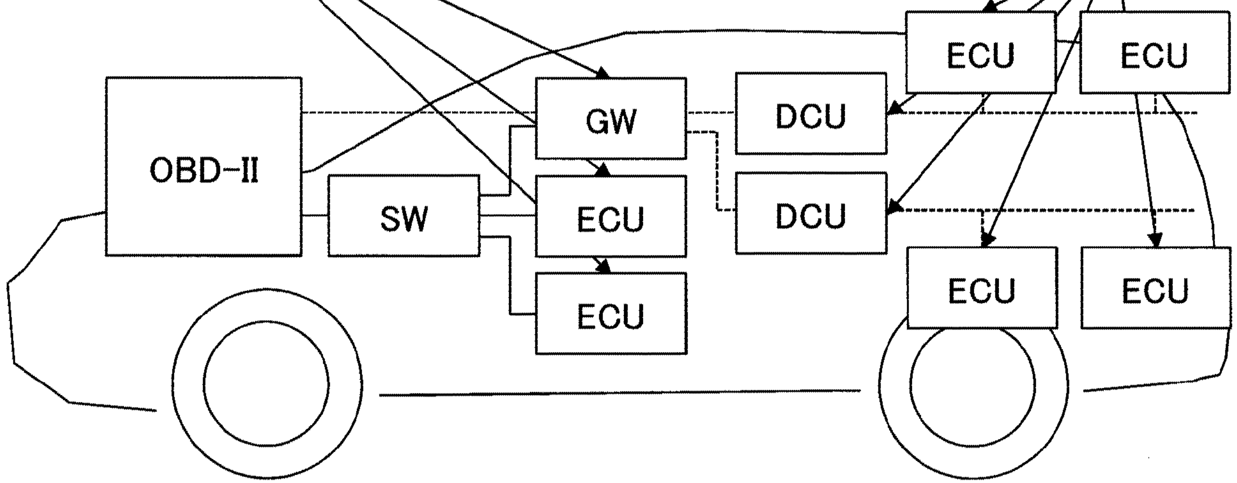

Fig. 13

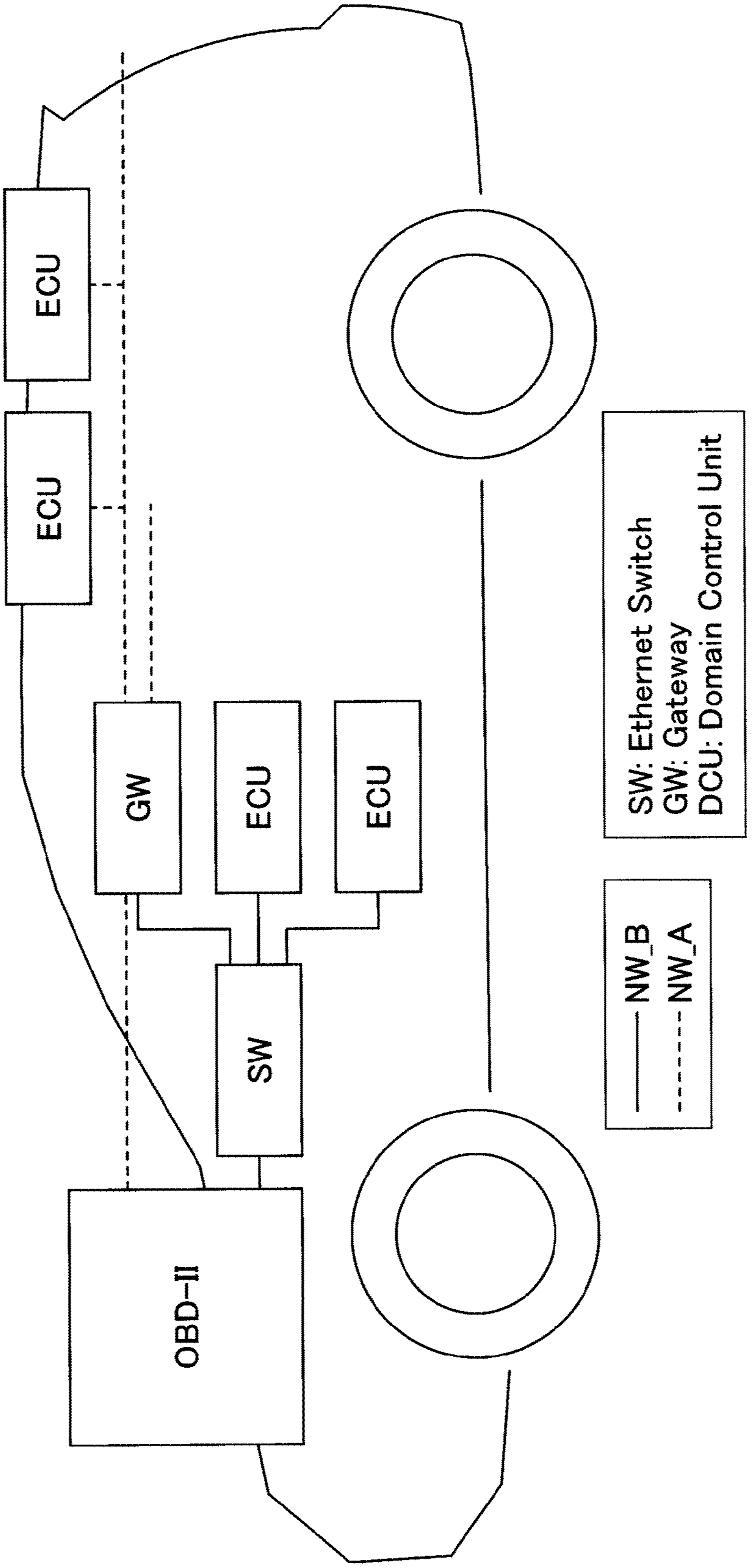
ECU
ECU
GW
ECU
ECU
SW
OBD-II
NW_B
NW_A
SW: Ethernet Switch
GW: Gateway
DCU: Domain Control Unit

Fig. 14

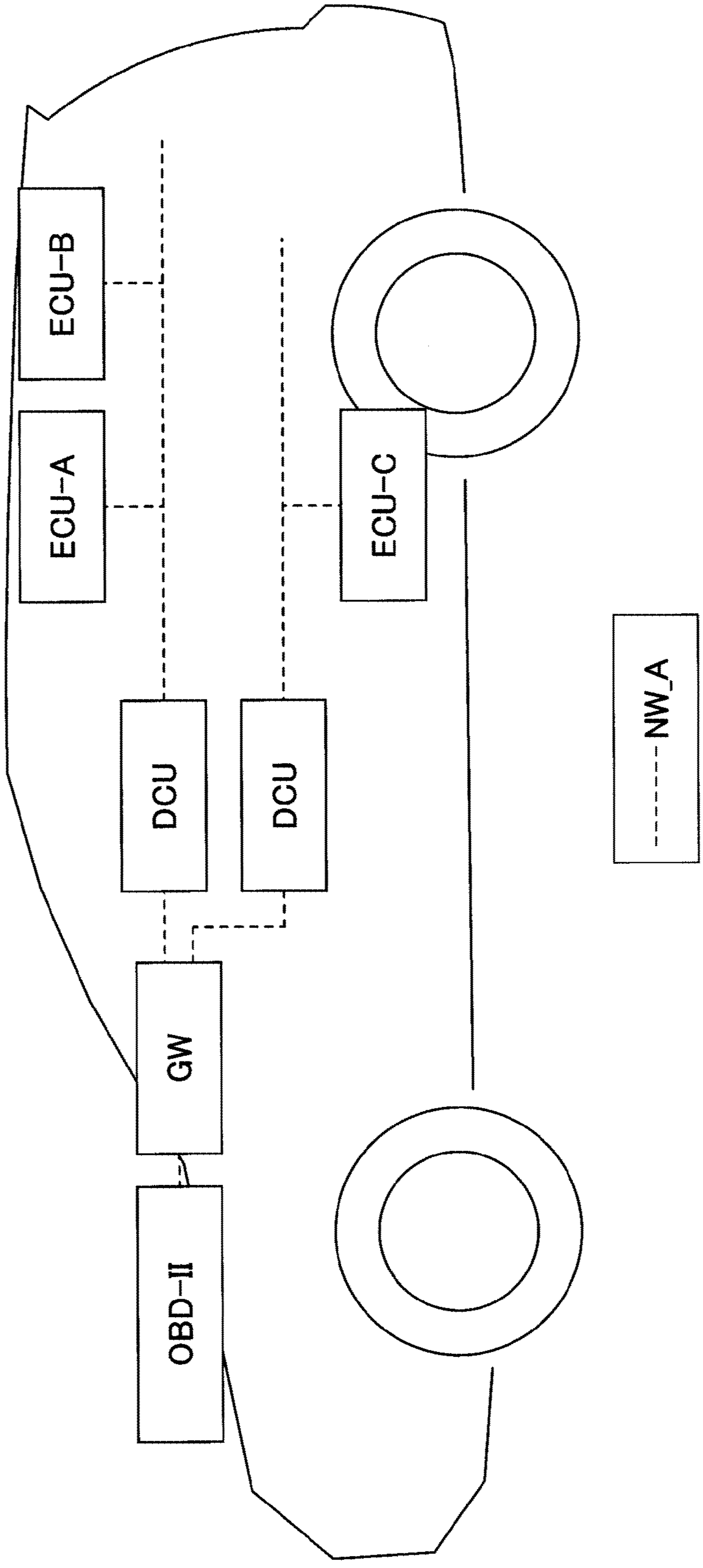

Fig. 15

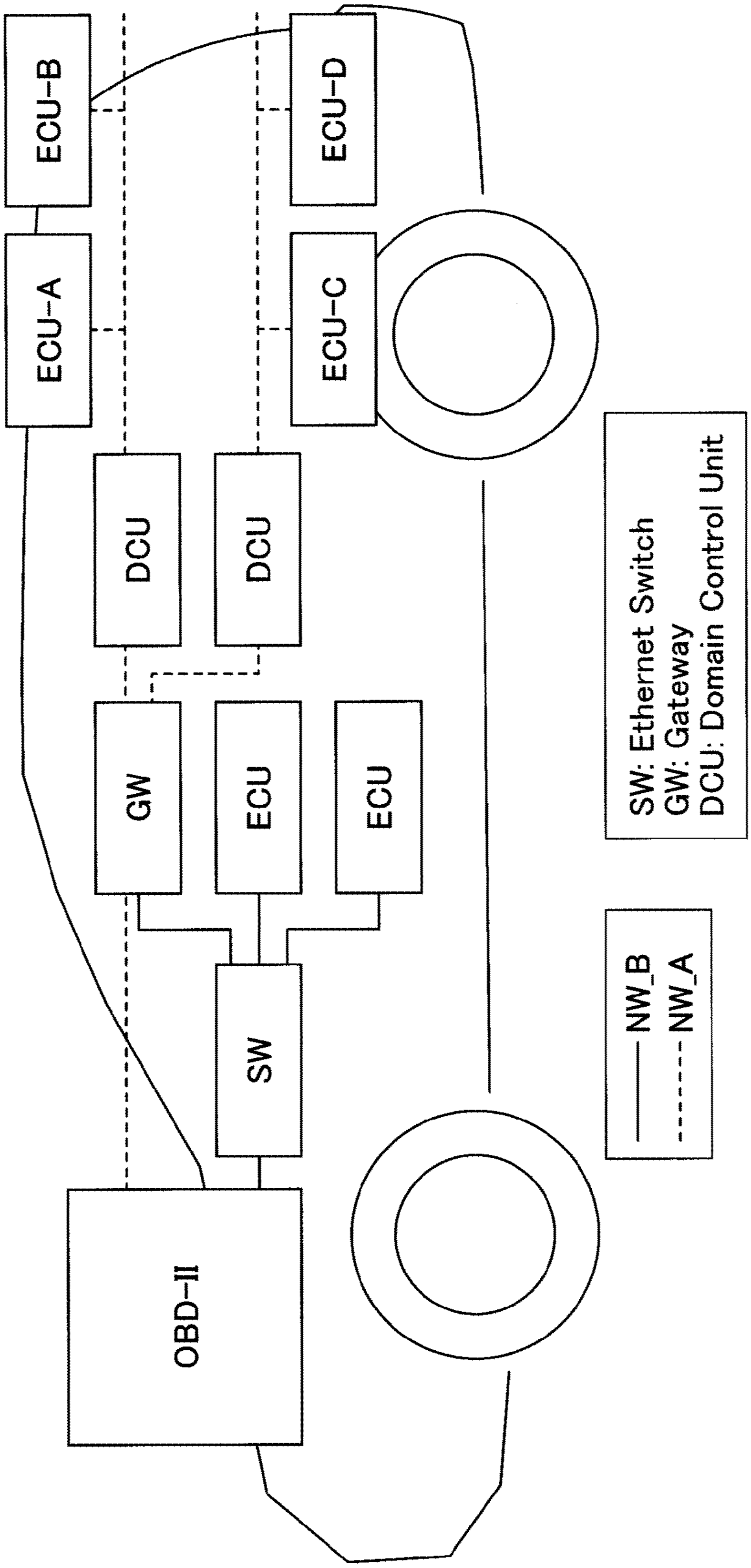
ECU-B
ECU-D
ECU-A
ECU-C
DCU
DCU
GW
ECU
ECU
SW
OBD-II
SW: Ethernet Switch
GW: Gateway
DCU: Domain Control Unit
NW_B
NW_A

Fig. 16

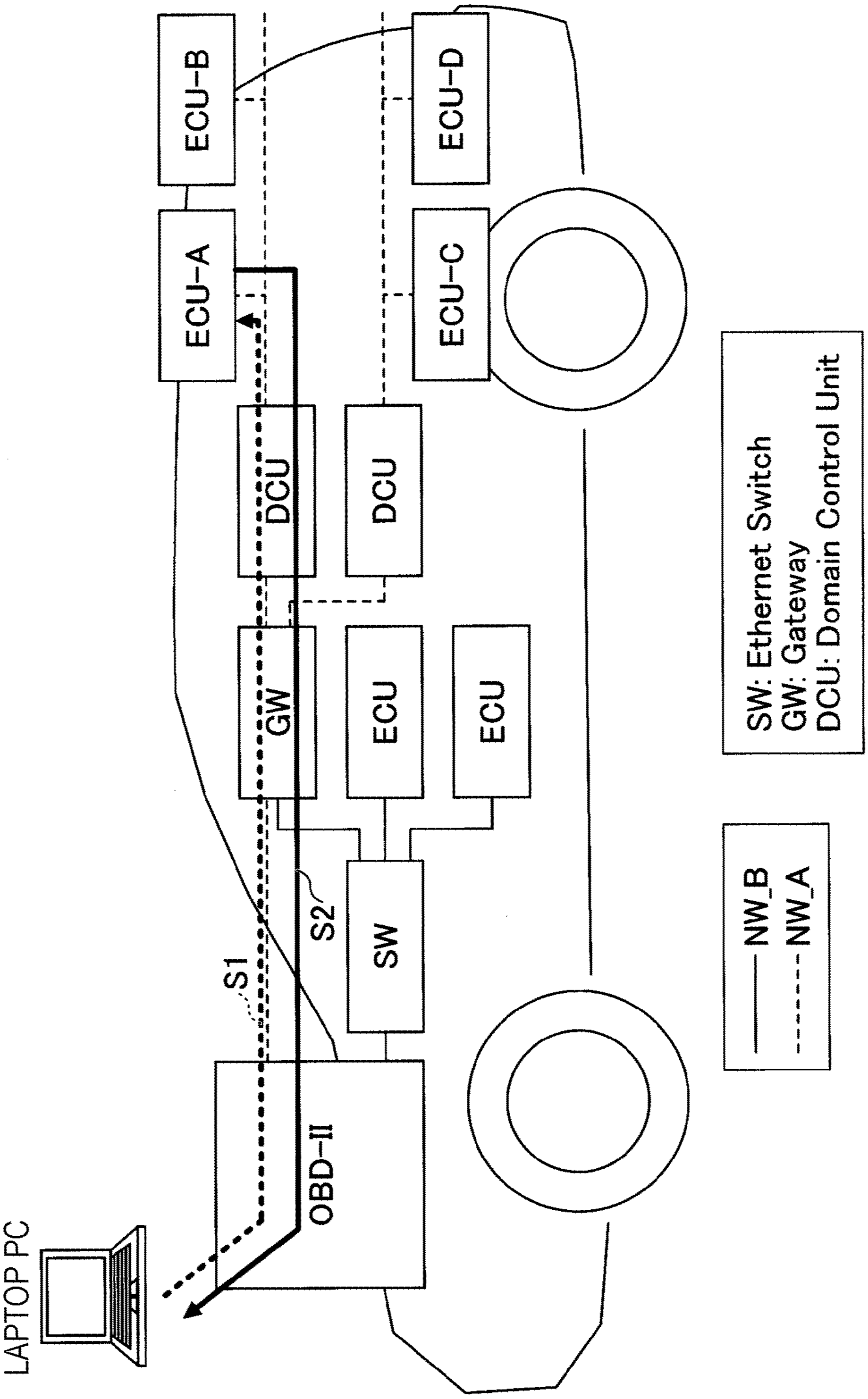
LAPTOP PC
OBD-II
S1
S2
SW
GW
ECU
ECU
DCU
DCU
ECU-A
ECU-B
ECU-C
ECU-D
NW_B
NW_A
SW: Ethernet Switch
GW: Gateway
DCU: Domain Control Unit

Fig. 17

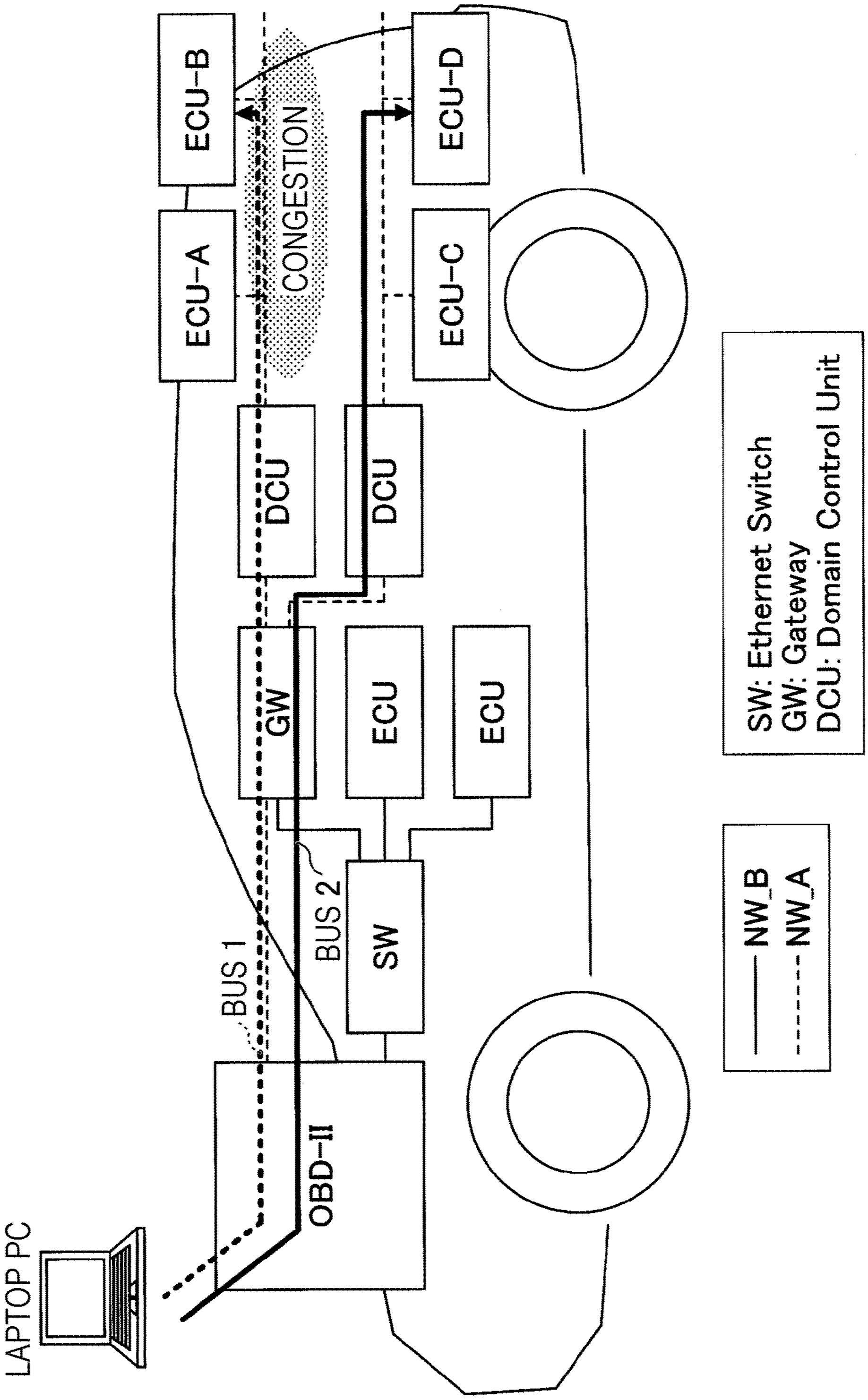
LAPTOP PC
OBD-II
BUS 1
BUS 2
SW
GW
ECU
ECU
DCU
DCU
ECU-A
ECU-B
ECU-C
ECU-D
CONGESTION
NW_B
NW_A
SW: Ethernet Switch
GW: Gateway
DCU: Domain Control Unit

Fig. 18

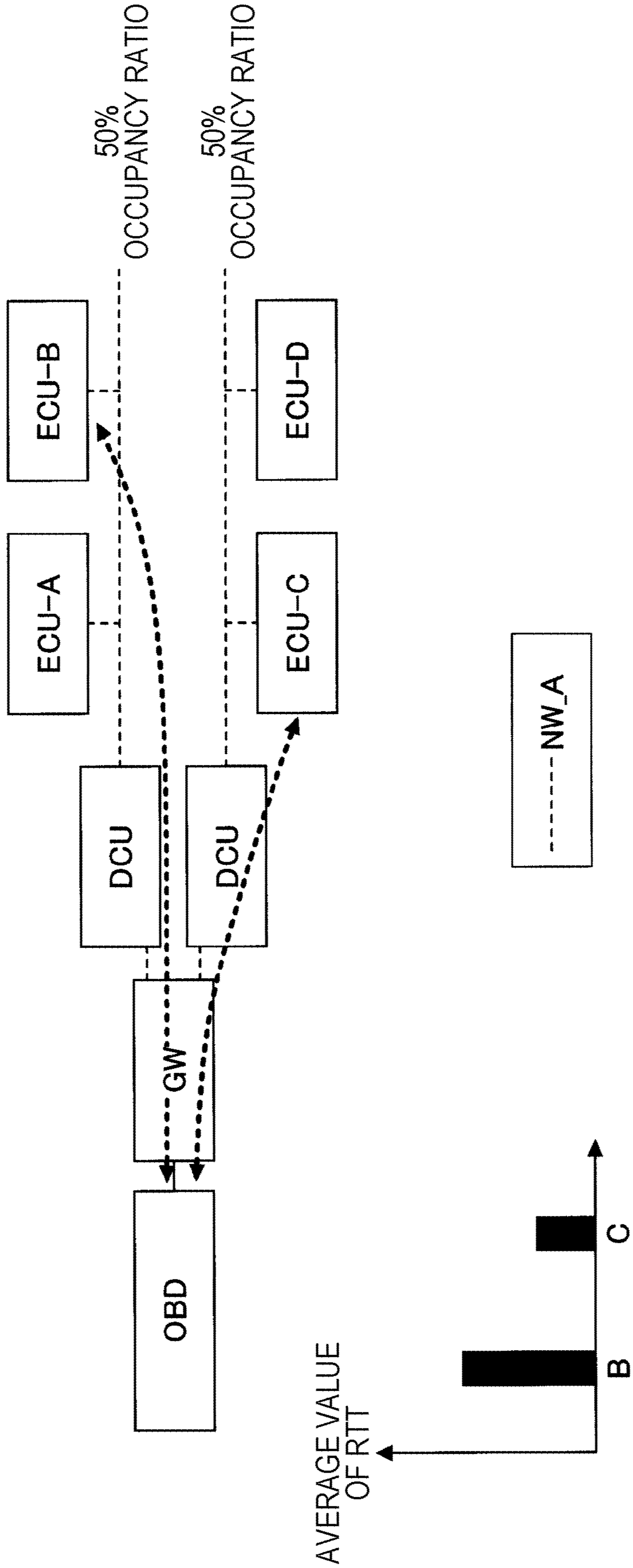
50%
OCCUPANCY RATIO
50%
OCCUPANCY RATIO
ECU-B
ECU-D
ECU-A
ECU-C
DCU
DCU
GW
OBD
NW_A
AVERAGE VALUE
OF RTT
B
C
ECU

Fig. 19

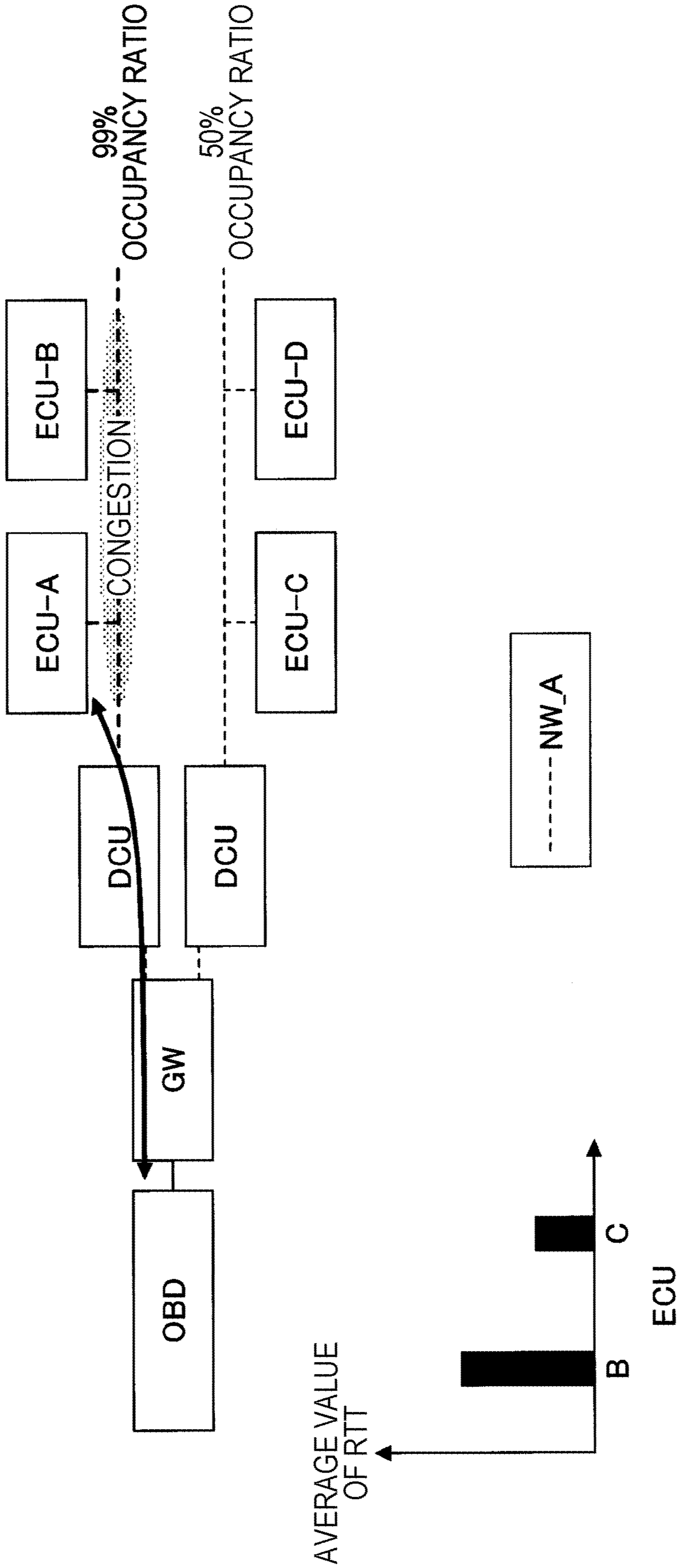
99%
OCCUPANCY RATIO
50%
OCCUPANCY RATIO
ECU–B
ECU–A
CONGESTION
ECU–D
ECU–C
DCU
DCU
GW
OBD
NW_A
AVERAGE VALUE
OF RTT
B
C
ECU

Fig. 20

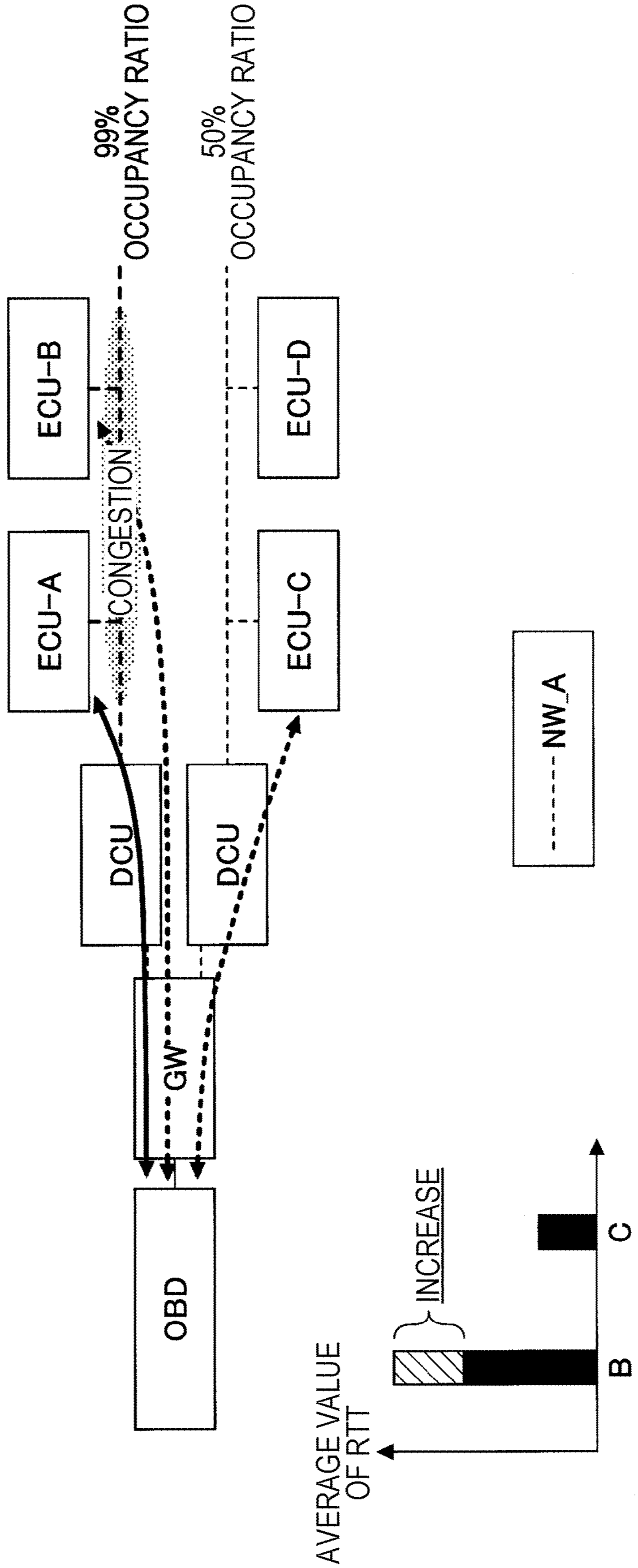
99%
OCCUPANCY RATIO
50%
OCCUPANCY RATIO
ECU-B
ECU-A
CONGESTION
ECU-D
ECU-C
DCU
DCU
GW
OBD
NW_A
AVERAGE VALUE
OF RTT
INCREASE
B
C
ECU

# Fig. 21

ECU INFORMATION

| ITEM | EXAMPLE VALUE |
|---|---|
| **VIN** | **JP123456789012345** |
| NAME | **TCU** |
| MODEL NUMBER | **DECUT01011** |
| SOFTWARE Ver. | **1.0.0** |
| HARDWARE Ver. | **A** |

KNOWN

DIAGNOSTIC NW_A-ID TRANSMITTED AND RECEIVED

| ITEM | EXAMPLE VALUE |
|---|---|
| RECEPTION | **0x7E0** |
| TRANSMISSION | **0x7E8** |

AIM

NORMAL NW_A-ID TRANSMITTED AND RECEIVED

| ITEM | EXAMPLE VALUE |
|---|---|
| RECEPTION | ? |
| **TRANSMISSION** | **0x300** |

Fig. 22

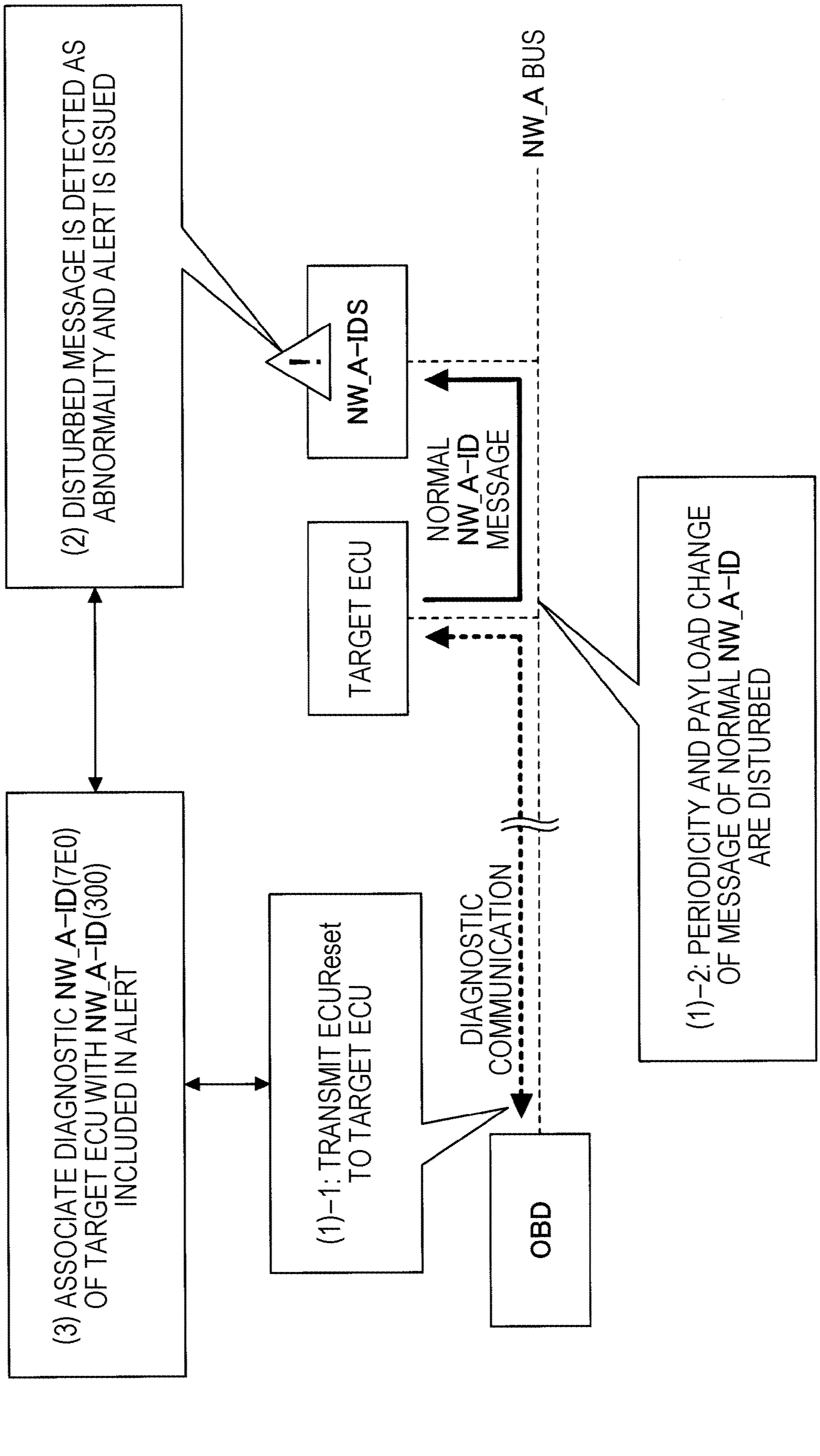
(2) DISTURBED MESSAGE IS DETECTED AS ABNORMALITY AND ALERT IS ISSUED
NW_A BUS
NW_A-IDS
!
TARGET ECU
NORMAL NW_A-ID MESSAGE
(1)-2: PERIODICITY AND PAYLOAD CHANGE OF MESSAGE OF NORMAL NW_A-ID ARE DISTURBED
(3) ASSOCIATE DIAGNOSTIC NW_A-ID(7E0) OF TARGET ECU WITH NW_A-ID(300) INCLUDED IN ALERT
(1)-1: TRANSMIT ECUReset TO TARGET ECU
DIAGNOSTIC COMMUNICATION
OBD

# Fig. 23

| A | B |
|---|---|
| 12345-67890 | Engine Module |
| 12345-67890 | Engine Module |
| 12345-67890 | Hybrid Engine Module |

Fig. 24

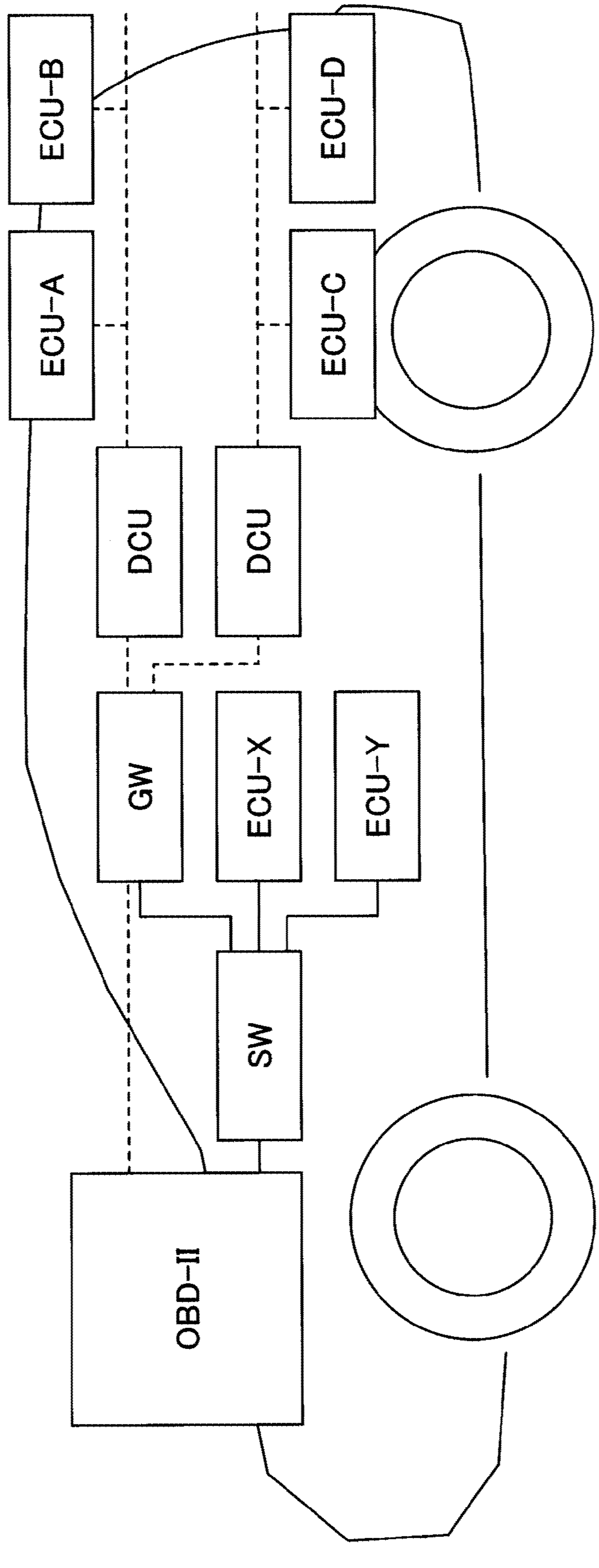

Fig. 25

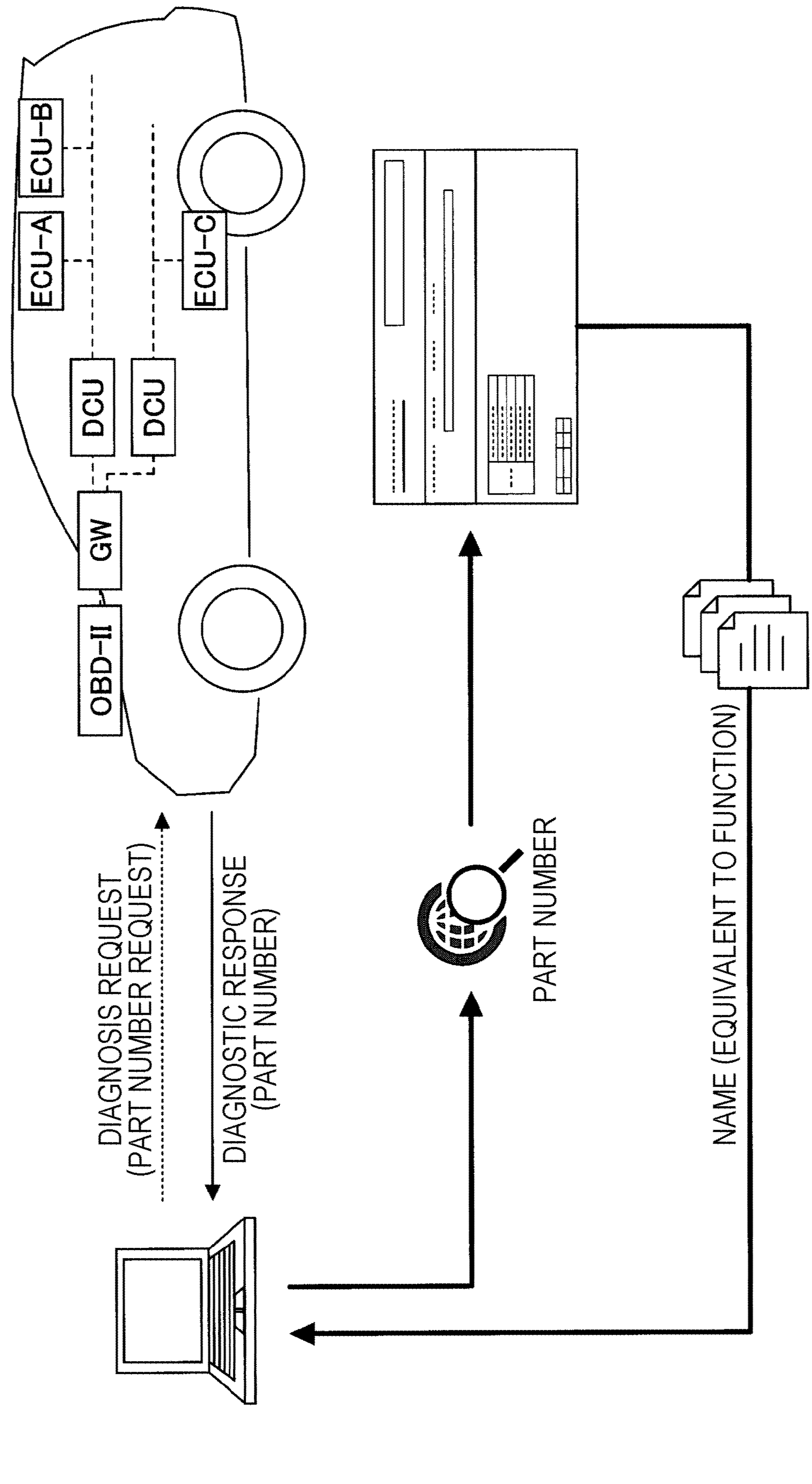
ECU–B
ECU–A
ECU–C
DCU
DCU
GW
OBD–II
DIAGNOSIS REQUEST
(PART NUMBER REQUEST)
DIAGNOSTIC RESPONSE
(PART NUMBER)
PART NUMBER
NAME (EQUIVALENT TO FUNCTION)

# Fig. 26

| A | B |
|---|---|
| 12345-67890 | Engine Module |
| 12345-67890 | Engine Module |
| 12345-67890 | Hybrid Engine Module |

Fig. 27

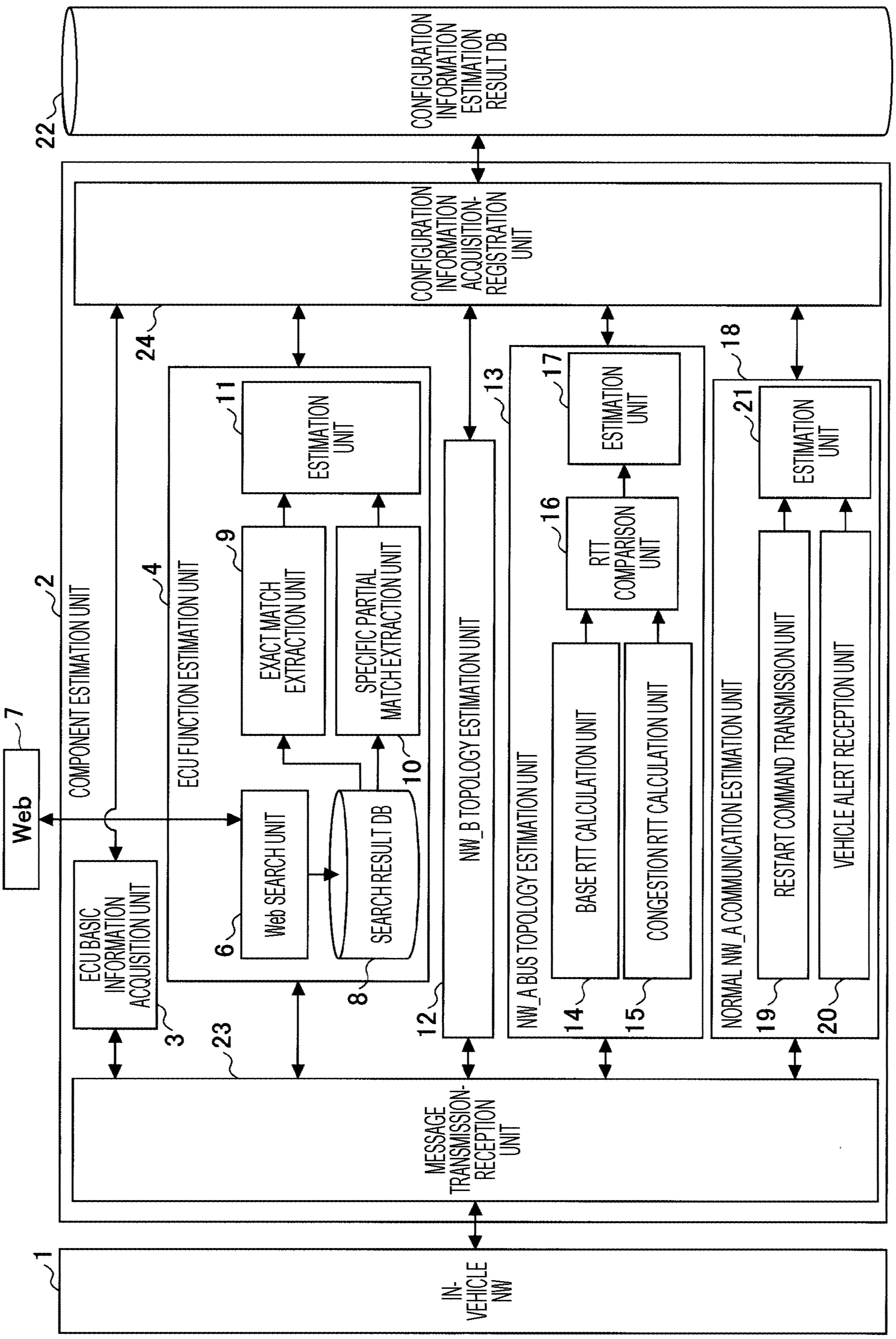
22
CONFIGURATION INFORMATION ESTIMATION RESULT DB
CONFIGURATION INFORMATION ACQUISITION-REGISTRATION UNIT
24
2
COMPONENT ESTIMATION UNIT
7
Web
3
ECU BASIC INFORMATION ACQUISITION UNIT
4
ECU FUNCTION ESTIMATION UNIT
6
Web SEARCH UNIT
8
SEARCH RESULT DB
9
EXACT MATCH EXTRACTION UNIT
10
SPECIFIC PARTIAL MATCH EXTRACTION UNIT
11
ESTIMATION UNIT
12
NW_B TOPOLOGY ESTIMATION UNIT
13
NW_A BUS TOPOLOGY ESTIMATION UNIT
14
BASE RTT CALCULATION UNIT
15
CONGESTION RTT CALCULATION UNIT
16
RTT COMPARISON UNIT
17
ESTIMATION UNIT
18
NORMAL NW_A COMMUNICATION ESTIMATION UNIT
19
RESTART COMMAND TRANSMISSION UNIT
20
VEHICLE ALERT RECEPTION UNIT
21
ESTIMATION UNIT
23
MESSAGE TRANSMISSION-RECEPTION UNIT
1
IN-VEHICLE NW

Fig. 28

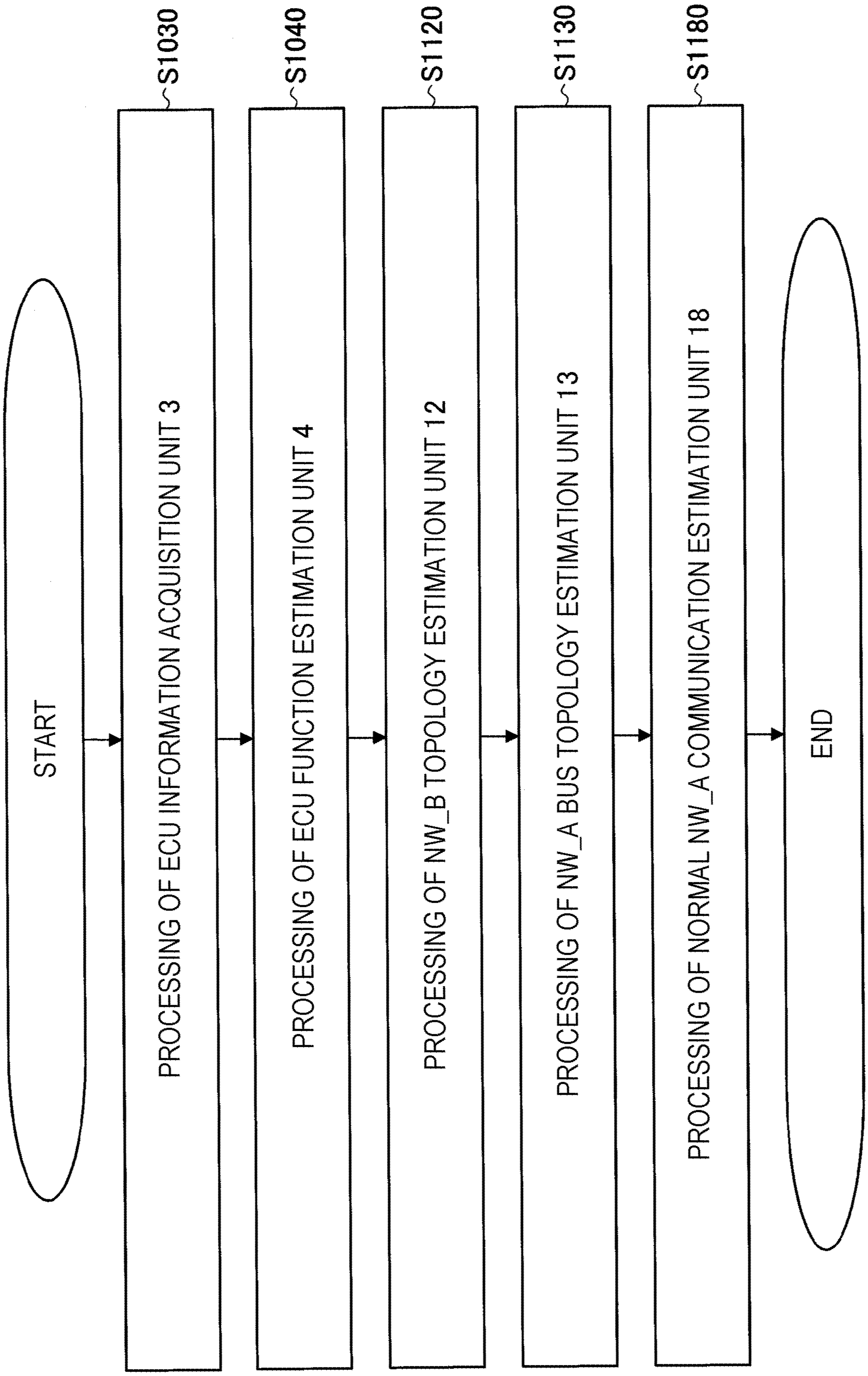
START
PROCESSING OF ECU INFORMATION ACQUISITION UNIT 3
S1030
PROCESSING OF ECU FUNCTION ESTIMATION UNIT 4
S1040
PROCESSING OF NW_B TOPOLOGY ESTIMATION UNIT 12
S1120
PROCESSING OF NW_A BUS TOPOLOGY ESTIMATION UNIT 13
S1130
PROCESSING OF NORMAL NW_A COMMUNICATION ESTIMATION UNIT 18
S1180
END

Fig. 29

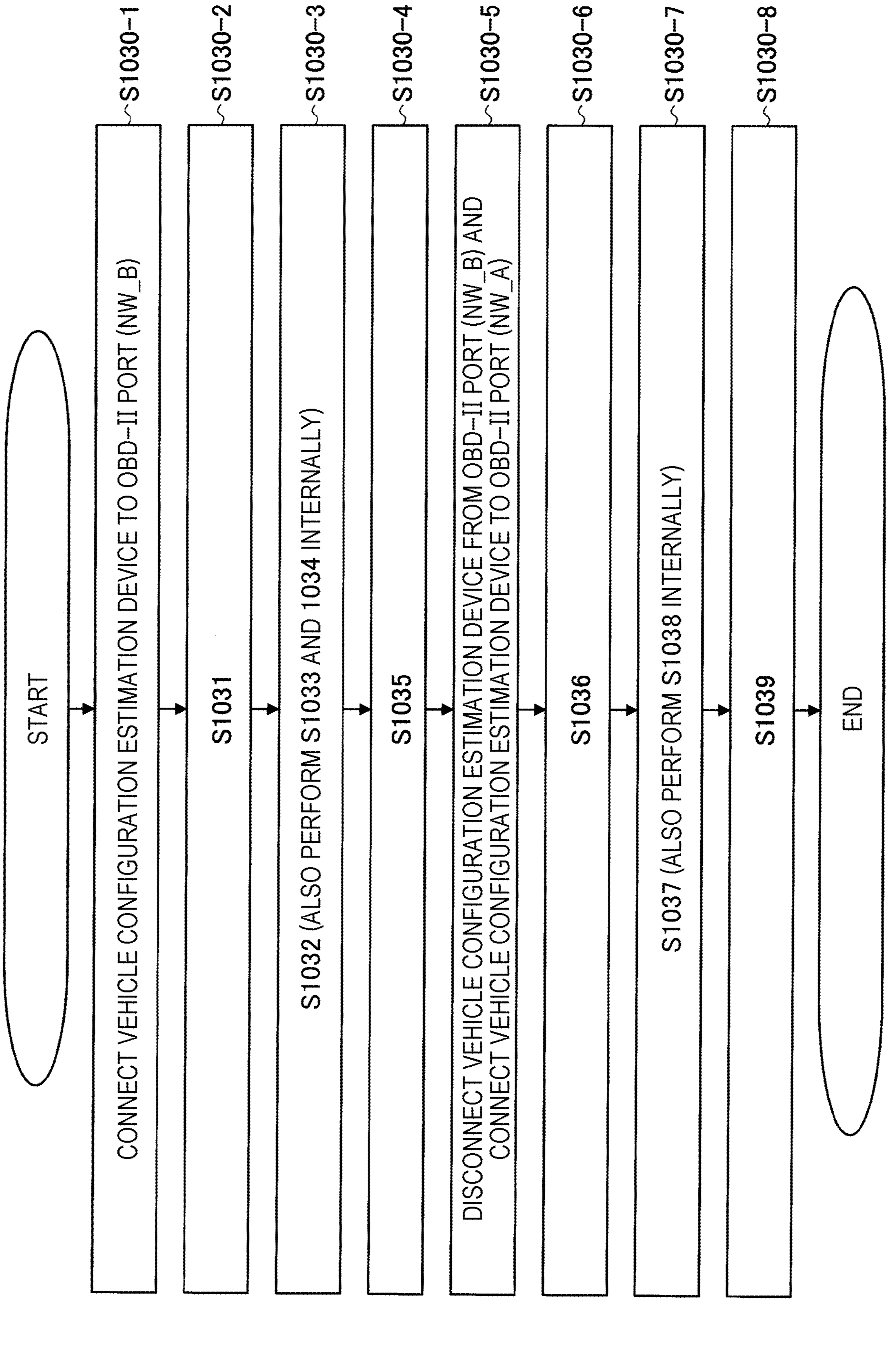
START
CONNECT VEHICLE CONFIGURATION ESTIMATION DEVICE TO OBD-II PORT (NW_B)
S1030-1
S1031
S1030-2
S1032 (ALSO PERFORM S1033 AND 1034 INTERNALLY)
S1030-3
S1035
S1030-4
DISCONNECT VEHICLE CONFIGURATION ESTIMATION DEVICE FROM OBD-II PORT (NW_B) AND CONNECT VEHICLE CONFIGURATION ESTIMATION DEVICE TO OBD-II PORT (NW_A)
S1030-5
S1036
S1030-6
S1037 (ALSO PERFORM S1038 INTERNALLY)
S1030-7
S1039
S1030-8
END

**Fig. 30**

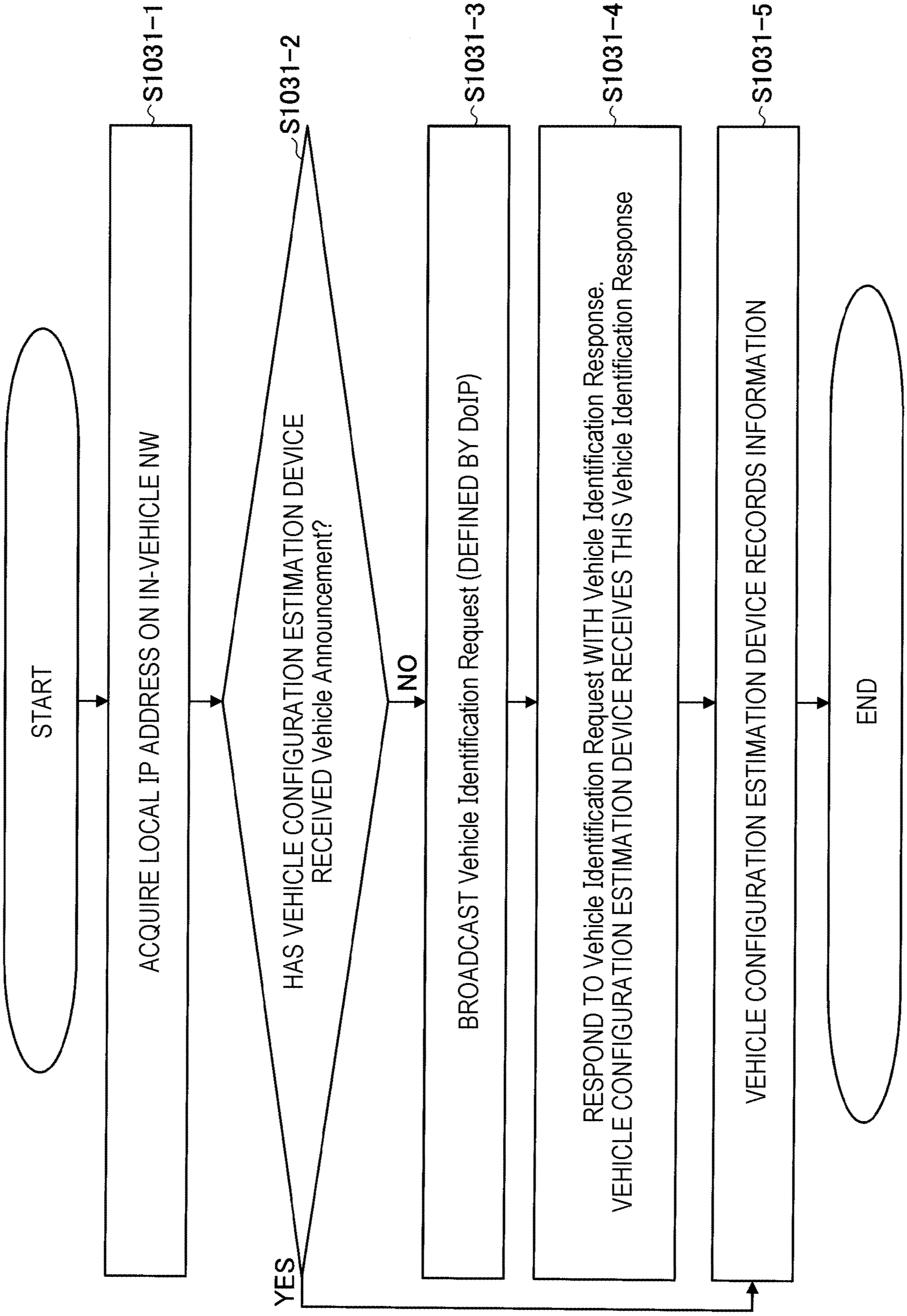
START
ACQUIRE LOCAL IP ADDRESS ON IN-VEHICLE NW
S1031-1
HAS VEHICLE CONFIGURATION ESTIMATION DEVICE RECEIVED Vehicle Announcement?
S1031-2
YES
NO
BROADCAST Vehicle Identification Request (DEFINED BY DoIP)
S1031-3
RESPOND TO Vehicle Identification Request WITH Vehicle Identification Response.
VEHICLE CONFIGURATION ESTIMATION DEVICE RECEIVES THIS Vehicle Identification Response
S1031-4
VEHICLE CONFIGURATION ESTIMATION DEVICE RECORDS INFORMATION
S1031-5
END

# Fig. 31

TABLE 3031

| IP ADDRESS | MAC ADDRESS | Entity ID (DEFINED BY DoIP) |
|---|---|---|
| 192.168.10.1 | 10:20:30:40:50:60 | 10:20:30:40:50:60 |
| 192.168.10.2 | 11:21:31:41:51:61 | 11:21:31:41:51:61 |
| 192.168.10.3 | 12:22:32:42:52:62 | 12:22:32:42:52:62 |

Fig. 32

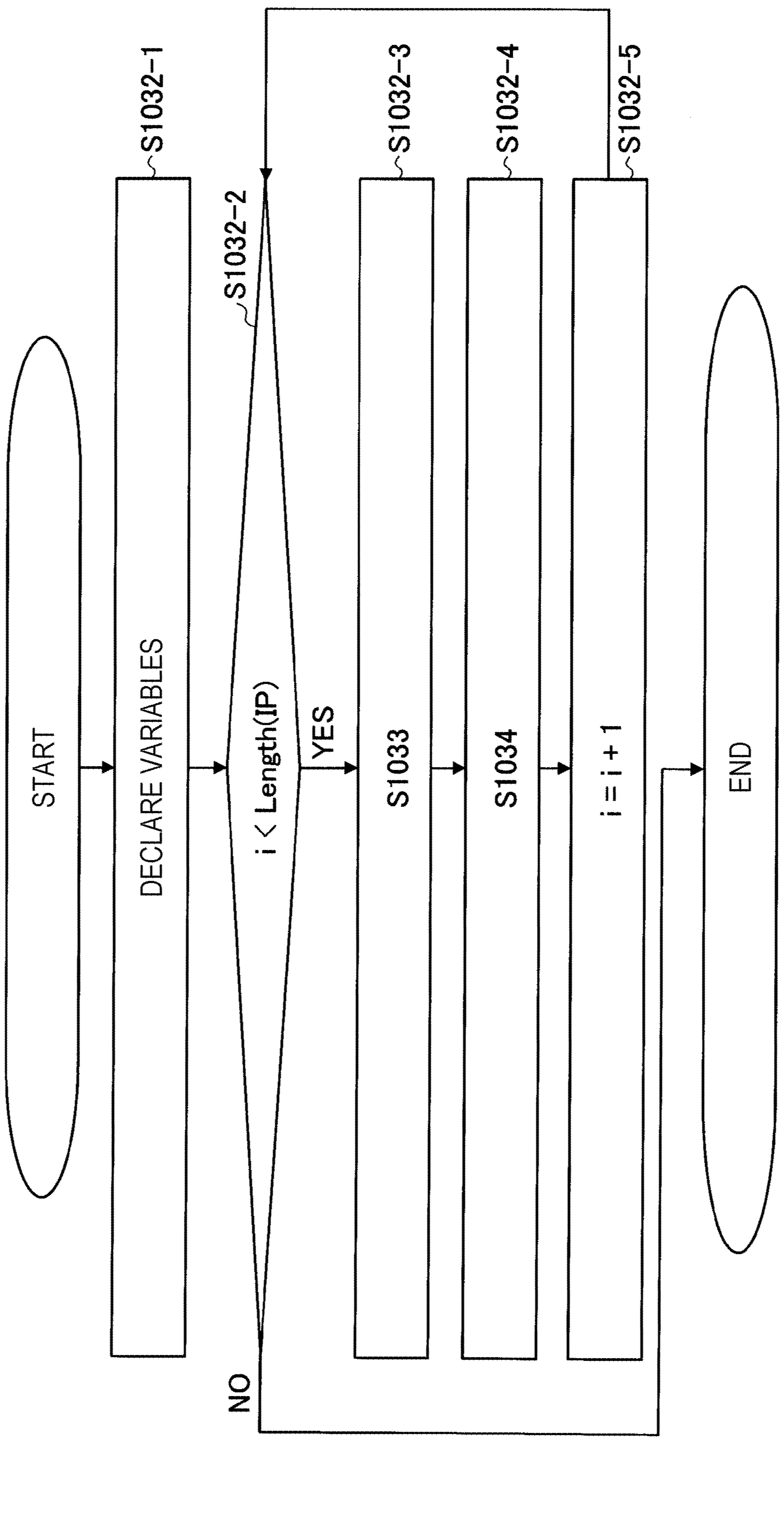
START
DECLARE VARIABLES
S1032-1
i < Length(IP)
S1032-2
YES
NO
S1033
S1032-3
S1034
S1032-4
i = i + 1
S1032-5
END

Fig. 33

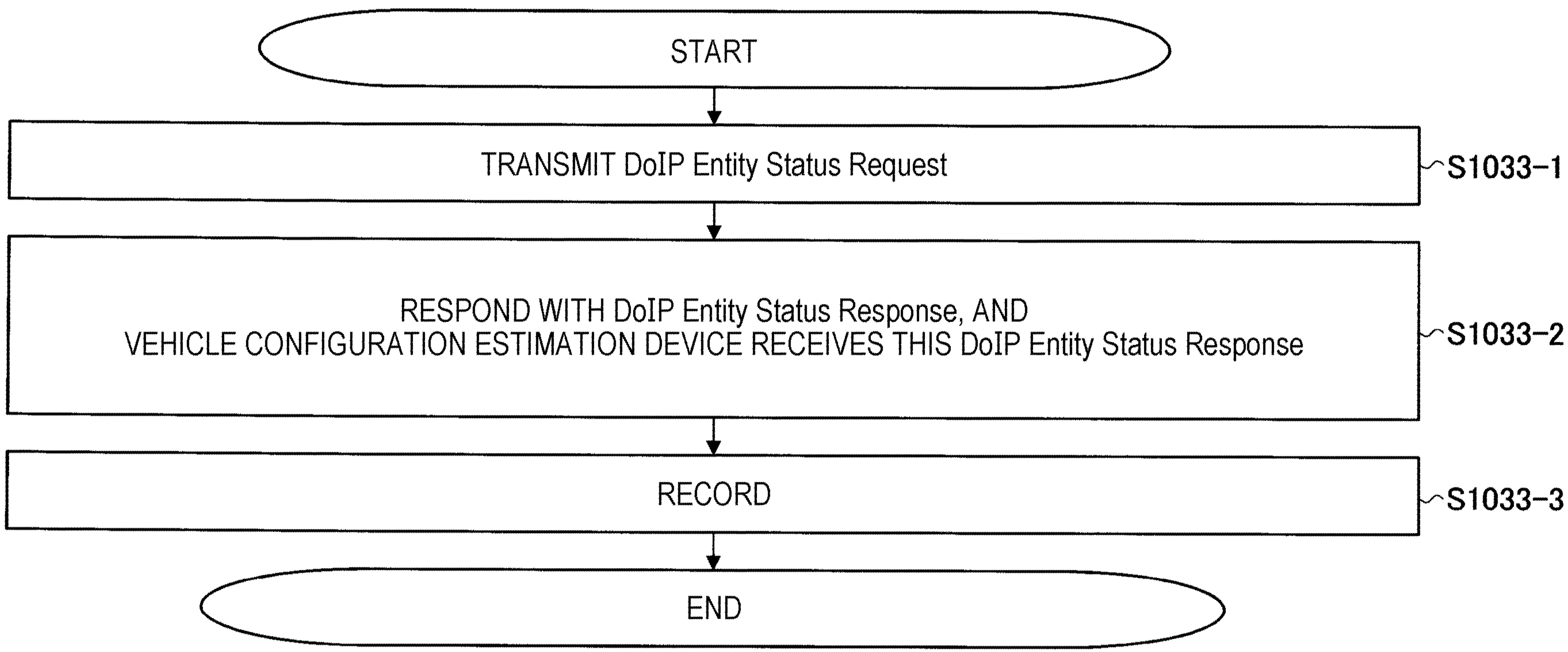
START
TRANSMIT DoIP Entity Status Request
S1033-1
RESPOND WITH DoIP Entity Status Response, AND
VEHICLE CONFIGURATION ESTIMATION DEVICE RECEIVES THIS DoIP Entity Status Response
S1033-2
RECORD
S1033-3
END

# Fig. 34

TABLE 3032

| IP ADDRESS | Node type |
|---|---|
| 192.168.10.1 | 0x0 |
| 192.168.10.2 | 0x1 |
| 192.168.10.3 | 0x1 |

Fig. 35

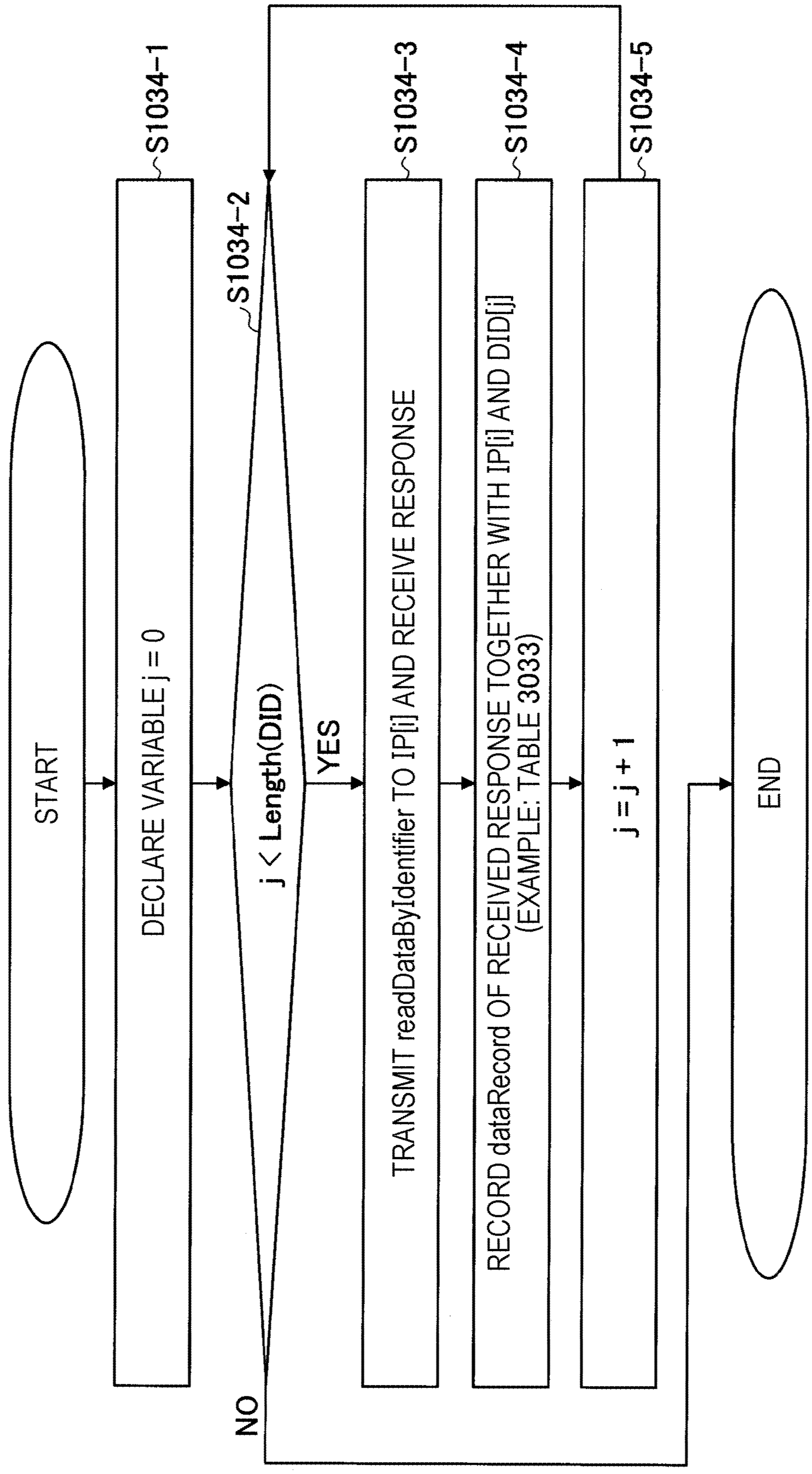
START
DECLARE VARIABLE j = 0
S1034-1
j < Length(DID)
S1034-2
YES
NO
TRANSMIT readDataByIdentifier TO IP[i] AND RECEIVE RESPONSE
S1034-3
RECORD dataRecord OF RECEIVED RESPONSE TOGETHER WITH IP[i] AND DID[j]
(EXAMPLE: TABLE 3033)
S1034-4
j = j + 1
S1034-5
END

# Fig. 36

TABLE 3033

| IP ADDRESS | DID | dataRecord |
|---|---|---|
| 192.168.10.1 | 0xF18C | 0x41 0x41 0x41 0x41 0x41 0x45 ··· 0x49 |
| 192.168.10.1 | 0xF190 | 0x31 0x4A 0x34 0x46 ··· |
| 192.168.10.1 | 0xF191 | 0x48 0x57 0x41 |
| 192.168.10.1 | 0xF194 | 0x53 0x57 0x41 |
| 192.168.10.1 | 0xF195 | 0x56 0x65 0x72 0x41 |
| 192.168.10.1 | 0xF19F | 0x41 0x40 0x42 0x40 0x43 0x40 ··· |
| 192.168.10.2 | 0xF18C | 0x42 0x42 0x42 0x42 0x42 0x45 ··· 0x49 |
| 192.168.10.2 | 0xF190 | 0x31 0x4A 0x34 0x46 ··· |
| 192.168.10.2 | 0xF191 | 0x48 0x57 0x42 |
| 192.168.10.2 | 0xF194 | 0x53 0x57 0x42 |
| 192.168.10.2 | 0xF195 | 0x56 0x65 0x72 0x41 |
| 192.168.10.2 | 0xF19F | 0x41 0x41 0x42 0x41 0x43 0x41 ··· |
| 192.168.10.3 | 0xF18C | 0x43 0x43 0x43 0x43 0x43 0x45 ··· 0x49 |
| ⋮ | ⋮ | ⋮ |
| 192.168.10.3 | 0xF19F | 0x41 0x42 0x42 0x42 0x43 0x42 ··· |

Fig. 37

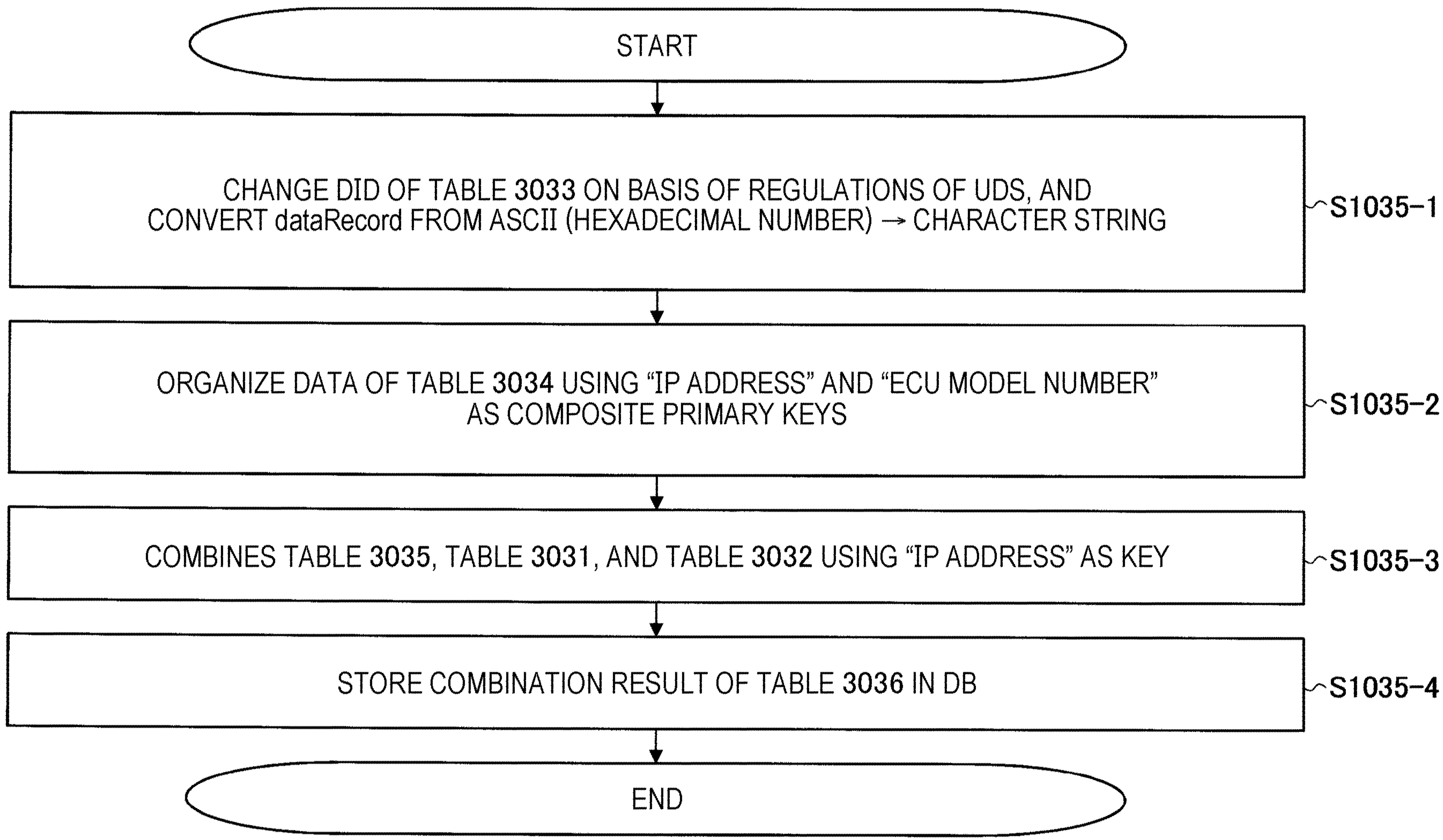
START
CHANGE DID OF TABLE 3033 ON BASIS OF REGULATIONS OF UDS, AND CONVERT dataRecord FROM ASCII (HEXADECIMAL NUMBER) → CHARACTER STRING
S1035-1
ORGANIZE DATA OF TABLE 3034 USING "IP ADDRESS" AND "ECU MODEL NUMBER" AS COMPOSITE PRIMARY KEYS
S1035-2
COMBINES TABLE 3035, TABLE 3031, AND TABLE 3032 USING "IP ADDRESS" AS KEY
S1035-3
STORE COMBINATION RESULT OF TABLE 3036 IN DB
S1035-4
END

# Fig. 38

TABLE 3034

| IP ADDRESS | DESCRIPTION | dataRecord |
|---|---|---|
| 192.168.10.1 | ECU MODEL NUMBER | 11111-56789 |
| 192.168.10.1 | VIN | 1J4F ··· |
| 192.168.10.1 | HARDWARE INFORMATION | HW1 |
| 192.168.10.1 | SOFTWARE INFORMATION | SW1 |
| 192.168.10.1 | SOFTWARE VERSION | Ver1 |
| 192.168.10.1 | Entity ID | 102030 ··· |
| 192.168.10.2 | ECU MODEL NUMBER | 22222-56789 |
| 192.168.10.2 | VIN | 1J4F ··· |
| 192.168.10.2 | HARDWARE INFORMATION | HW2 |
| 192.168.10.2 | SOFTWARE INFORMATION | SW2 |
| 192.168.10.2 | SOFTWARE VERSION | Ver2 |
| 192.168.10.2 | Entity ID | 112131 ··· |
| 192.168.10.3 | ECU MODEL NUMBER | 33333-56789 |
| ⋮ | ⋮ | ⋮ |
| 192.168.10.3 | Entity ID | 122232 ··· |

# Fig. 39

TABLE 3035

| ECU MODEL NUMBER | IP ADDRESS | VIN | HARDWARE INFORMATION | SOFTWARE INFORMATION | ··· |
|---|---|---|---|---|---|
| 11111-5···9 | 192.168.10.1 | 1J4F ··· | HW1 | SW1 | ··· |
| 22222-5···9 | 192.168.10.2 | 1J4F ··· | HW2 | SW2 | ··· |
| 33333-5···9 | 192.168.10.3 | 1J4F ··· | HW3 | SW3 | ··· |

# Fig. 40

TABLE 3036

| ECU MODEL NUMBER | IP ADDRESS | VIN | HARDWARE INFORMATION | SOFTWARE INFORMATION | ··· |
|---|---|---|---|---|---|
| 11111−5···9 | 192.168.10.1 | 1J4F ··· | HW1 | SW1 | ··· |
| 22222−5···9 | 192.168.10.2 | 1J4F ··· | HW2 | SW2 | ··· |
| 33333−5···9 | 192.168.10.3 | 1J4F ··· | HW3 | SW3 | ··· |

+

| MAC ADDRESS | Entity ID (DEFINED BY DoIP) | Node type |
|---|---|---|
| 10:20:30:40:50:60 | 10:20:30:40:50:60 | 0x0 |
| 11:21:31:41:51:61 | 11:21:31:41:51:61 | 0x1 |
| 12:22:32:42:52:62 | 12:22:32:42:52:62 | 0x1 |

Fig. 41

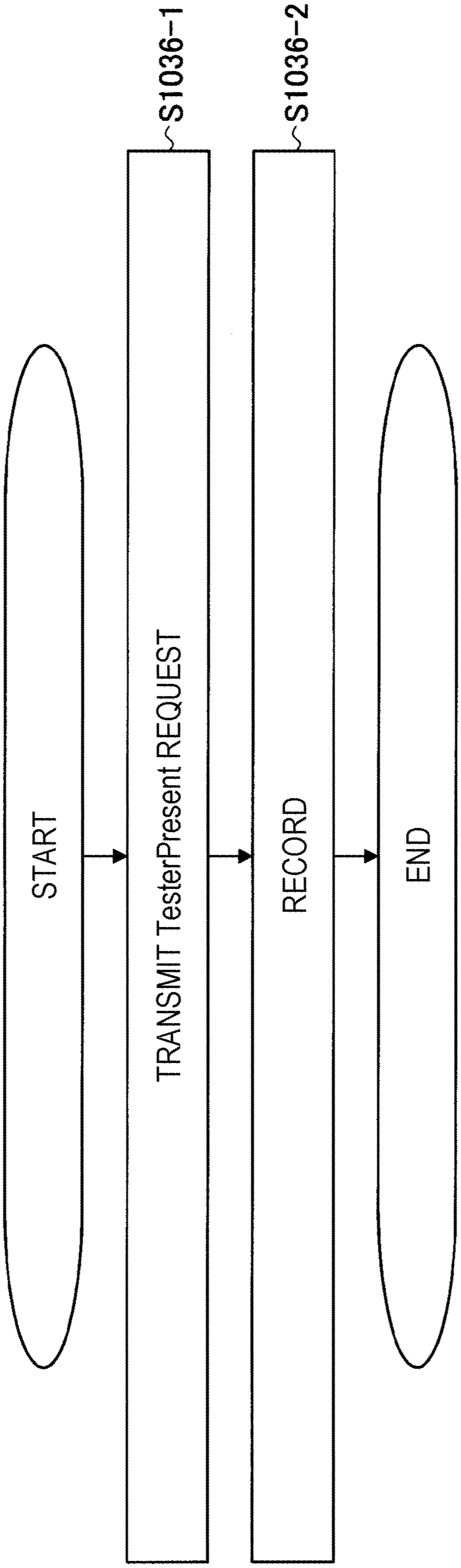
START
TRANSMIT TesterPresent REQUEST
S1036-1
RECORD
S1036-2
END

# Fig. 42

TABLE 3037

| REQUEST NW_A-ID | RESPONSE NW_A-ID |
|---|---|
| 0x700 | 0x708 |
| 0x724 | 0x764 |
| 0x750 | 0x758 |
| 0x7E0 | 0x7E8 |
| 0x7E1 | 0x7E9 |

Fig. 43

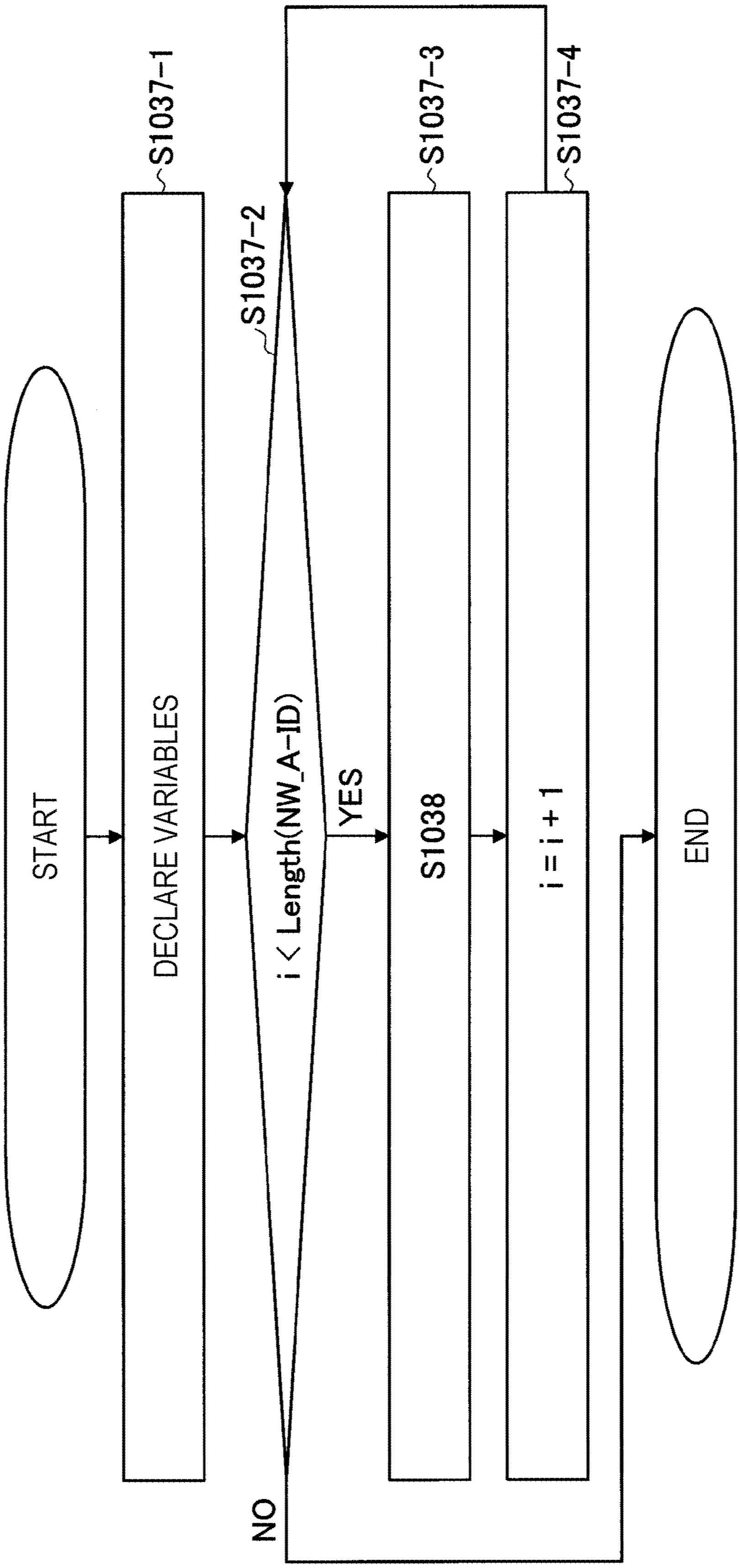
START
DECLARE VARIABLES
S1037-1
i < Length(NW_A-ID)
S1037-2
YES
NO
S1038
S1037-3
i = i + 1
S1037-4
END

Fig. 44

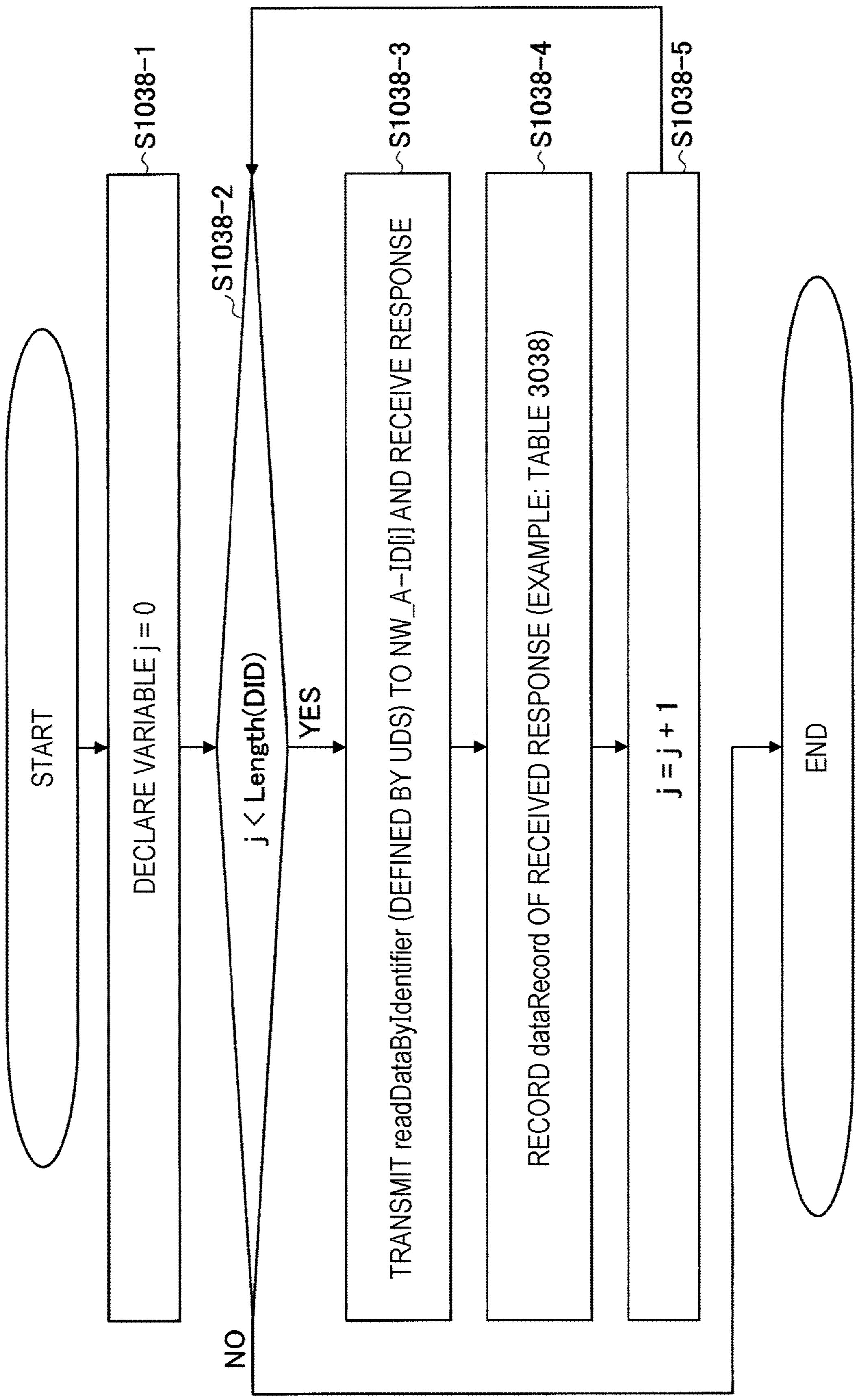
START
DECLARE VARIABLE j = 0
S1038-1
j < Length(DID)
S1038-2
YES
NO
TRANSMIT readDataByIdentifier (DEFINED BY UDS) TO NW_A-ID[i] AND RECEIVE RESPONSE
S1038-3
RECORD dataRecord OF RECEIVED RESPONSE (EXAMPLE: TABLE 3038)
S1038-4
j = j + 1
S1038-5
END

# Fig. 45

TABLE 3038

| REQUEST NW_A-ID | RESPONSE NW_A-ID | DID | dataRecord |
|---|---|---|---|
| 0x700 | 0x708 | 0xF18C | 0x44 0x44 0x44 0x44 0x44 0x45 ··· 0x49 |
| 0x700 | 0x708 | 0xF190 | 0x31 0x4A 0x34 0x46 ··· |
| 0x700 | 0x708 | 0xF191 | 0x48 0x57 0x44 |
| 0x700 | 0x708 | 0xF194 | 0x53 0x57 0x44 |
| 0x700 | 0x708 | 0xF195 | 0x56 0x65 0x72 0x44 |
| 0x700 | 0x708 | 0xF19F | 0x41 0x43 0x42 0x43 0x43 0x43 ··· |
| 0x724 | 0x764 | 0xF18C | 0x45 0x45 0x45 0x45 0x45 0x45 ··· 0x49 |
| 0x724 | 0x764 | 0xF190 | 0x31 0x4A 0x34 0x46 ··· |
| 0x724 | 0x764 | 0xF191 | 0x48 0x57 0x45 |
| 0x724 | 0x764 | 0xF194 | 0x53 0x57 0x45 |
| 0x724 | 0x764 | 0xF195 | 0x56 0x65 0x72 0x45 |
| 0x724 | 0x764 | 0xF19F | 0x41 0x44 0x42 0x44 0x43 0x44 ··· |
| 0x750 | 0x758 | 0xF18C | 0x46 0x46 0x46 0x46 0x46 0x45 ··· 0x49 |
| ⋮ | ⋮ | ⋮ | ⋮ |
| 0x7E1 | 0x7E9 | 0xF19F | 0x41 0x47 0x42 0x47 0x43 0x47 ··· |

Fig. 46

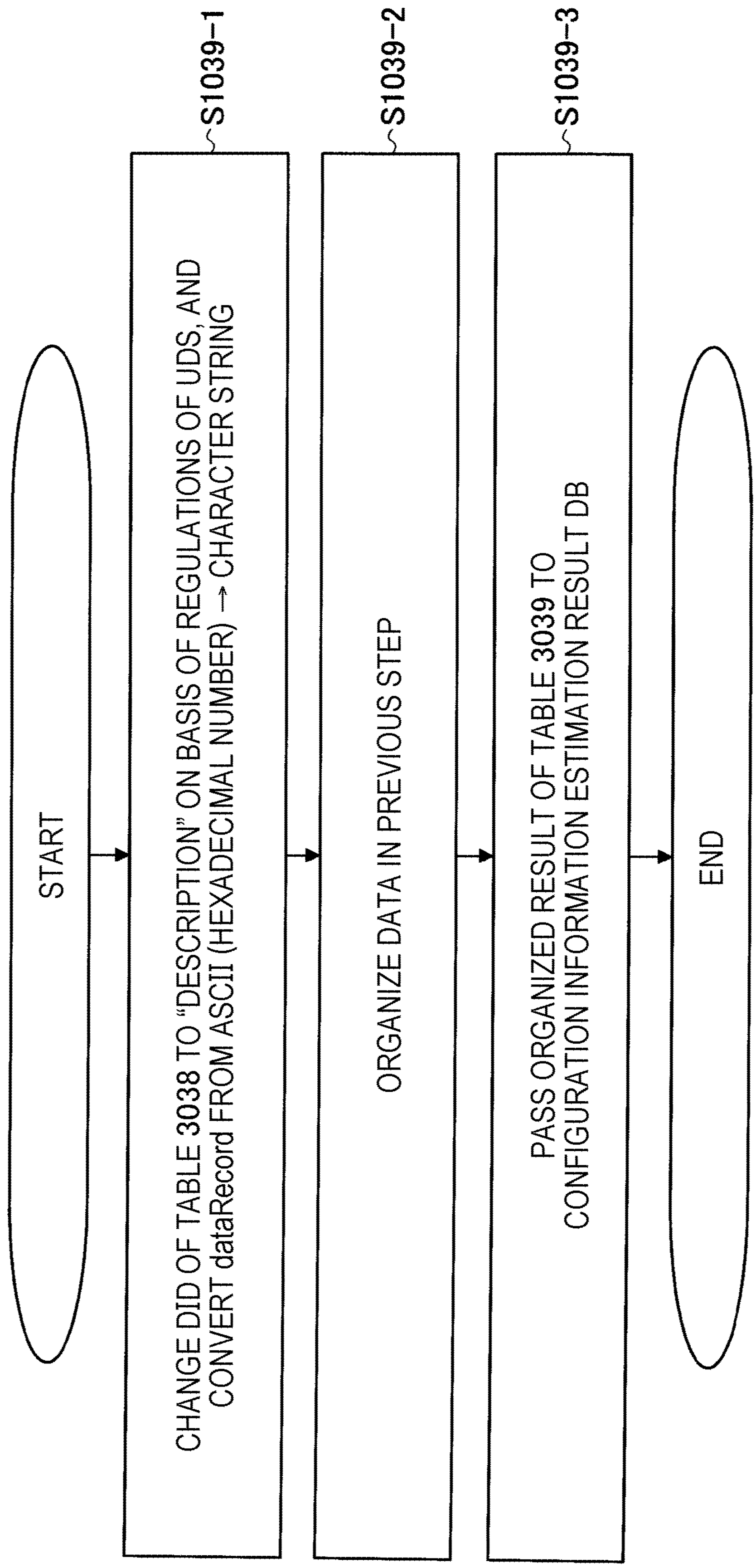
START
CHANGE DID OF TABLE 3038 TO "DESCRIPTION" ON BASIS OF REGULATIONS OF UDS, AND CONVERT dataRecord FROM ASCII (HEXADECIMAL NUMBER) → CHARACTER STRING
S1039-1
ORGANIZE DATA IN PREVIOUS STEP
S1039-2
PASS ORGANIZED RESULT OF TABLE 3039 TO CONFIGURATION INFORMATION ESTIMATION RESULT DB
S1039-3
END

# Fig. 47

TABLE 3039

| ECU MODEL NUMBER | REQUEST NW_A-ID | RESPONSE NW_A-ID | VIN | HARDWARE INFORMATION | SOFTWARE INFORMATION | ... |
|---|---|---|---|---|---|---|
| 44444-5…9 | 0x700 | 0x708 | 1J4F … | HW4 | SW4 | ... |
| 55555-5…9 | 0x724 | 0x764 | 1J4F … | HW5 | SW5 | ... |
| 66666-5…9 | 0x750 | 0x758 | 1J4F … | HW6 | SW6 | ... |
| 77777-5…9 | 0x7E0 | 0x7E8 | 1J4F … | HW7 | SW7 | ... |
| 88888-5…9 | 0x7E1 | 0x7E9 | 1J4F … | HW8 | SW8 | ... |

**Fig. 48**

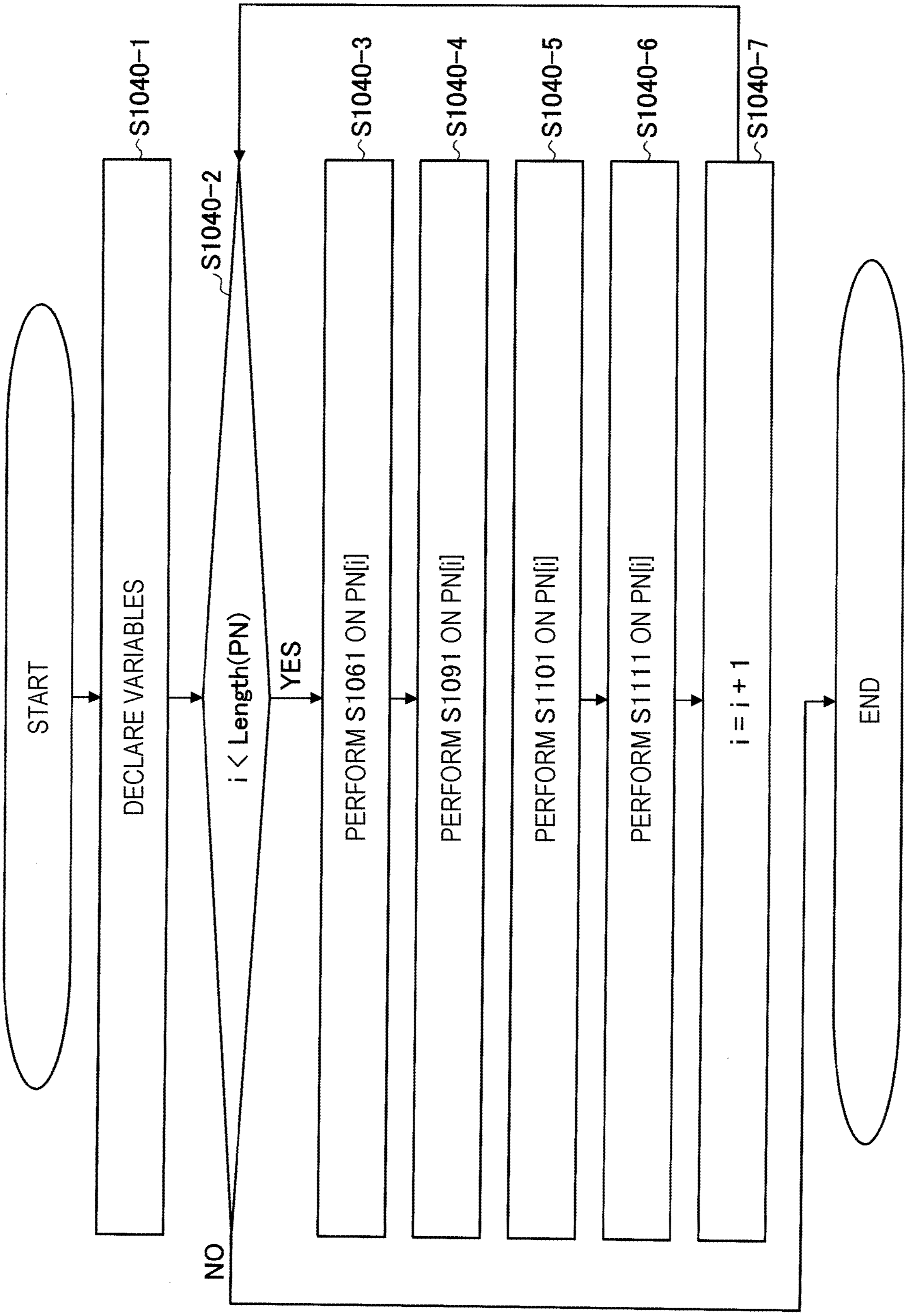

START
DECLARE VARIABLES
S1040-1
i < Length(PN)
S1040-2
YES
NO
PERFORM S1061 ON PN[i]
S1040-3
PERFORM S1091 ON PN[i]
S1040-4
PERFORM S1101 ON PN[i]
S1040-5
PERFORM S1111 ON PN[i]
S1040-6
i = i + 1
S1040-7
END

Fig. 49

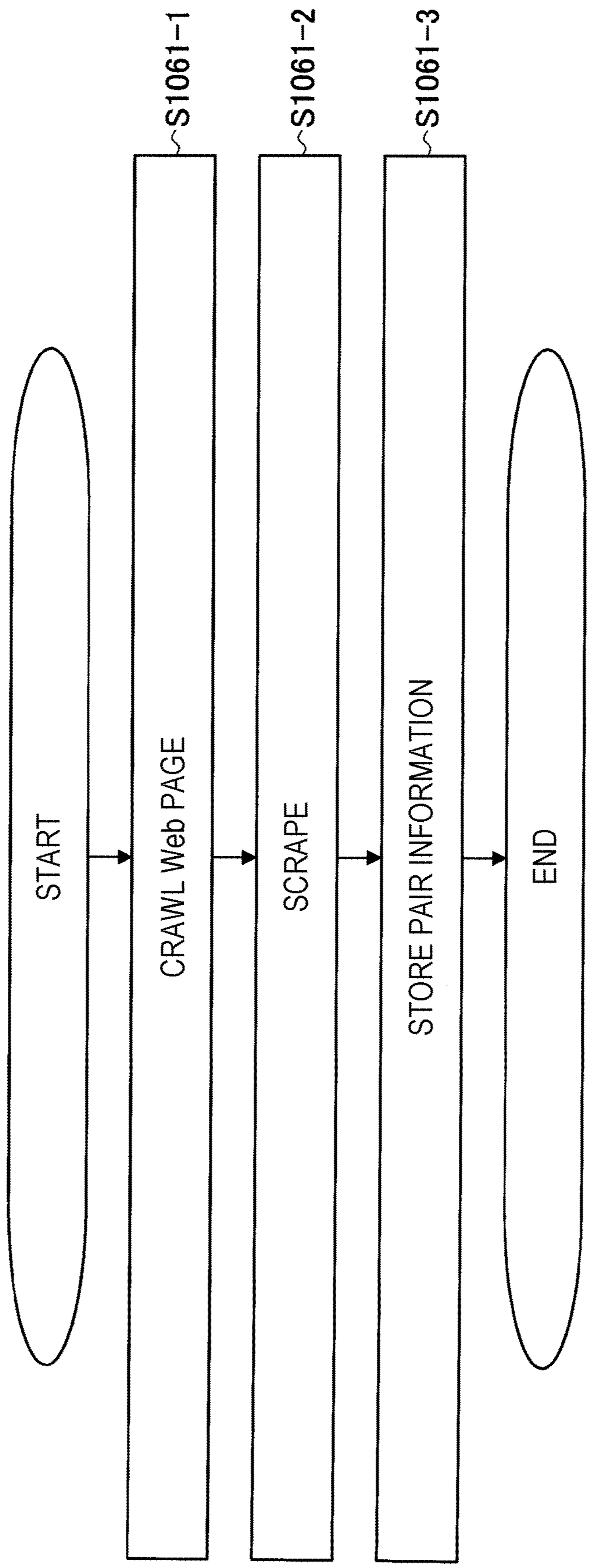
START
CRAWL Web PAGE
S1061-1
SCRAPE
S1061-2
STORE PAIR INFORMATION
S1061-3
END

# Fig. 50

TABLE 3081

| ECU MODEL NUMBER | INFORMATION OF FUNCTION |
|---|---|
| 77777-56789 | Genuine Engine Control Module |
| 77777-56789 | Genuine Engine Motor Control Module |
| 88888-56789 | Genuine Transmission Control Module |
| 33333-56789 | Genuine Central GW |
| ⋮ | ⋮ |

Fig. 51

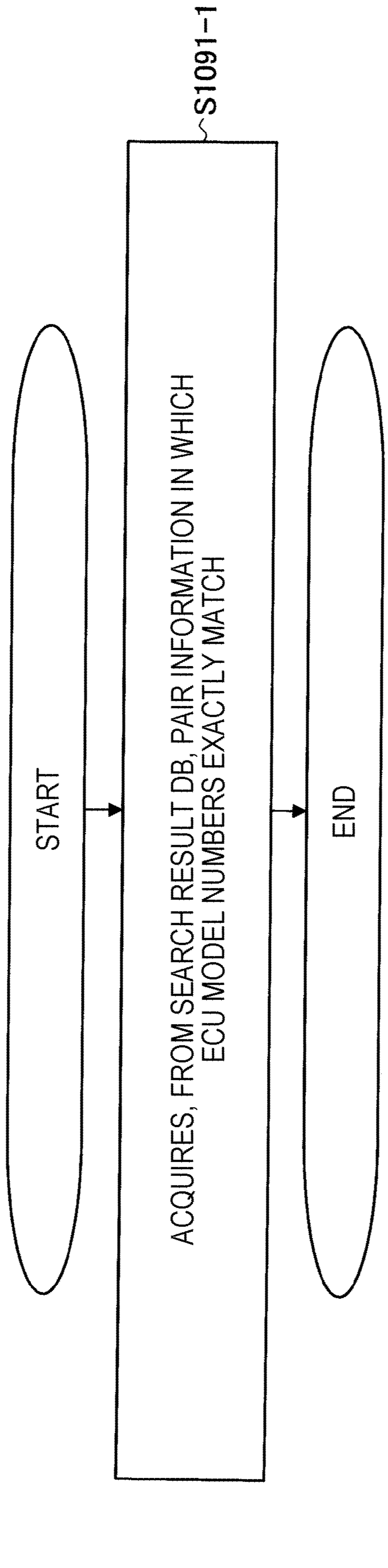
START
ACQUIRES, FROM SEARCH RESULT DB, PAIR INFORMATION IN WHICH ECU MODEL NUMBERS EXACTLY MATCH
S1091-1
END

Fig. 52

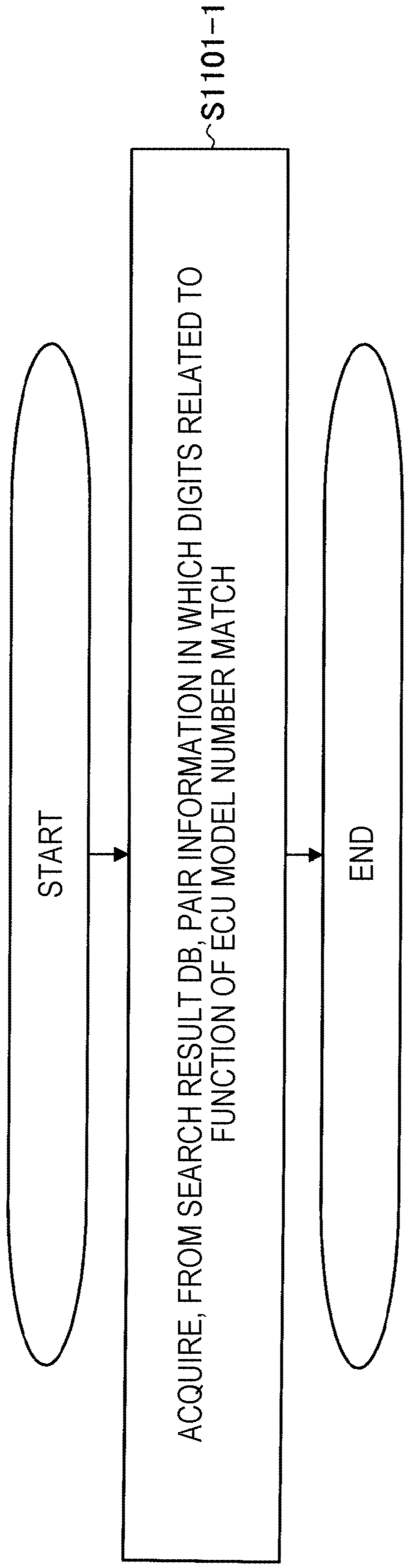
START
ACQUIRE, FROM SEARCH RESULT DB, PAIR INFORMATION IN WHICH DIGITS RELATED TO FUNCTION OF ECU MODEL NUMBER MATCH
S1101-1
END

Fig. 53

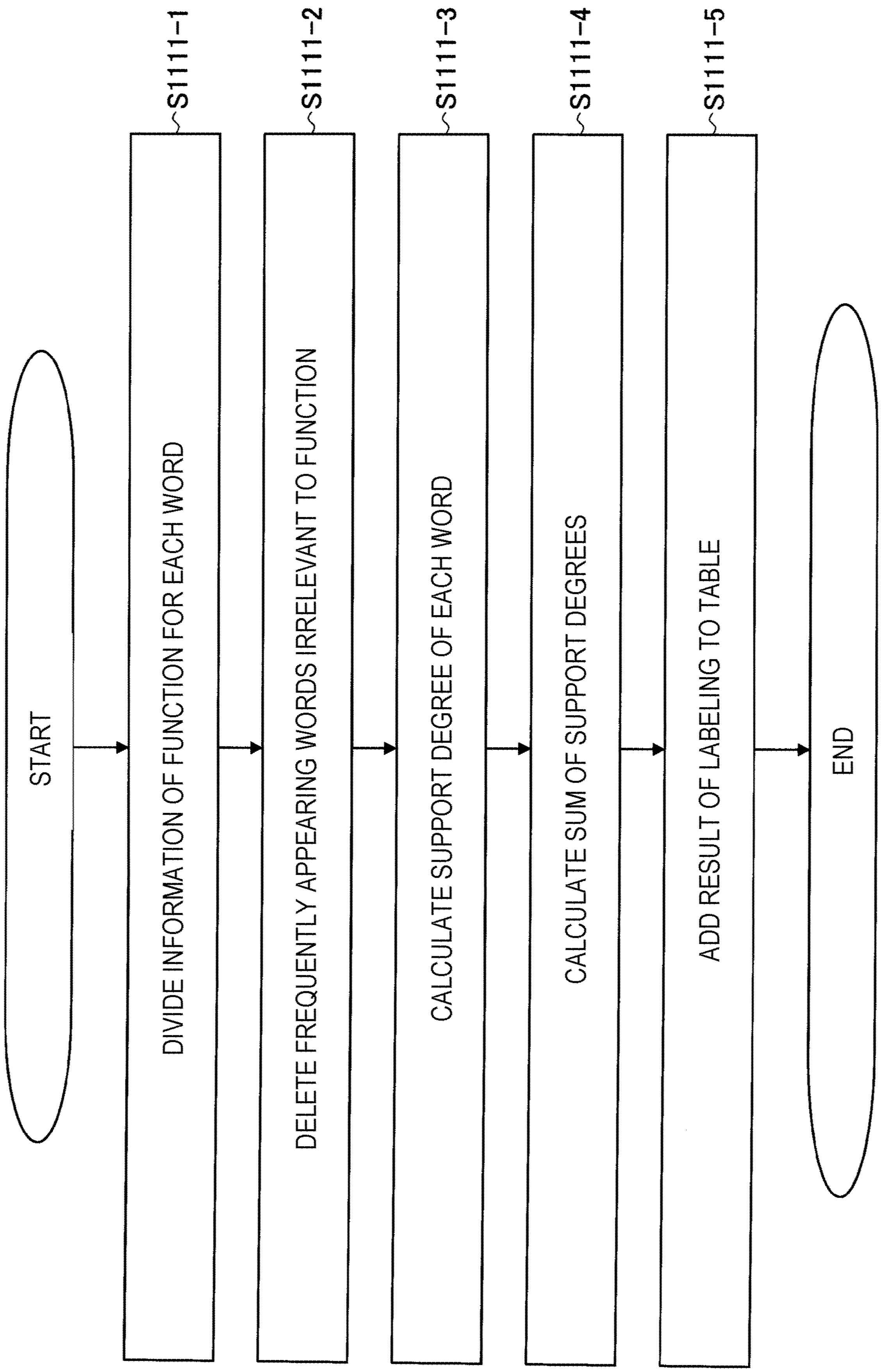
START
DIVIDE INFORMATION OF FUNCTION FOR EACH WORD
S1111-1
DELETE FREQUENTLY APPEARING WORDS IRRELEVANT TO FUNCTION
S1111-2
CALCULATE SUPPORT DEGREE OF EACH WORD
S1111-3
CALCULATE SUM OF SUPPORT DEGREES
S1111-4
ADD RESULT OF LABELING TO TABLE
S1111-5
END

# Fig. 54

TABLE 3111

| SUPPORT DEGREE | WORD |
|---:|---|
| 0.25 | Gas |
| 0.5 | Motor |
| 0.75 | Engine |
| 0.75 | Control |
| 1.0 | Module |

# Fig. 55

| SUPPORT DEGREE | WORD |
|---|---|
| 0.25 | Gas |
| 0.5 | Motor |
| 0.75 | Engine |
| 0.75 | Control |
| 1.0 | Module |

# Fig. 56

TABLE 3112

| ECU MODEL NUMBER | MODEL NUMBER EXACT MATCH | MODEL NUMBER PARTIAL MATCH | IP ADDRESS | VIN | ... |
|---|---|---|---|---|---|
| 11111-5...9 | Genuine TCU ... | Genuine TCU ... | 192.168.10.1 | 1J4F ... | ... |
| 22222-5...9 | Genuine IVI ... | Genuine IVI ... | 192.168.10.2 | 1J4F ... | ... |
| 33333-5...9 | Genuine GW ... | Genuine GW ... | 192.168.10.3 | 1J4F ... | ... |

+

| MAC ADDRESS | Entity ID (DEFINED BY DoIP) | Node type |
|---|---|---|
| 10:20:30:40:50:60 | 10:20:30:40:50:60 | 0x0 |
| 11:21:31:41:51:61 | 11:21:31:41:51:61 | 0x1 |
| 12:22:32:42:52:62 | 12:22:32:42:52:62 | 0x1 |

# Fig. 57

TABLE 3113

| ECU MODEL NUMBER | MODEL NUMBER EXACT MATCH | MODEL NUMBER PARTIAL MATCH | REQUEST NW_A-ID | RESPONSE NW_A-ID | VIN | HARDWARE INFORMATION | ··· |
|---|---|---|---|---|---|---|---|
| 44444-5···9 | Genuine DCU ... | Genuine DCU ... | 0x700 | 0x708 | 1J4F ··· | HW4 | ··· |
| 55555-5···9 | Genuine Door ... | Genuine Door ... | 0x724 | 0x764 | 1J4F ··· | HW5 | ··· |
| 66666-5···9 | Genuine DCU ... | Genuine DCU ... | 0x750 | 0x758 | 1J4F ··· | HW6 | ··· |
| 77777-5···9 | Genuine Engine ... | Genuine Engine ... | 0x7E0 | 0x7E8 | 1J4F ··· | HW7 | ··· |
| 88888-5···9 | Genuine Trans ... | Genuine Trans ... | 0x7E1 | 0x7E9 | 1J4F ··· | HW8 | ··· |

Fig. 58

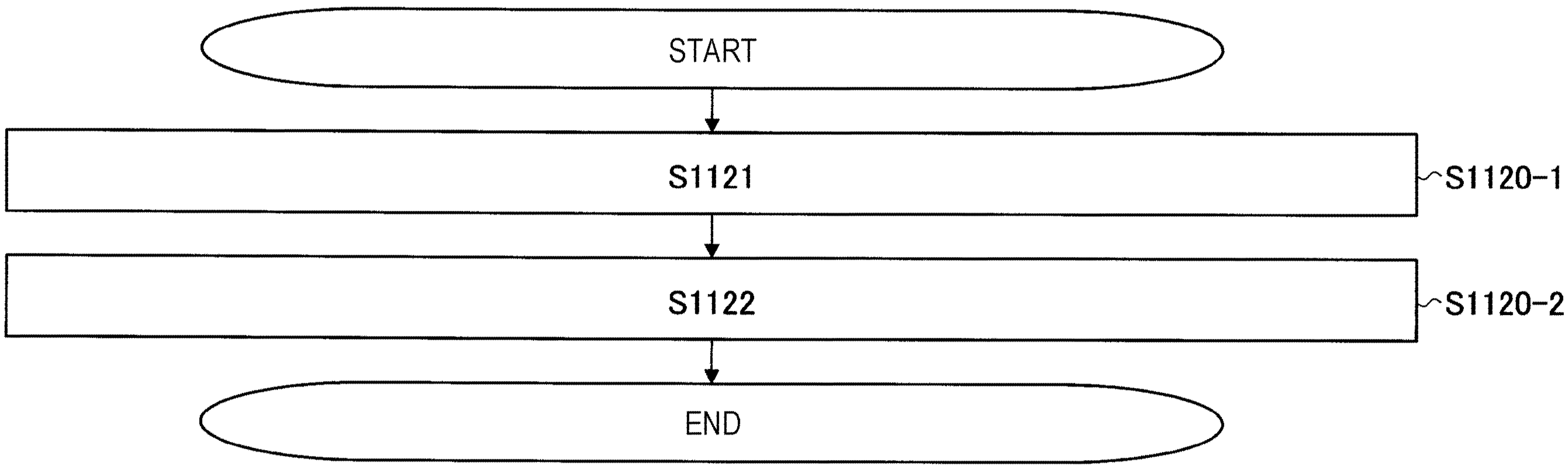

Fig. 59

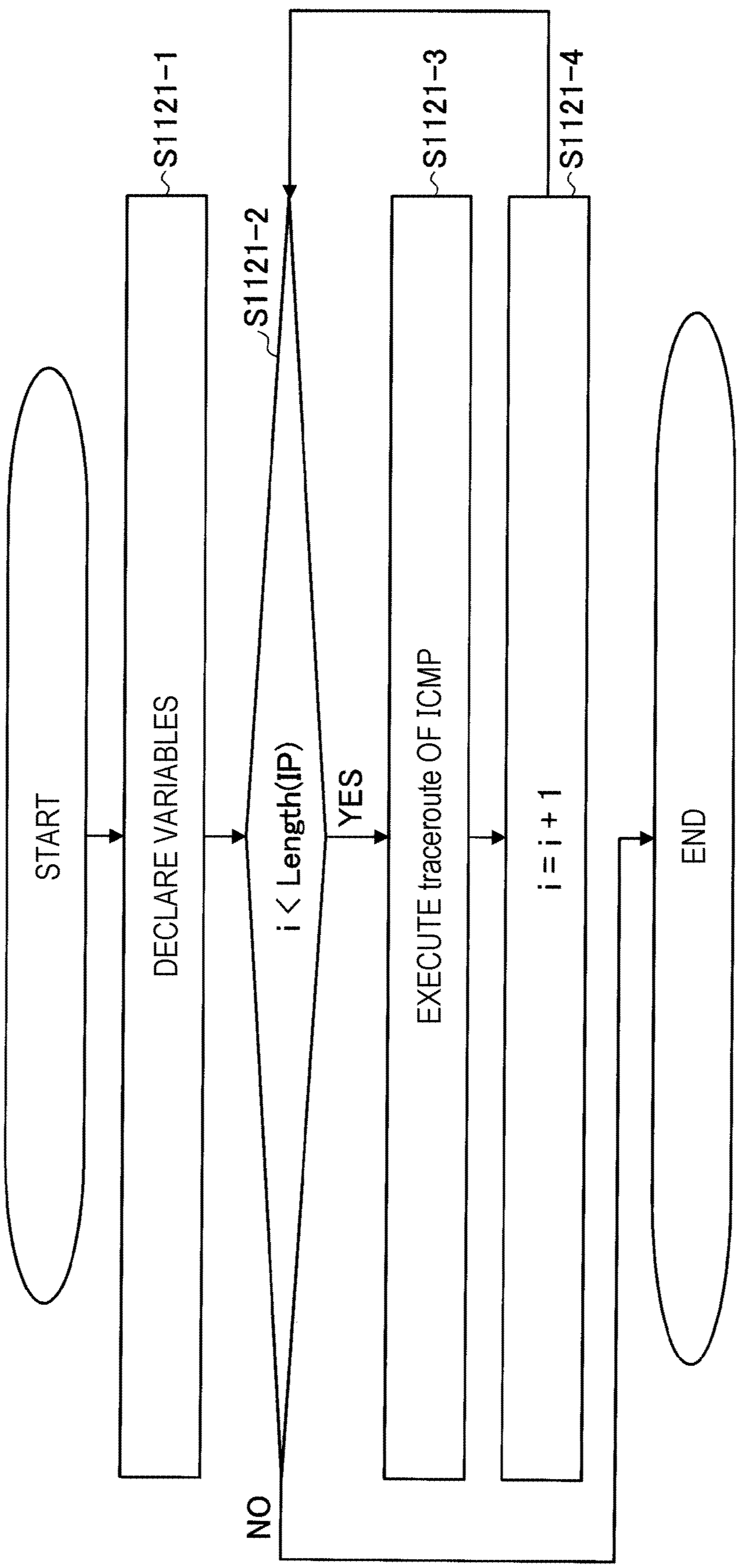
START
DECLARE VARIABLES
S1121-1
i < Length(IP)
S1121-2
YES
NO
EXECUTE traceroute OF ICMP
S1121-3
i = i + 1
S1121-4
END

**Fig. 60**

```
TRACING ROUTE TO 192.168.20.1.
NUMBER OF HOPS TO GO THROUGH IS AT MOST 30.

  1  1 ms  2 ms  1 ms  192.168.10.1

TRACE IS COMPLETED.

#---(REFERENCE) WHEN ROUTER EXISTS ON IN-VEHICLE NETWORK---#
TRACING ROUTE TO 192.168.10.4.
NUMBER OF HOPS TO GO THROUGH IS AT MOST 30.

  1  1 ms  2 ms  1 ms  192.168.10.140
  2  8 ms  7 ms  7 ms  192.168.20.4

TRACE IS COMPLETED.
```

Fig. 61

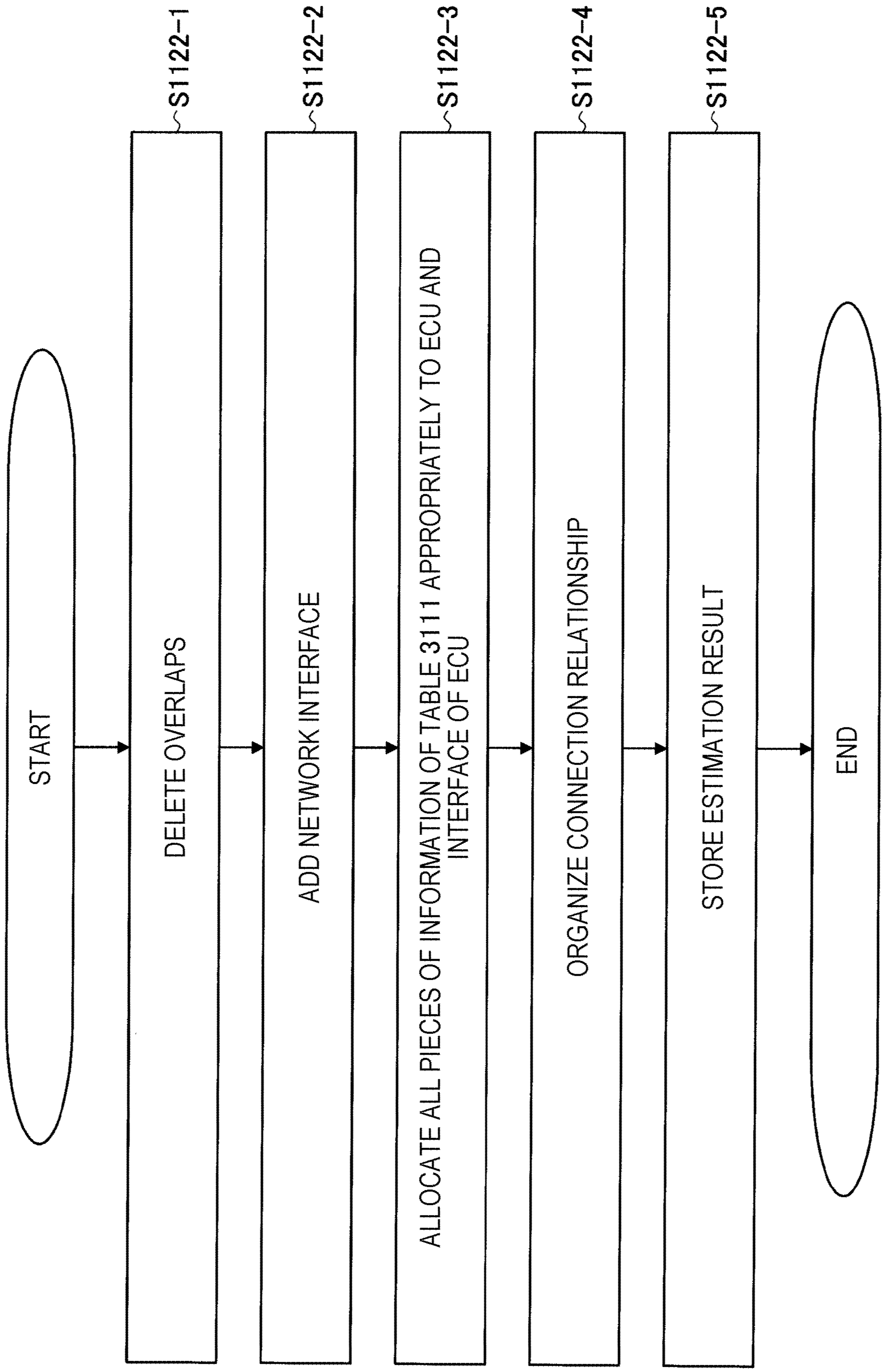
START
DELETE OVERLAPS
S1122-1
ADD NETWORK INTERFACE
S1122-2
ALLOCATE ALL PIECES OF INFORMATION OF TABLE 3111 APPROPRIATELY TO ECU AND INTERFACE OF ECU
S1122-3
ORGANIZE CONNECTION RELATIONSHIP
S1122-4
STORE ESTIMATION RESULT
S1122-5
END

Fig. 62

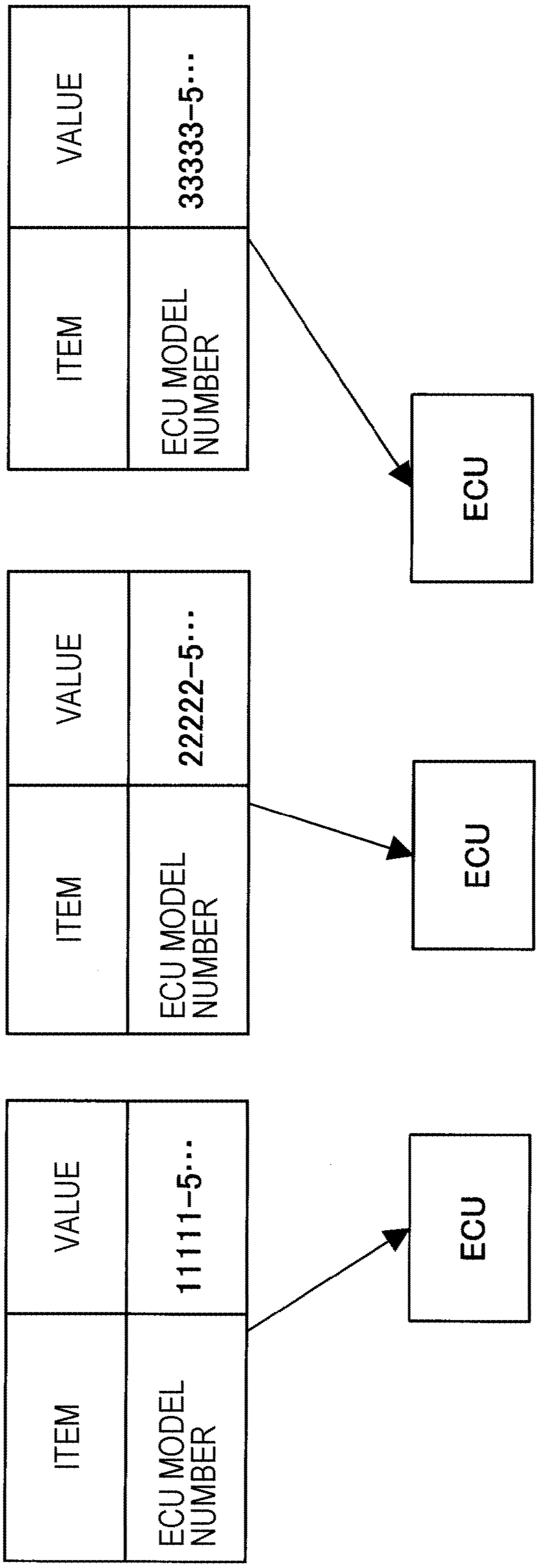
ITEM
VALUE
ECU MODEL NUMBER
33333-5…
ECU
ITEM
VALUE
ECU MODEL NUMBER
22222-5…
ECU
ITEM
VALUE
ECU MODEL NUMBER
11111-5…
ECU

Fig. 63

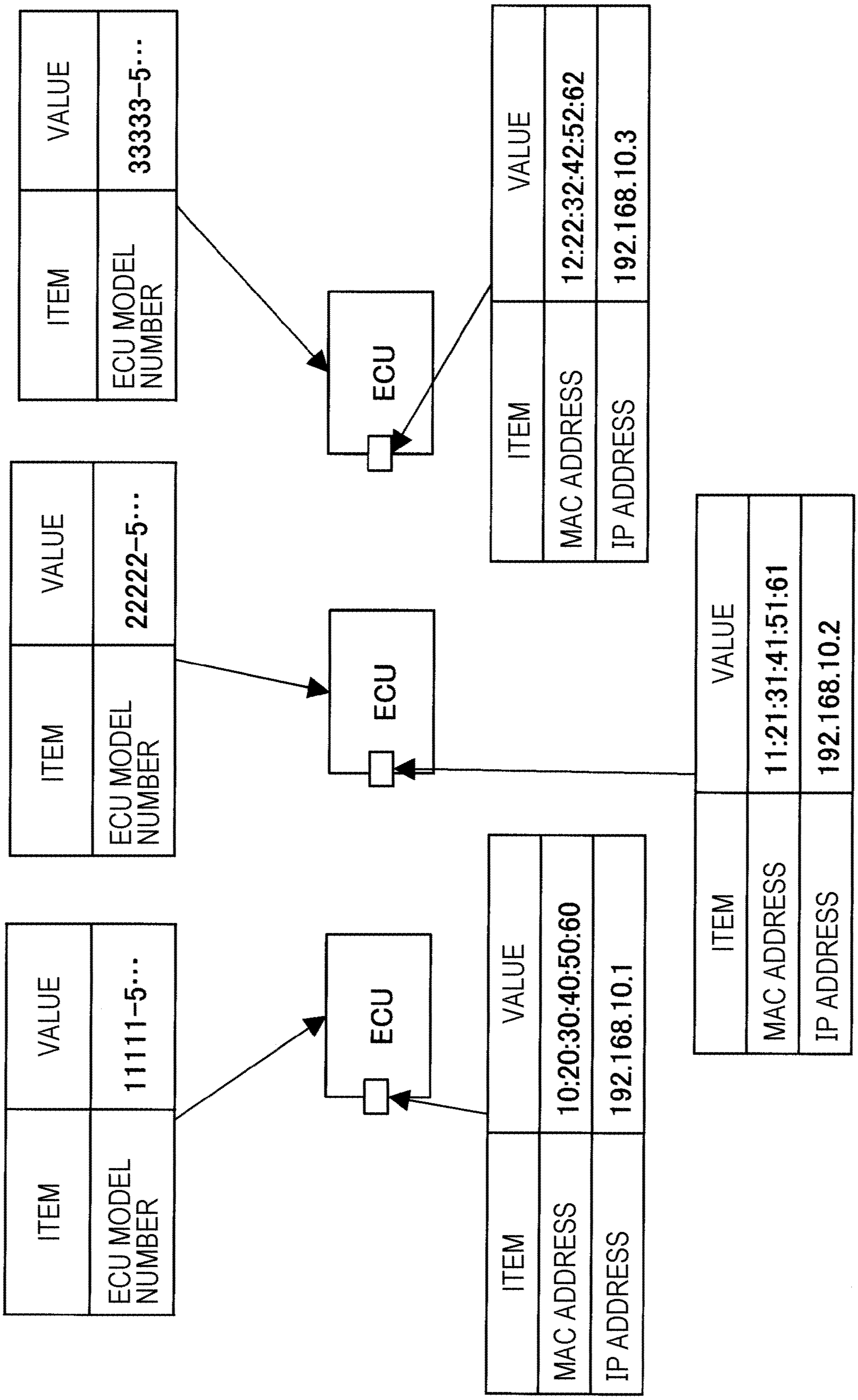
ITEM
VALUE
ECU MODEL NUMBER
11111-5…
ECU
ITEM
VALUE
MAC ADDRESS
10:20:30:40:50:60
IP ADDRESS
192.168.10.1
ITEM
VALUE
ECU MODEL NUMBER
22222-5…
ECU
ITEM
VALUE
MAC ADDRESS
11:21:31:41:51:61
IP ADDRESS
192.168.10.2
ITEM
VALUE
ECU MODEL NUMBER
33333-5…
ECU
ITEM
VALUE
MAC ADDRESS
12:22:32:42:52:62
IP ADDRESS
192.168.10.3

Fig. 64

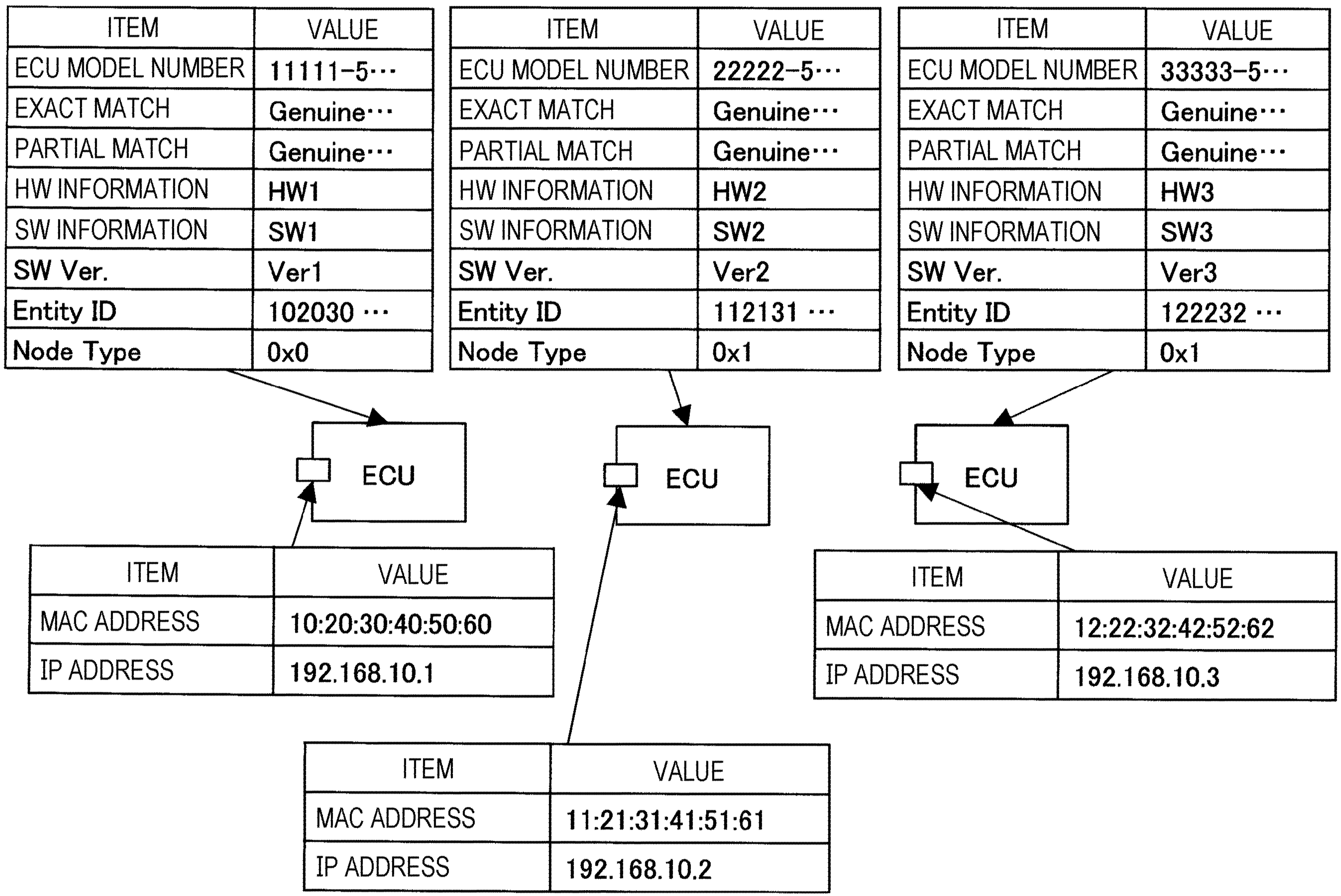
ITEM
VALUE
ECU MODEL NUMBER
11111-5···
EXACT MATCH
Genuine···
PARTIAL MATCH
Genuine···
HW INFORMATION
HW1
SW INFORMATION
SW1
SW Ver.
Ver1
Entity ID
102030 ···
Node Type
0x0
ITEM
VALUE
ECU MODEL NUMBER
22222-5···
EXACT MATCH
Genuine···
PARTIAL MATCH
Genuine···
HW INFORMATION
HW2
SW INFORMATION
SW2
SW Ver.
Ver2
Entity ID
112131 ···
Node Type
0x1
ITEM
VALUE
ECU MODEL NUMBER
33333-5···
EXACT MATCH
Genuine···
PARTIAL MATCH
Genuine···
HW INFORMATION
HW3
SW INFORMATION
SW3
SW Ver.
Ver3
Entity ID
122232 ···
Node Type
0x1
ECU
ECU
ECU
ITEM
VALUE
MAC ADDRESS
10:20:30:40:50:60
IP ADDRESS
192.168.10.1
ITEM
VALUE
MAC ADDRESS
12:22:32:42:52:62
IP ADDRESS
192.168.10.3
ITEM
VALUE
MAC ADDRESS
11:21:31:41:51:61
IP ADDRESS
192.168.10.2

Fig. 65

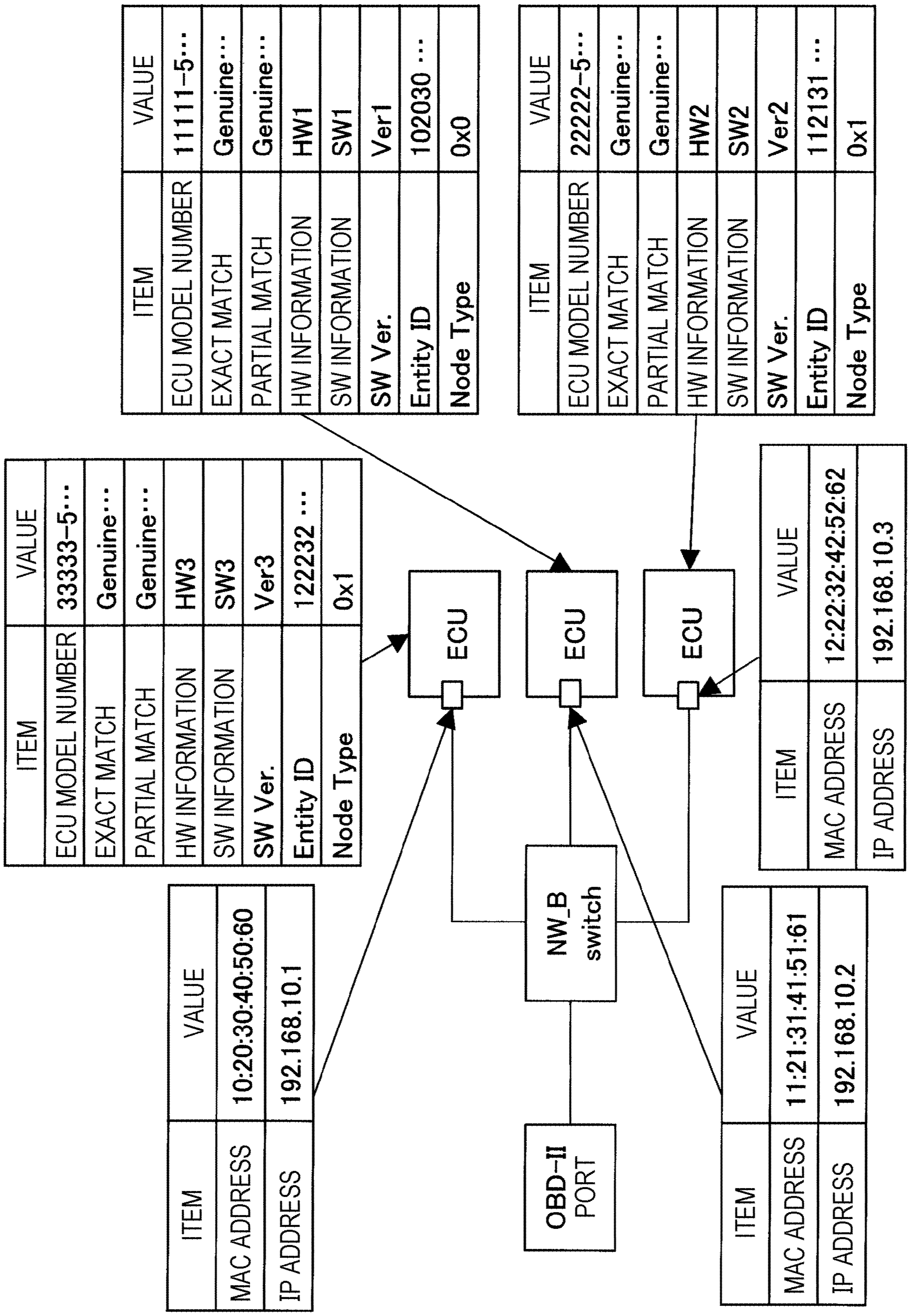
ITEM
VALUE
ECU MODEL NUMBER
11111-5…
EXACT MATCH
Genuine…
PARTIAL MATCH
Genuine…
HW INFORMATION
HW1
SW INFORMATION
SW1
SW Ver.
Ver1
Entity ID
102030 …
Node Type
0x0
ITEM
VALUE
ECU MODEL NUMBER
22222-5…
EXACT MATCH
Genuine…
PARTIAL MATCH
Genuine…
HW INFORMATION
HW2
SW INFORMATION
SW2
SW Ver.
Ver2
Entity ID
112131 …
Node Type
0x1
ITEM
VALUE
ECU MODEL NUMBER
33333-5…
EXACT MATCH
Genuine…
PARTIAL MATCH
Genuine…
HW INFORMATION
HW3
SW INFORMATION
SW3
SW Ver.
Ver3
Entity ID
122232 …
Node Type
0x1
ECU
ECU
ECU
ITEM
VALUE
MAC ADDRESS
12:22:32:42:52:62
IP ADDRESS
192.168.10.3
ITEM
VALUE
MAC ADDRESS
10:20:30:40:50:60
IP ADDRESS
192.168.10.1
NW_B
switch
OBD-II
PORT
ITEM
VALUE
MAC ADDRESS
11:21:31:41:51:61
IP ADDRESS
192.168.10.2

# Fig. 66

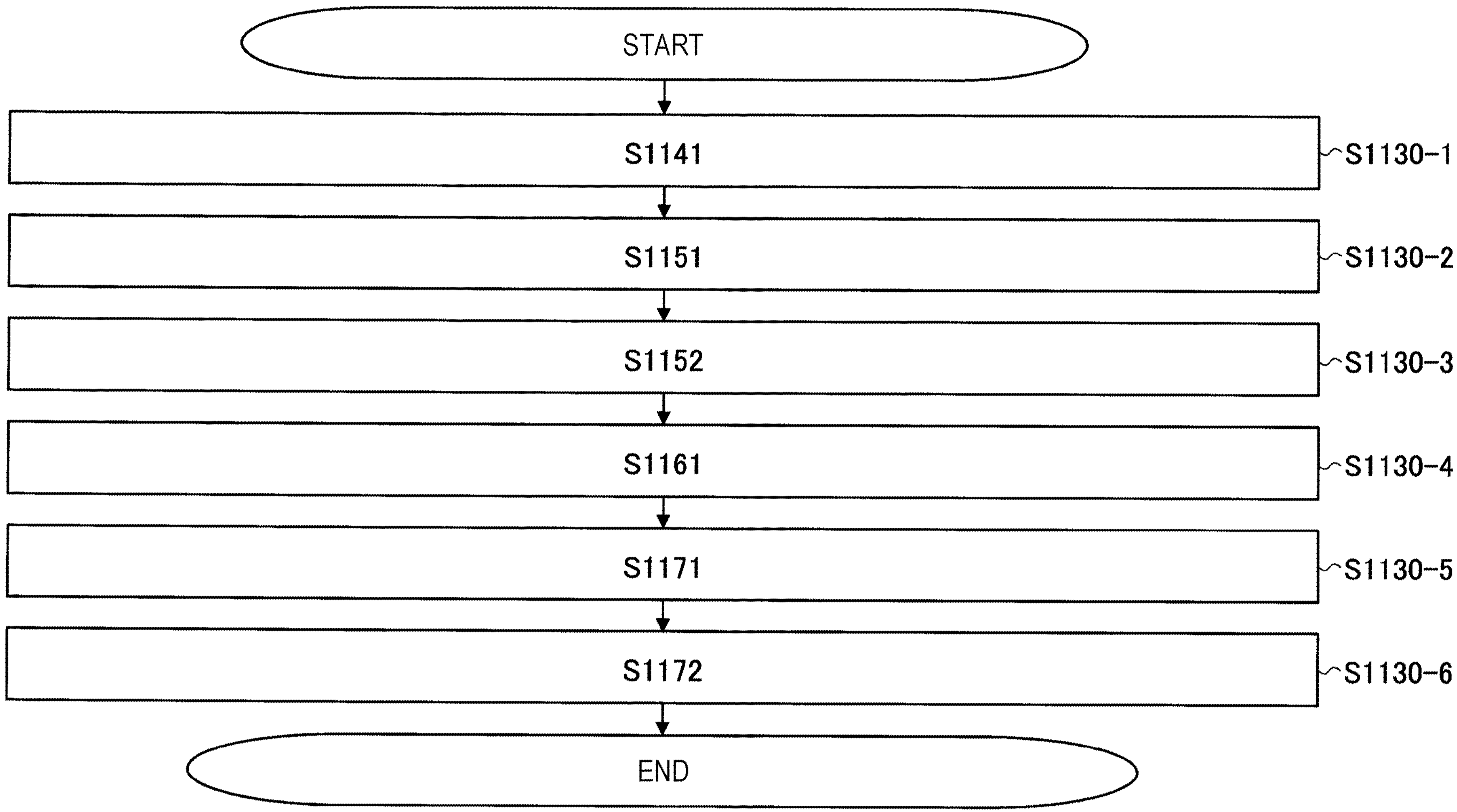
START
S1141
S1130-1
S1151
S1130-2
S1152
S1130-3
S1161
S1130-4
S1171
S1130-5
S1172
S1130-6
END

Fig. 67

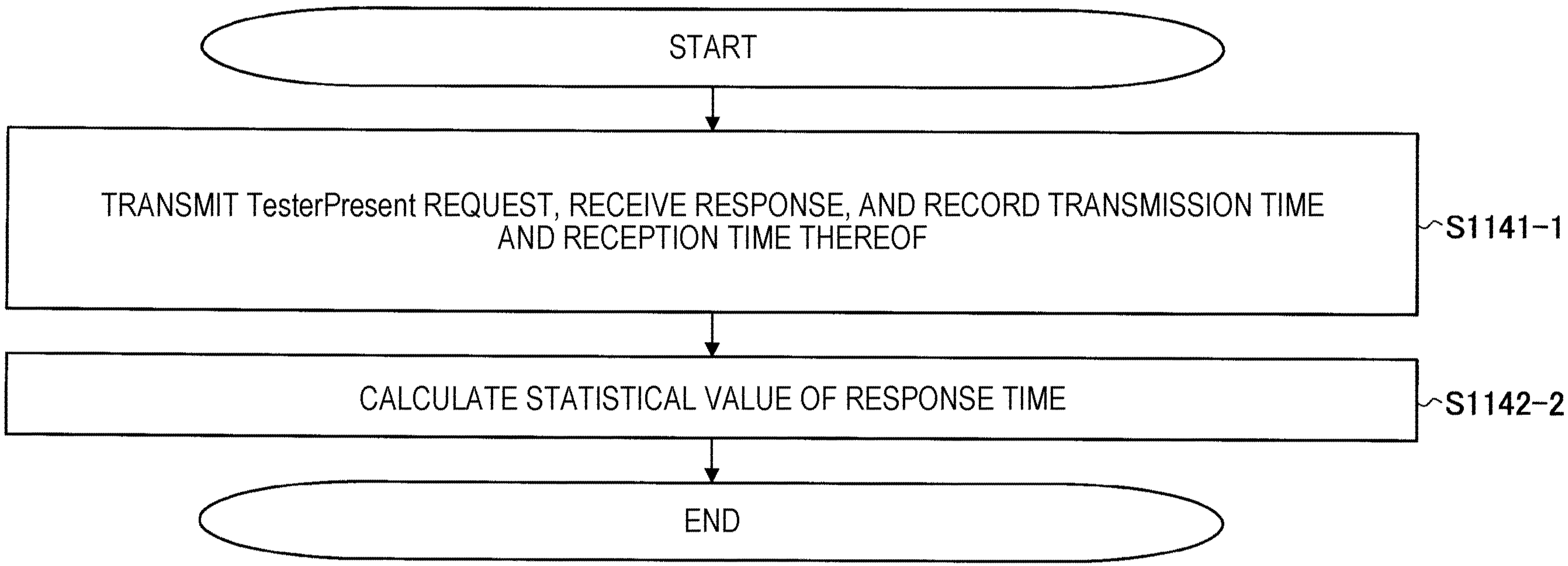
START
TRANSMIT TesterPresent REQUEST, RECEIVE RESPONSE, AND RECORD TRANSMISSION TIME AND RECEPTION TIME THEREOF
S1141-1
CALCULATE STATISTICAL VALUE OF RESPONSE TIME
S1142-2
END

# Fig. 68

| (TRANSMISSION/RECEPTION) TIME | NW_A-ID | FLAG (TRANSMISSION/RECEPTION) |
|---|---|---|
| 1612489417.0000 | 0x700 | TRANSMISSION |
| 1612489417.0010 | 0x708 | RECEPTION |
| 1612489417.0200 | 0x700 | TRANSMISSION |
| 1612489417.0015 | 0x708 | RECEPTION |
| 1612489417.0400 | 0x700 | TRANSMISSION |
| 1612489417.0412 | 0x708 | RECEPTION |
| 1612489417.0600 | 0x700 | TRANSMISSION |
| 1612489417.0609 | 0x708 | RECEPTION |
| ⋮ | ⋮ | ⋮ |

# Fig. 69

TABLE 3141

| NW_A-ID | AVERAGE VALUE [MILLISECONDS] | MAXIMUM VALUE [MILLISECONDS] | MINIMUM VALUE [MILLISECONDS] | STANDARD DEVIATION [MILLISECONDS] |
|---|---|---|---|---|
| 0x700 | 0.010 | 0.012 | 0.008 | 0.002 |
| 0x724 | 0.020 | 0.022 | 0.018 | 0.002 |
| 0x750 | 0.015 | 0.017 | 0.013 | 0.002 |
| 0x7E0 | 0.005 | 0.007 | 0.003 | 0.002 |
| 0x7E1 | 0.030 | 0.032 | 0.028 | 0.002 |

Fig. 70

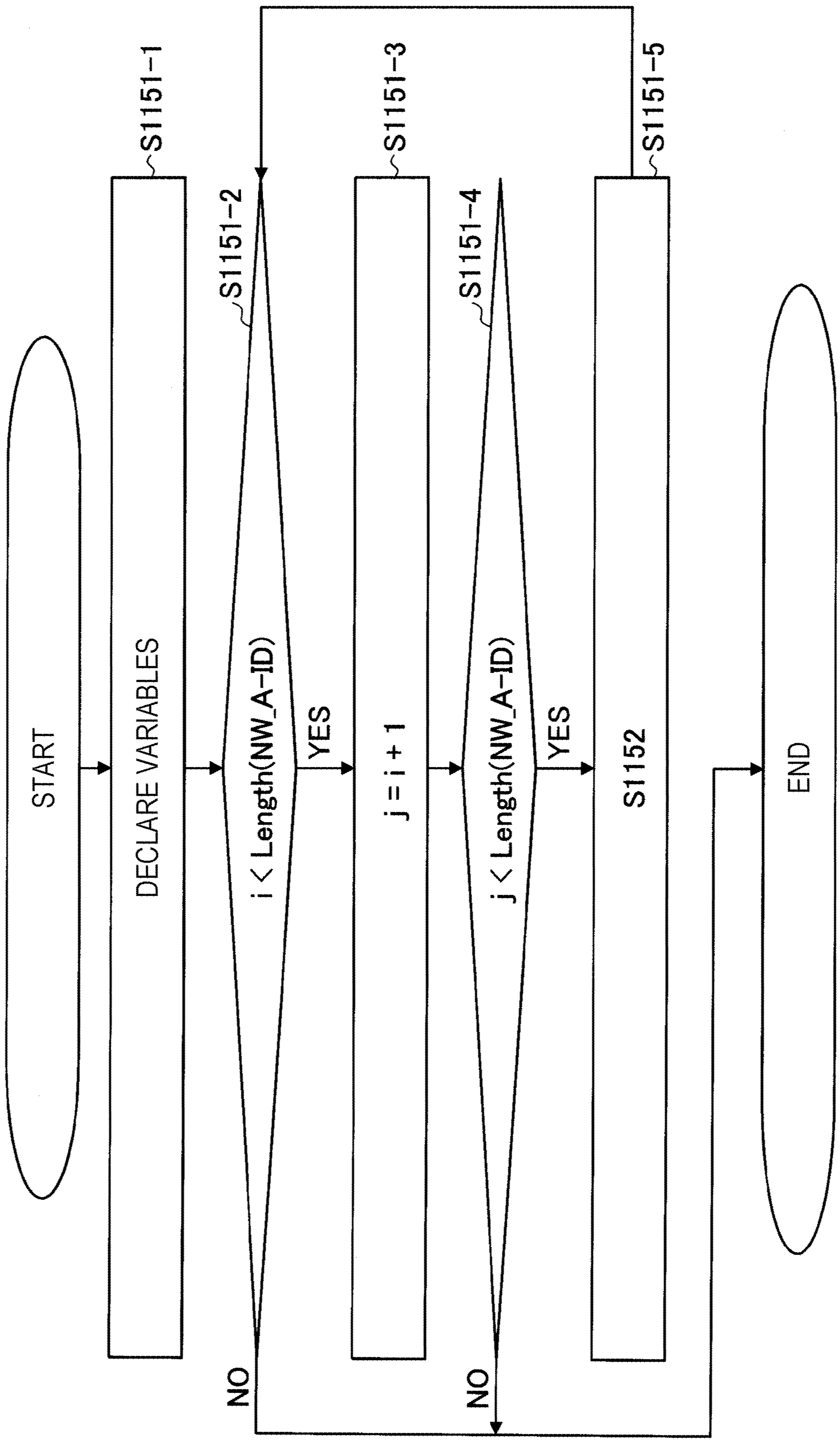
START
DECLARE VARIABLES
S1151-1
i < Length(NW_A-ID)
S1151-2
YES
NO
j = i + 1
S1151-3
j < Length(NW_A-ID)
S1151-4
YES
NO
S1152
S1151-5
END

Fig. 71

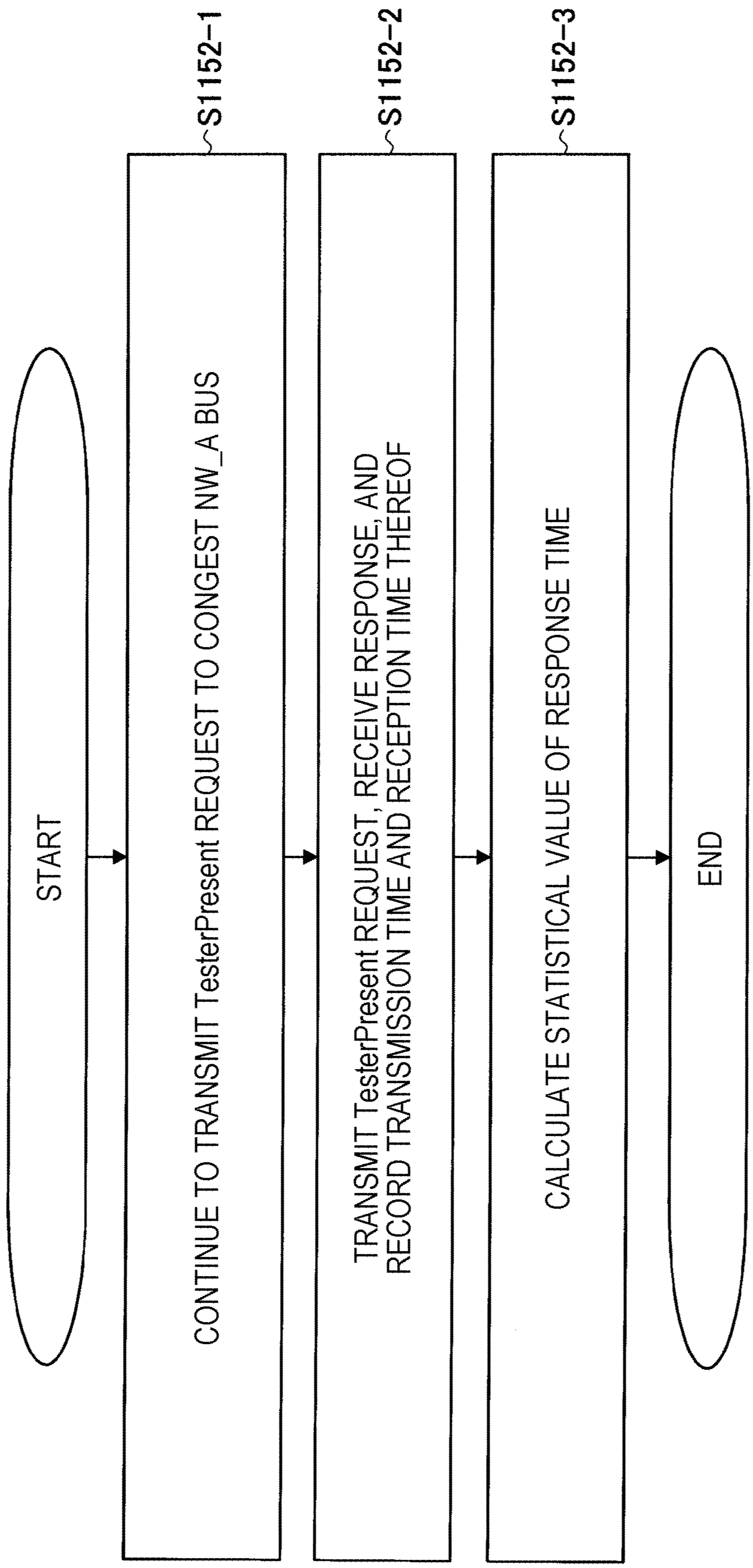
START
CONTINUE TO TRANSMIT TesterPresent REQUEST TO CONGEST NW_A BUS
S1152-1
TRANSMIT TesterPresent REQUEST, RECEIVE RESPONSE, AND RECORD TRANSMISSION TIME AND RECEPTION TIME THEREOF
S1152-2
CALCULATE STATISTICAL VALUE OF RESPONSE TIME
S1152-3
END

# Fig. 72

| (TRANSMISSION/RECEPTION) TIME | NW_A-ID | FLAG (TRANSMISSION/RECEPTION) |
|---|---|---|
| 1612489417.0000 | 0x700 | TRANSMISSION |
| 1612489417.0050 | 0x708 | RECEPTION |
| 1612489417.0200 | 0x700 | TRANSMISSION |
| 1612489417.0065 | 0x708 | RECEPTION |
| 1612489417.0400 | 0x700 | TRANSMISSION |
| 1612489417.0462 | 0x708 | RECEPTION |
| 1612489417.0600 | 0x700 | TRANSMISSION |
| 1612489417.0659 | 0x708 | RECEPTION |
| ⋮ | ⋮ | ⋮ |

# Fig. 73

TABLE 3151

| CONGESTION NW_A-ID | STATISTICAL VALUE CALCULATION TARGET NW_A-ID | AVERAGE VALUE [MILLISECONDS] | MAXIMUM VALUE [MILLISECONDS] | MINIMUM VALUE [MILLISECONDS] | STANDARD DEVIATION [MILLISECONDS] |
|---|---|---|---|---|---|
| 0x700 | 0x724 | 0.060 | 0.100 | 0.020 | 0.040 |
| 0x700 | 0x750 | 0.015 | 0.017 | 0.013 | 0.002 |
| 0x700 | 0x7E0 | 0.060 | 0.100 | 0.020 | 0.040 |
| 0x700 | 0x7E1 | 0.030 | 0.032 | 0.028 | 0.002 |
| 0x724 | 0x750 | 0.015 | 0.017 | 0.013 | 0.002 |
| 0x724 | 0x7E0 | 0.060 | 0.100 | 0.020 | 0.040 |
| 0x724 | 0x7E1 | 0.015 | 0.017 | 0.013 | 0.002 |
| 0x750 | 0x7E0 | 0.005 | 0.007 | 0.003 | 0.002 |
| 0x750 | 0x7E1 | 0.060 | 0.100 | 0.020 | 0.040 |
| 0x7E0 | 0x7E1 | 0.030 | 0.032 | 0.028 | 0.002 |

Fig. 74

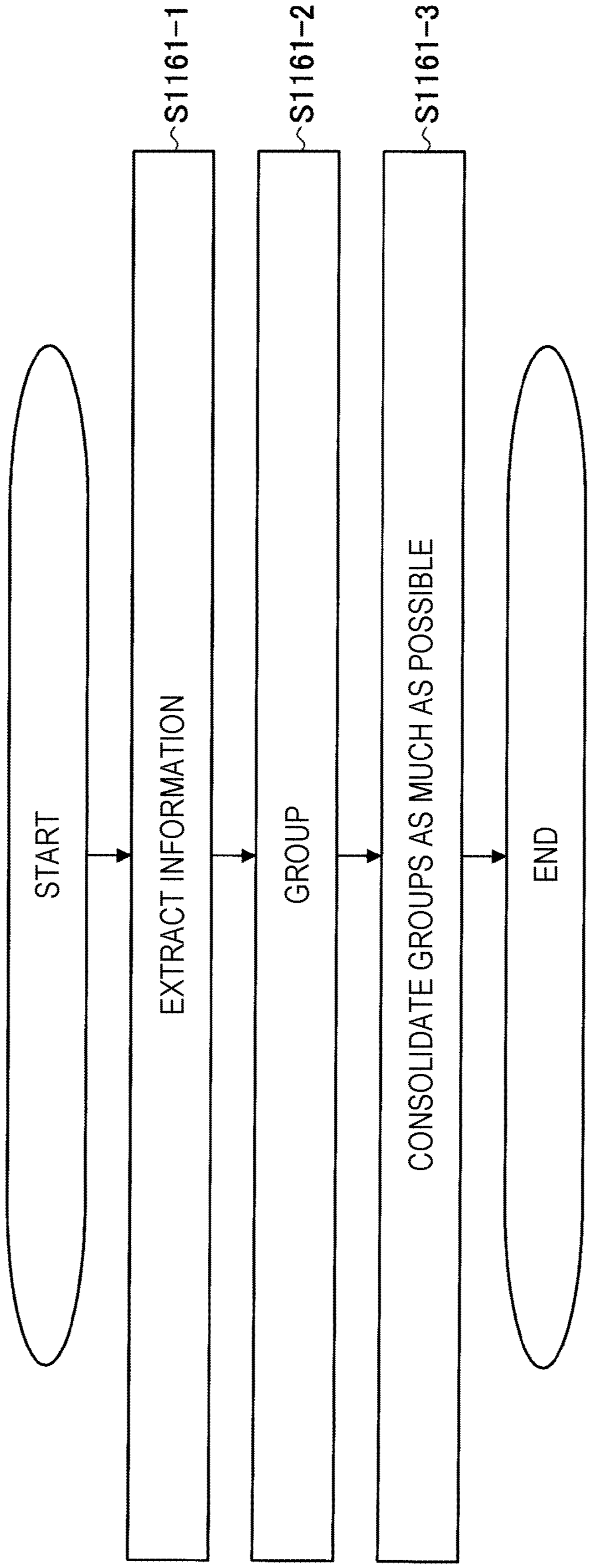
START
EXTRACT INFORMATION
S1161-1
GROUP
S1161-2
CONSOLIDATE GROUPS AS MUCH AS POSSIBLE
S1161-3
END

# Fig. 75

TABLE 3161

| CONGESTION NW_A-ID | STATISTICAL VALUE CALCULATION TARGET NW_A-ID | AVERAGE VALUE [MILLISECONDS] | MAXIMUM VALUE [MILLISECONDS] | MINIMUM VALUE [MILLISECONDS] | STANDARD DEVIATION [MILLISECONDS] |
|---|---|---|---|---|---|
| 0x700 | 0x724 | 0.060 | 0.100 | 0.020 | 0.040 |
| 0x700 | 0x7E0 | 0.060 | 0.100 | 0.020 | 0.040 |
| 0x724 | 0x7E0 | 0.060 | 0.100 | 0.020 | 0.040 |
| 0x750 | 0x7E1 | 0.060 | 0.100 | 0.020 | 0.040 |

# Fig. 76

TABLE 3162

| GROUP | NW_A-ID |
|---|---|
| 1 | 0x700, 0x724, 0x7E0 |
| 2 | 0x750, 0x7E1 |

Fig. 77

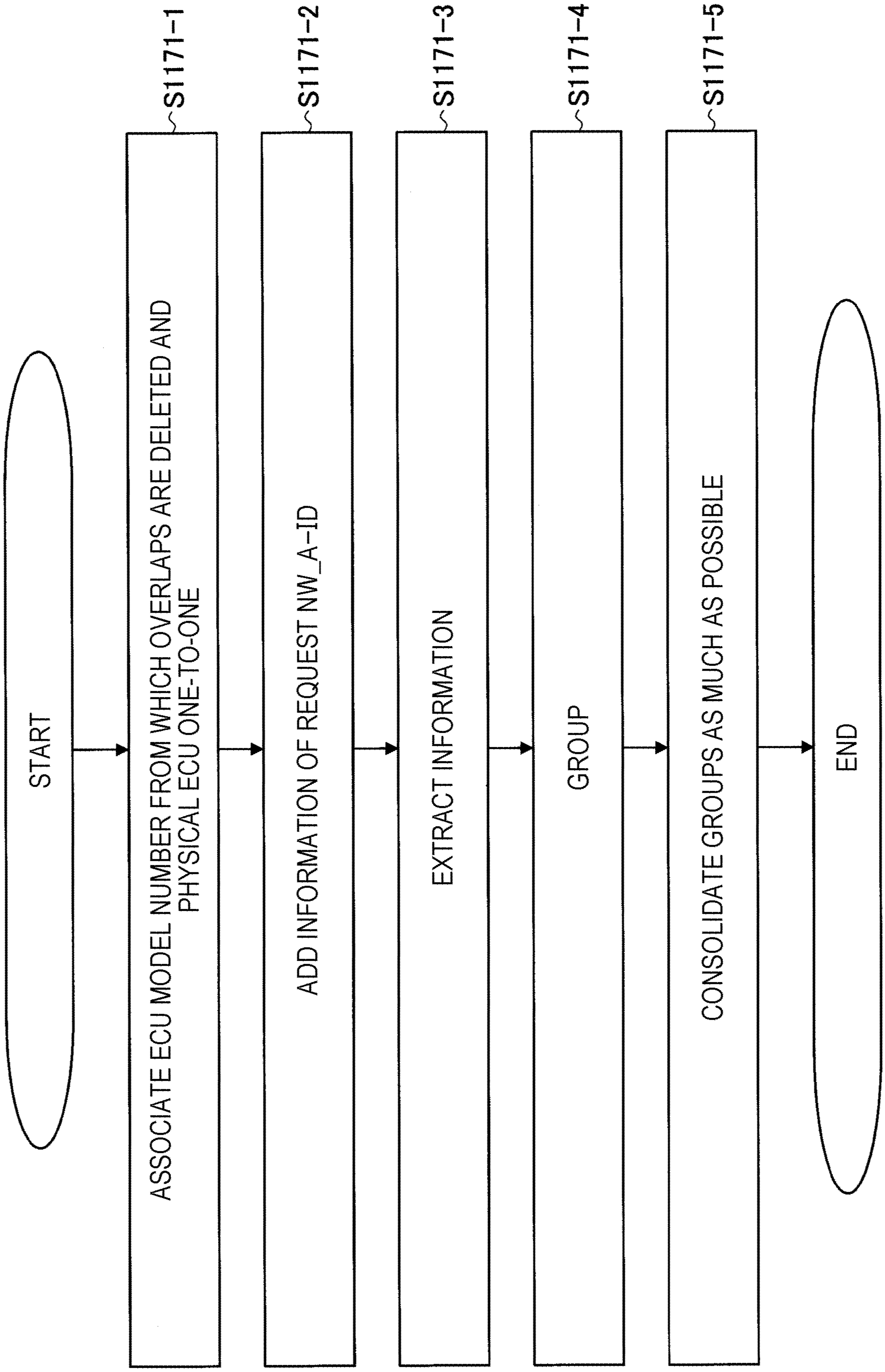
START
ASSOCIATE ECU MODEL NUMBER FROM WHICH OVERLAPS ARE DELETED AND PHYSICAL ECU ONE-TO-ONE
S1171–1
ADD INFORMATION OF REQUEST NW_A–ID
S1171–2
EXTRACT INFORMATION
S1171–3
GROUP
S1171–4
CONSOLIDATE GROUPS AS MUCH AS POSSIBLE
S1171–5
END

Fig. 78

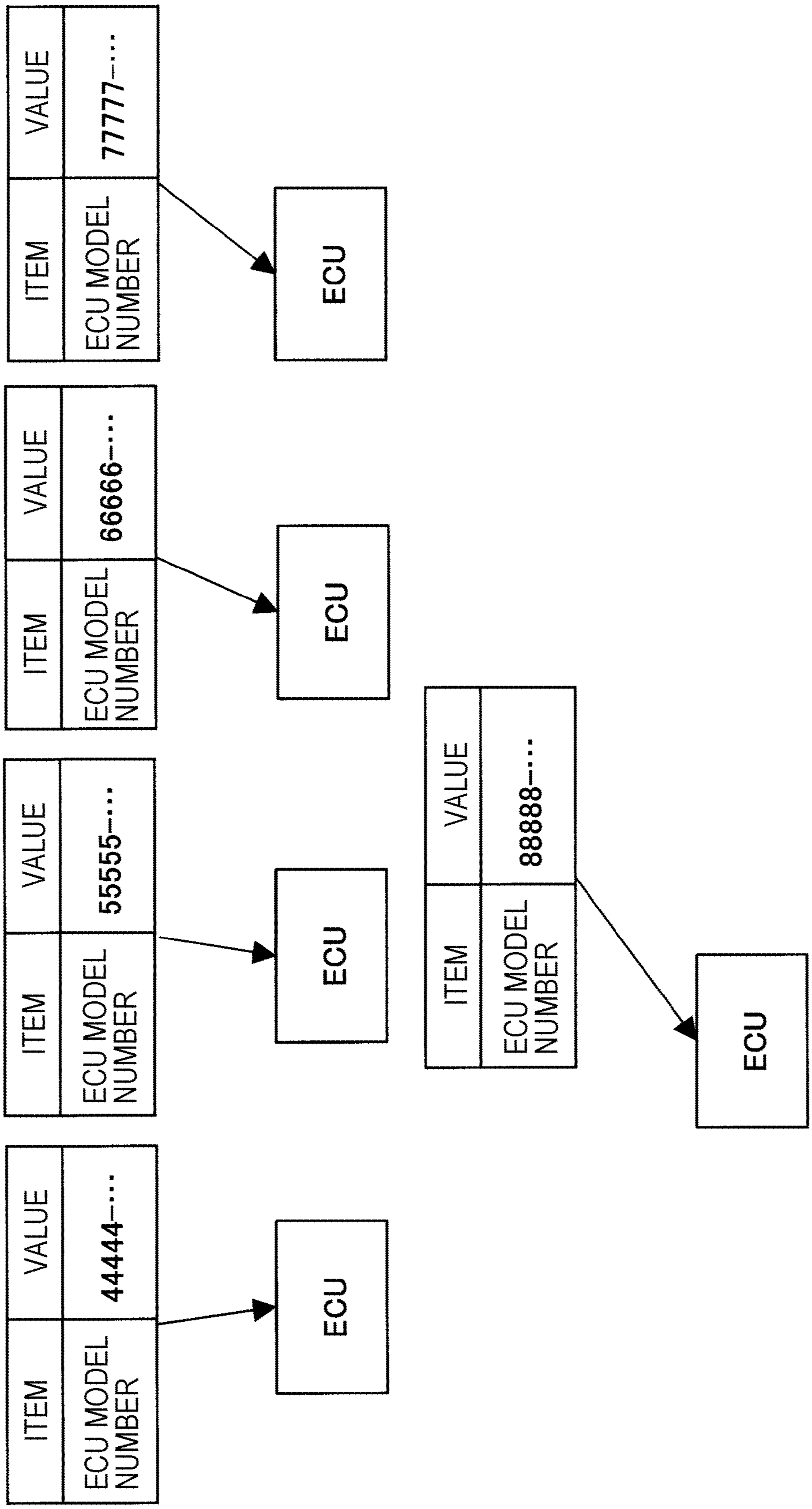
ITEM
VALUE
ECU MODEL NUMBER
44444-....
ECU
ITEM
VALUE
ECU MODEL NUMBER
55555-....
ECU
ITEM
VALUE
ECU MODEL NUMBER
66666-....
ECU
ITEM
VALUE
ECU MODEL NUMBER
77777-....
ECU
ITEM
VALUE
ECU MODEL NUMBER
88888-....
ECU

Fig. 79

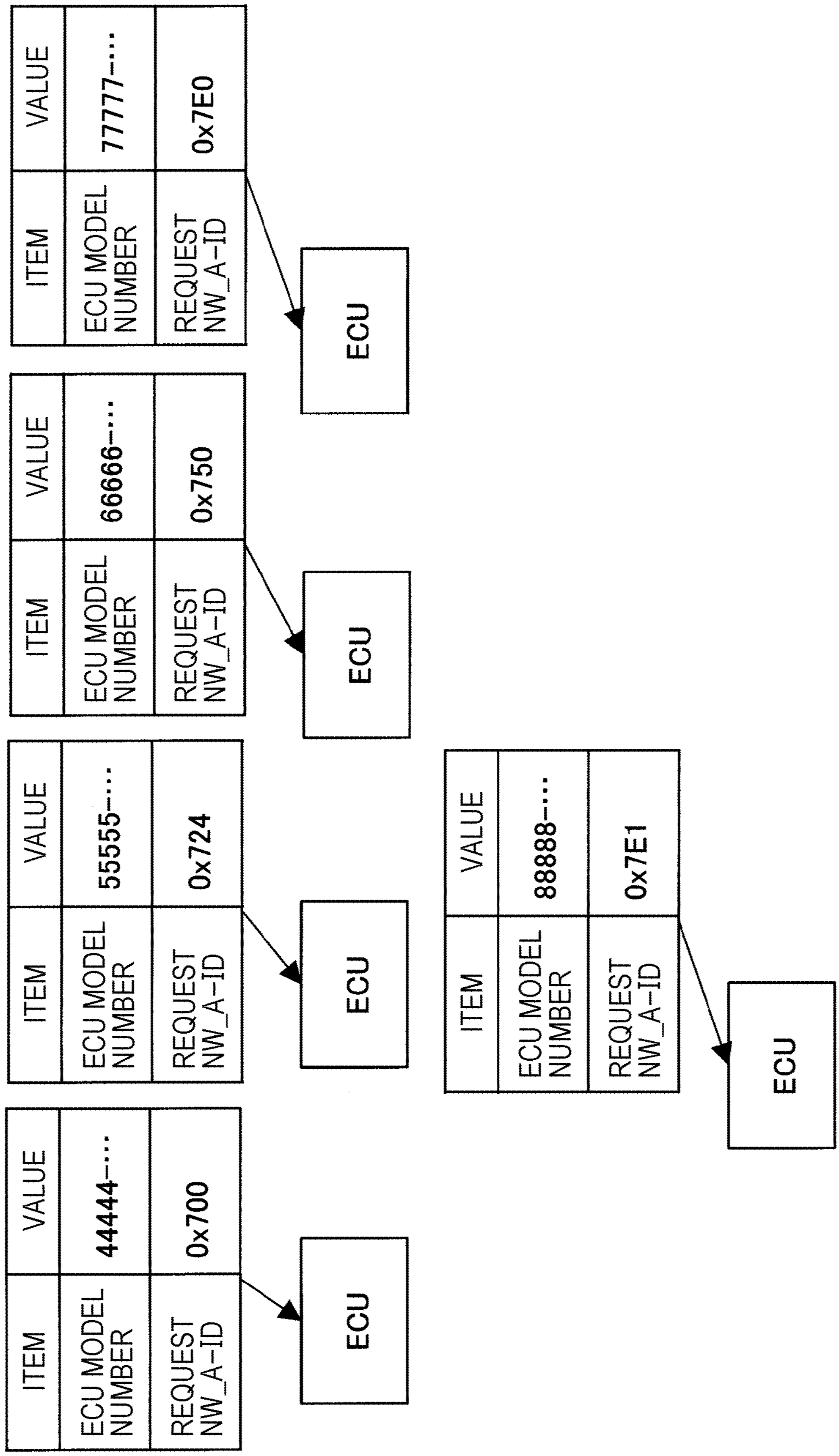

ITEM
VALUE
ECU MODEL NUMBER
44444-…
REQUEST NW_A-ID
0x700
ECU
ITEM
VALUE
ECU MODEL NUMBER
55555-…
REQUEST NW_A-ID
0x724
ECU
ITEM
VALUE
ECU MODEL NUMBER
66666-…
REQUEST NW_A-ID
0x750
ECU
ITEM
VALUE
ECU MODEL NUMBER
77777-…
REQUEST NW_A-ID
0x7E0
ECU
ITEM
VALUE
ECU MODEL NUMBER
88888-…
REQUEST NW_A-ID
0x7E1
ECU

Fig. 80

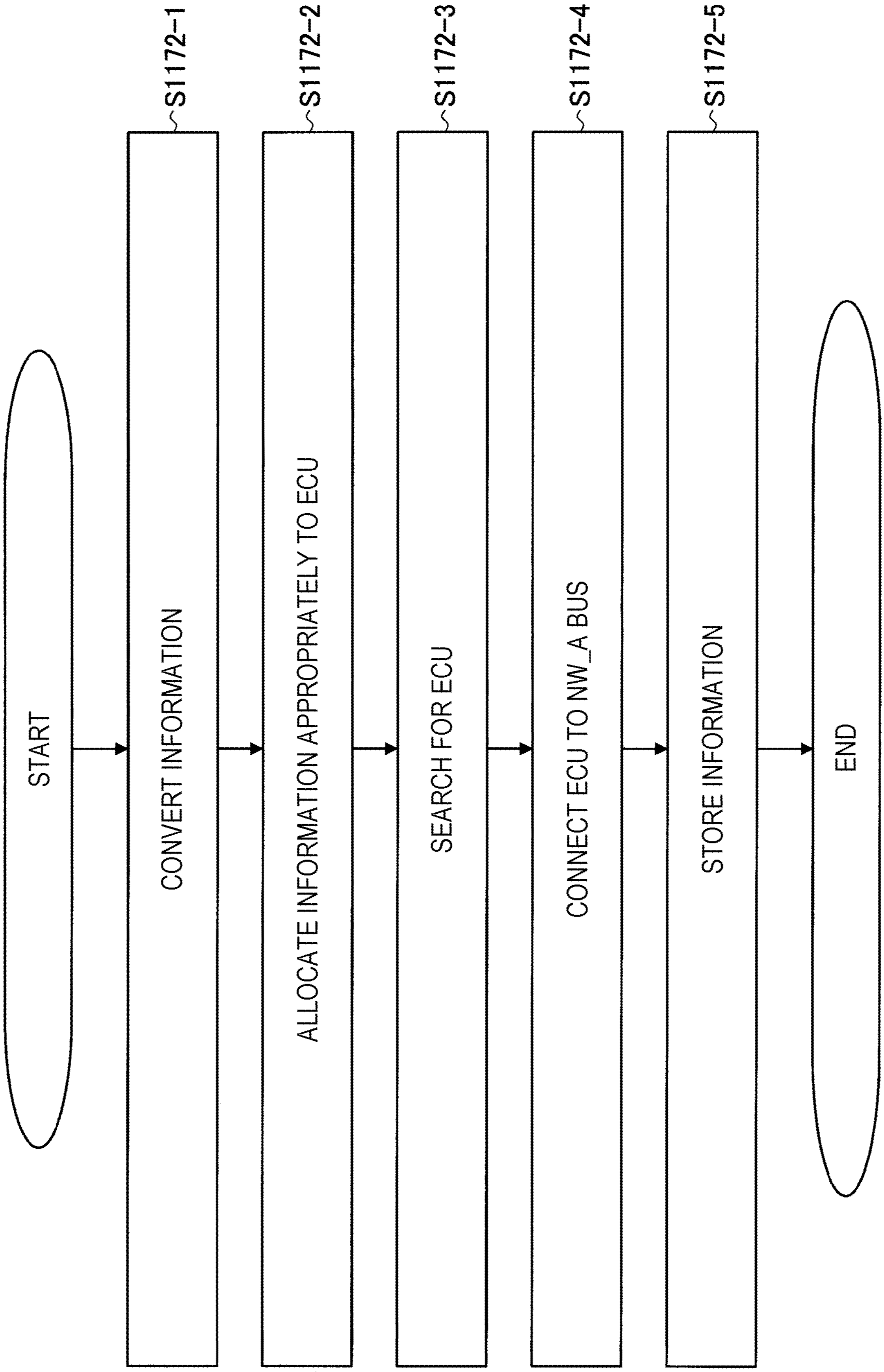
START
CONVERT INFORMATION
S1172-1
ALLOCATE INFORMATION APPROPRIATELY TO ECU
S1172-2
SEARCH FOR ECU
S1172-3
CONNECT ECU TO NW_A BUS
S1172-4
STORE INFORMATION
S1172-5
END

Fig. 81

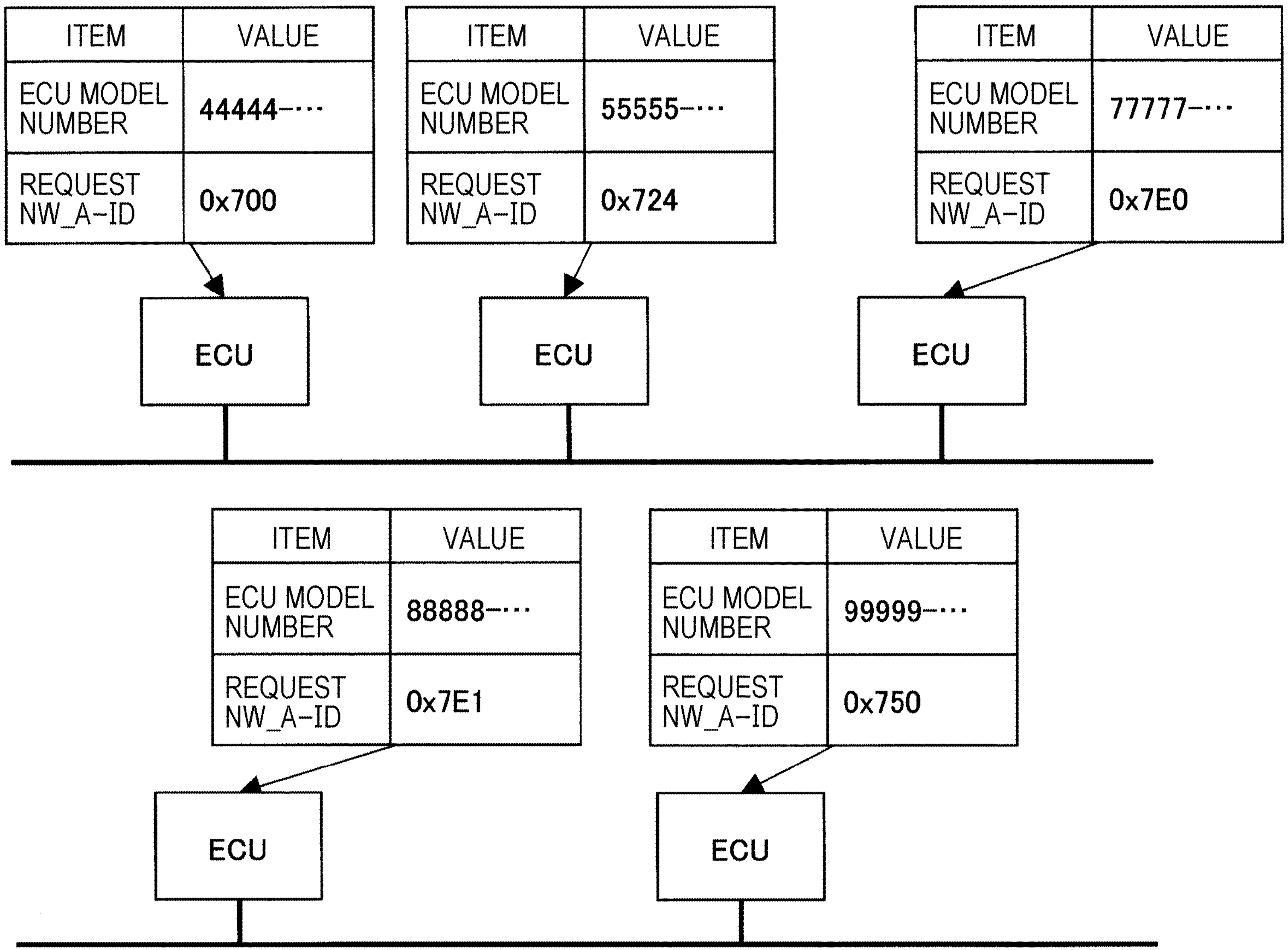
ITEM
VALUE
ECU MODEL NUMBER
44444-…
REQUEST NW_A-ID
0x700
ITEM
VALUE
ECU MODEL NUMBER
55555-…
REQUEST NW_A-ID
0x724
ITEM
VALUE
ECU MODEL NUMBER
77777-…
REQUEST NW_A-ID
0x7E0
ECU
ECU
ECU
ITEM
VALUE
ECU MODEL NUMBER
88888-…
REQUEST NW_A-ID
0x7E1
ITEM
VALUE
ECU MODEL NUMBER
99999-…
REQUEST NW_A-ID
0x750
ECU
ECU

# Fig. 82

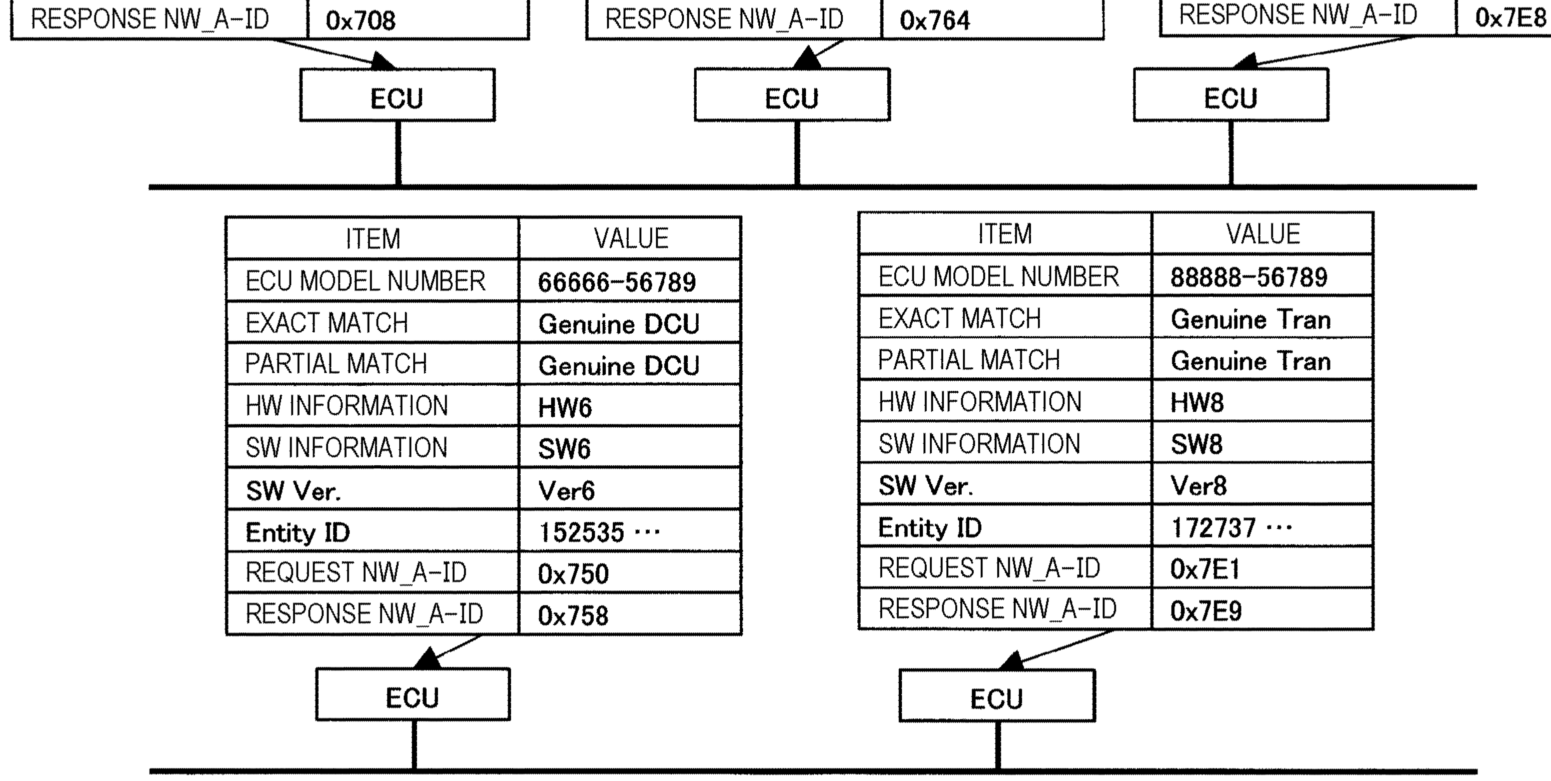


| ITEM | VALUE |
|---|---|
| ECU MODEL NUMBER | 44444-56789 |
| EXACT MATCH | Genuine DCU |
| PARTIAL MATCH | Genuine DCU |
| HW INFORMATION | HW4 |
| SW INFORMATION | SW4 |
| SW Ver. | Ver4 |
| Entity ID | 132333 ··· |
| REQUEST NW_A-ID | 0x700 |
| RESPONSE NW_A-ID | 0x708 |

| ITEM | VALUE |
|---|---|
| ECU MODEL NUMBER | 55555-56789 |
| EXACT MATCH | Genuine Door |
| PARTIAL MATCH | Genuine Door |
| HW INFORMATION | HW5 |
| SW INFORMATION | SW5 |
| SW Ver. | Ver5 |
| Entity ID | 142434 ··· |
| REQUEST NW_A-ID | 0x724 |
| RESPONSE NW_A-ID | 0x764 |

| ITEM | VALUE |
|---|---|
| ECU MODEL NUMBER | 77777-56789 |
| EXACT MATCH | Genuine Eng |
| PARTIAL MATCH | Genuine Eng |
| HW INFORMATION | HW7 |
| SW INFORMATION | SW7 |
| SW Ver. | Ver7 |
| Entity ID | 162636 ··· |
| REQUEST NW_A-ID | 0x7E0 |
| RESPONSE NW_A-ID | 0x7E8 |

| ITEM | VALUE |
|---|---|
| ECU MODEL NUMBER | 66666-56789 |
| EXACT MATCH | Genuine DCU |
| PARTIAL MATCH | Genuine DCU |
| HW INFORMATION | HW6 |
| SW INFORMATION | SW6 |
| SW Ver. | Ver6 |
| Entity ID | 152535 ··· |
| REQUEST NW_A-ID | 0x750 |
| RESPONSE NW_A-ID | 0x758 |

| ITEM | VALUE |
|---|---|
| ECU MODEL NUMBER | 88888-56789 |
| EXACT MATCH | Genuine Tran |
| PARTIAL MATCH | Genuine Tran |
| HW INFORMATION | HW8 |
| SW INFORMATION | SW8 |
| SW Ver. | Ver8 |
| Entity ID | 172737 ··· |
| REQUEST NW_A-ID | 0x7E1 |
| RESPONSE NW_A-ID | 0x7E9 |

# Fig. 83

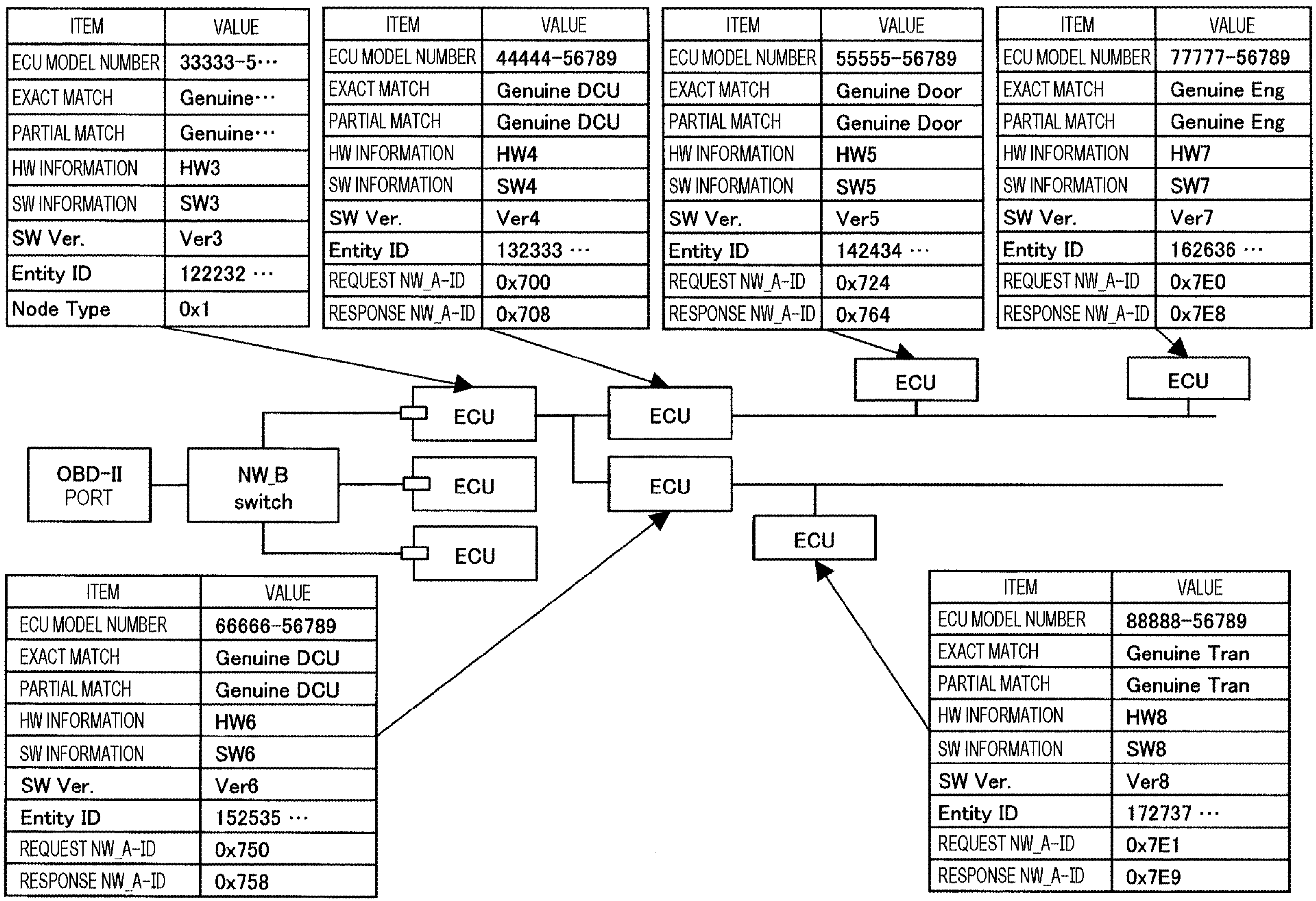


| ITEM | VALUE |
|---|---|
| ECU MODEL NUMBER | 33333-5··· |
| EXACT MATCH | Genuine··· |
| PARTIAL MATCH | Genuine··· |
| HW INFORMATION | HW3 |
| SW INFORMATION | SW3 |
| SW Ver. | Ver3 |
| Entity ID | 122232 ··· |
| Node Type | 0x1 |

| ITEM | VALUE |
|---|---|
| ECU MODEL NUMBER | 44444-56789 |
| EXACT MATCH | Genuine DCU |
| PARTIAL MATCH | Genuine DCU |
| HW INFORMATION | HW4 |
| SW INFORMATION | SW4 |
| SW Ver. | Ver4 |
| Entity ID | 132333 ··· |
| REQUEST NW_A-ID | 0x700 |
| RESPONSE NW_A-ID | 0x708 |

| ITEM | VALUE |
|---|---|
| ECU MODEL NUMBER | 55555-56789 |
| EXACT MATCH | Genuine Door |
| PARTIAL MATCH | Genuine Door |
| HW INFORMATION | HW5 |
| SW INFORMATION | SW5 |
| SW Ver. | Ver5 |
| Entity ID | 142434 ··· |
| REQUEST NW_A-ID | 0x724 |
| RESPONSE NW_A-ID | 0x764 |

| ITEM | VALUE |
|---|---|
| ECU MODEL NUMBER | 77777-56789 |
| EXACT MATCH | Genuine Eng |
| PARTIAL MATCH | Genuine Eng |
| HW INFORMATION | HW7 |
| SW INFORMATION | SW7 |
| SW Ver. | Ver7 |
| Entity ID | 162636 ··· |
| REQUEST NW_A-ID | 0x7E0 |
| RESPONSE NW_A-ID | 0x7E8 |

| ITEM | VALUE |
|---|---|
| ECU MODEL NUMBER | 66666-56789 |
| EXACT MATCH | Genuine DCU |
| PARTIAL MATCH | Genuine DCU |
| HW INFORMATION | HW6 |
| SW INFORMATION | SW6 |
| SW Ver. | Ver6 |
| Entity ID | 152535 ··· |
| REQUEST NW_A-ID | 0x750 |
| RESPONSE NW_A-ID | 0x758 |

| ITEM | VALUE |
|---|---|
| ECU MODEL NUMBER | 88888-56789 |
| EXACT MATCH | Genuine Tran |
| PARTIAL MATCH | Genuine Tran |
| HW INFORMATION | HW8 |
| SW INFORMATION | SW8 |
| SW Ver. | Ver8 |
| Entity ID | 172737 ··· |
| REQUEST NW_A-ID | 0x7E1 |
| RESPONSE NW_A-ID | 0x7E9 |

Fig. 84

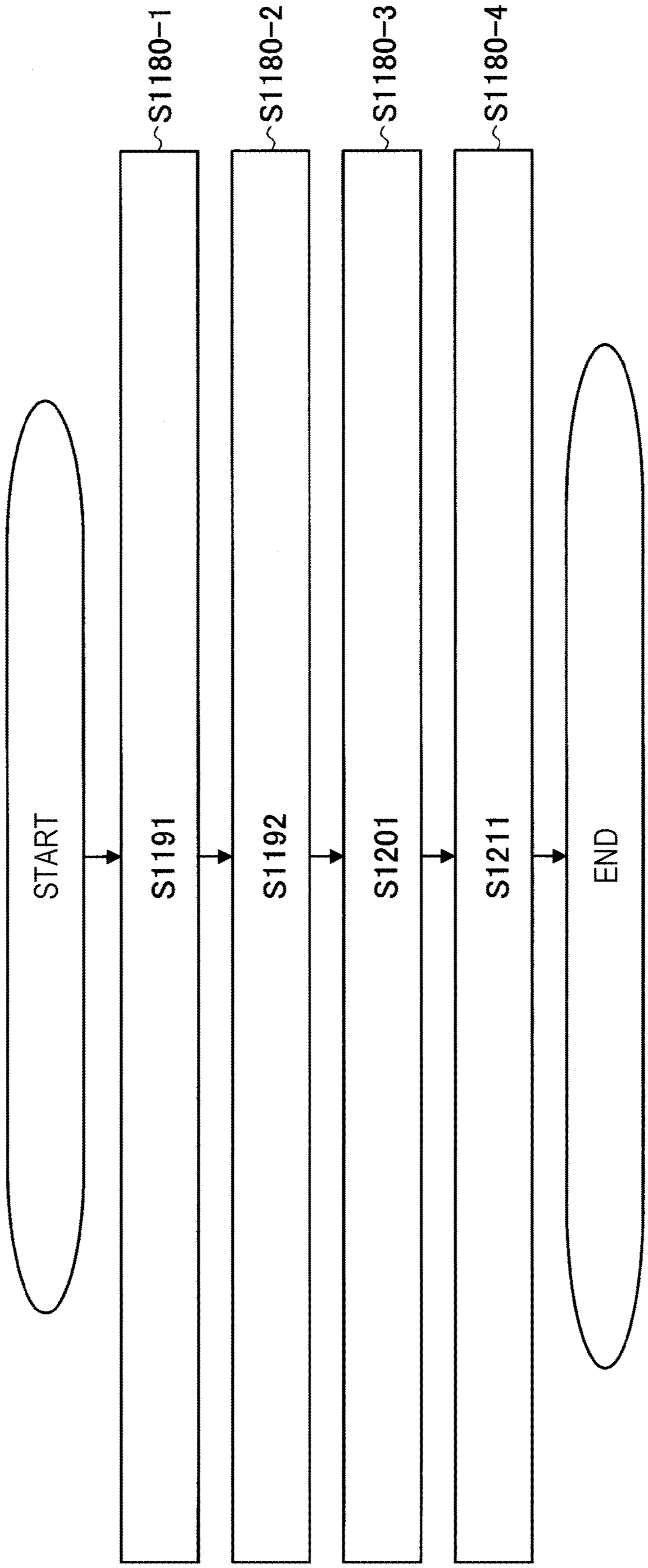
START
S1191
S1180-1
S1192
S1180-2
S1201
S1180-3
S1211
S1180-4
END

Fig. 85

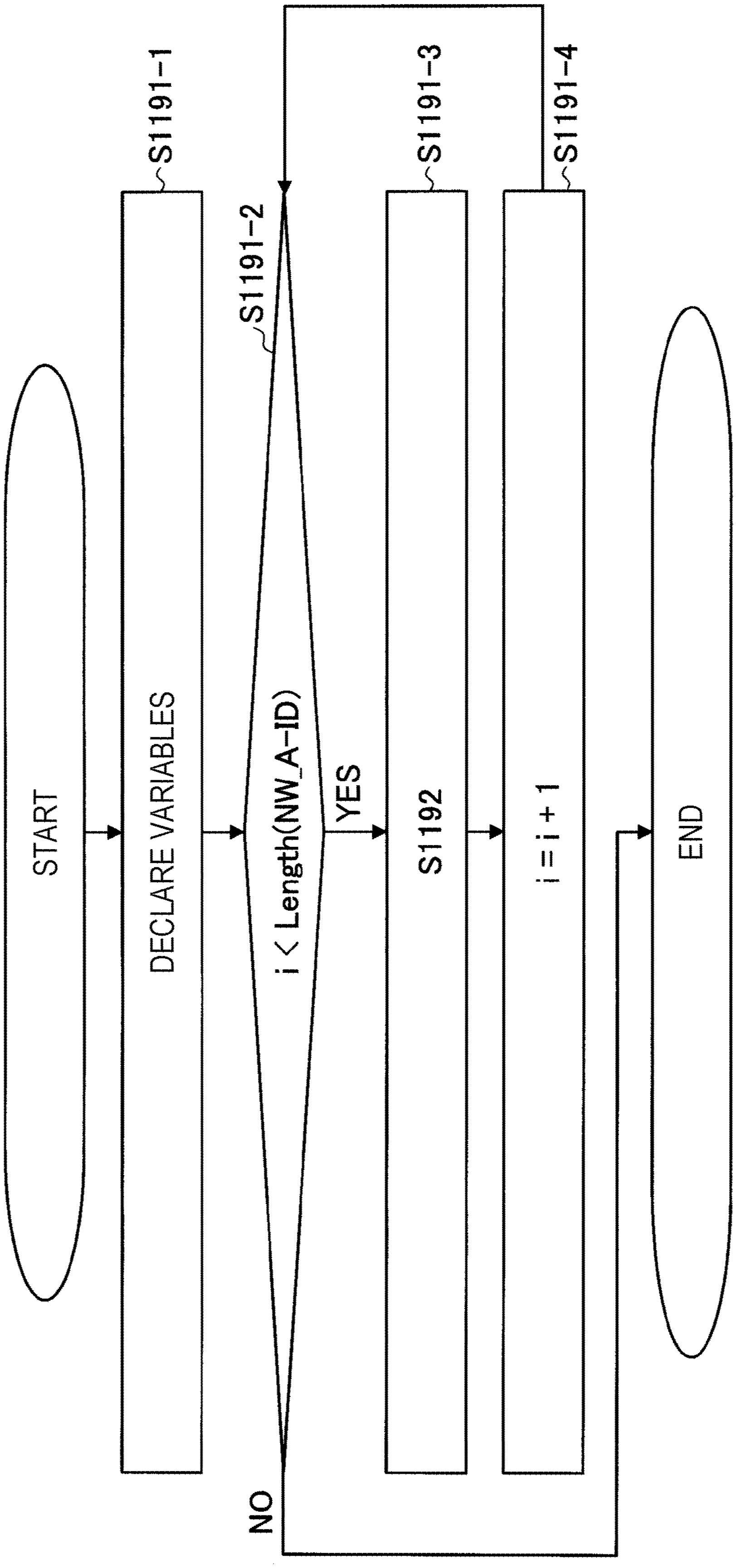
START
DECLARE VARIABLES
S1191-1
i < Length(NW_A-ID)
S1191-2
YES
NO
S1192
S1191-3
i = i + 1
S1191-4
END

Fig. 86

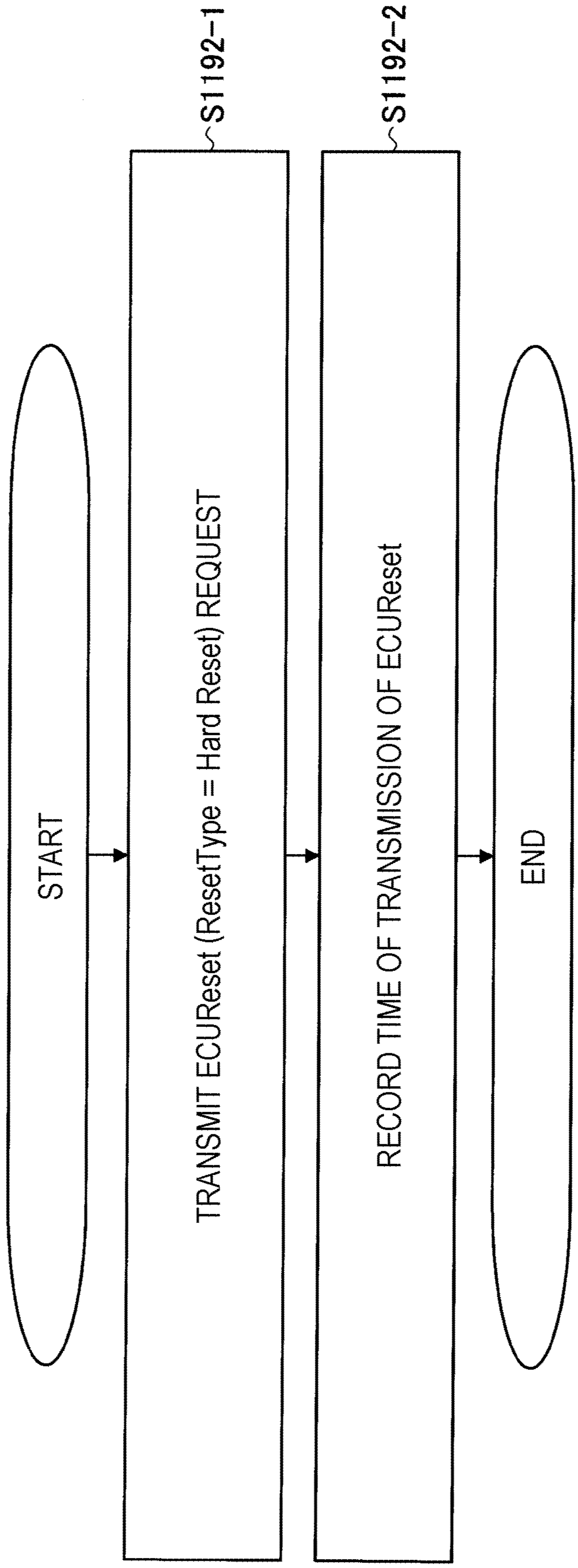
START
TRANSMIT ECUReset (ResetType = Hard Reset) REQUEST
S1192-1
RECORD TIME OF TRANSMISSION OF ECUReset
S1192-2
END

# Fig. 87

| ECUReset TRANSMISSION TIME | NW_A-ID |
|---|---|
| 1612489417.0000 | 0x700 |
| 1612489427.0000 | 0x700 |
| 1612489437.0000 | 0x700 |
| 1612489447.0000 | 0x700 |
| 1612489457.0000 | 0x700 |
| 1612489467.0000 | 0x700 |
| 1612489477.0000 | 0x700 |
| 1612489487.0000 | 0x700 |
| ⋮ | ⋮ |

Fig. 88

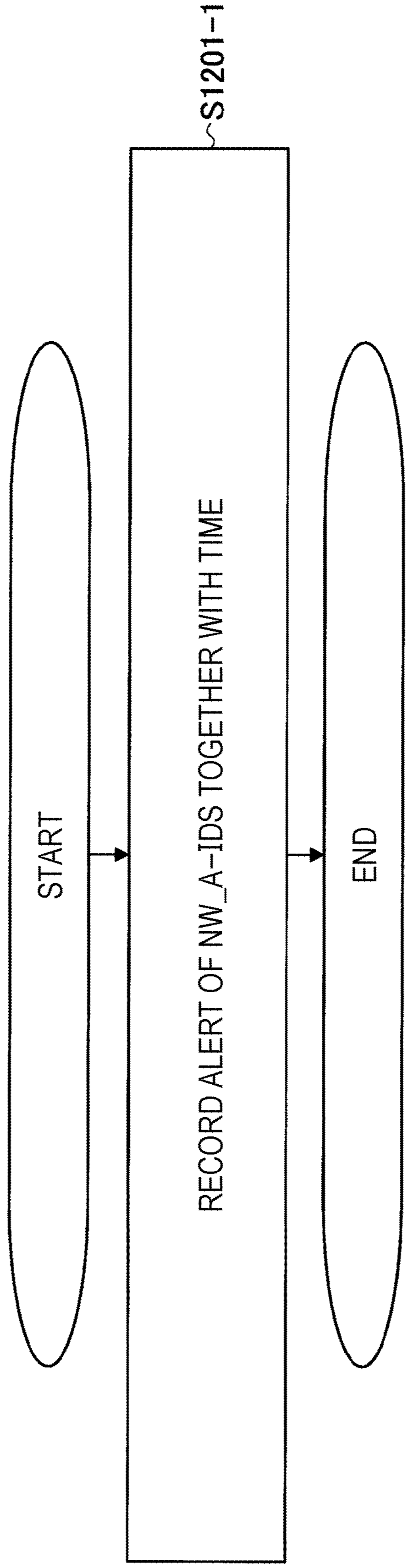

# Fig. 89

| ALERT ISSUANCE TIME | NW_A-ID |
|---|---|
| 1612489417.0000 | 0x3A5 |
| 1612489417.0010 | 0x3A5 |
| 1612489417.0200 | 0x3A5 |
| 1612489417.0015 | 0x3A5 |
| 1612489417.0400 | 0x3A5 |
| 1612489417.0412 | 0x3A5 |
| 1612489417.0600 | 0x3A5 |
| 1612489417.0609 | 0x3A5 |
| ⋮ | ⋮ |

Fig. 90

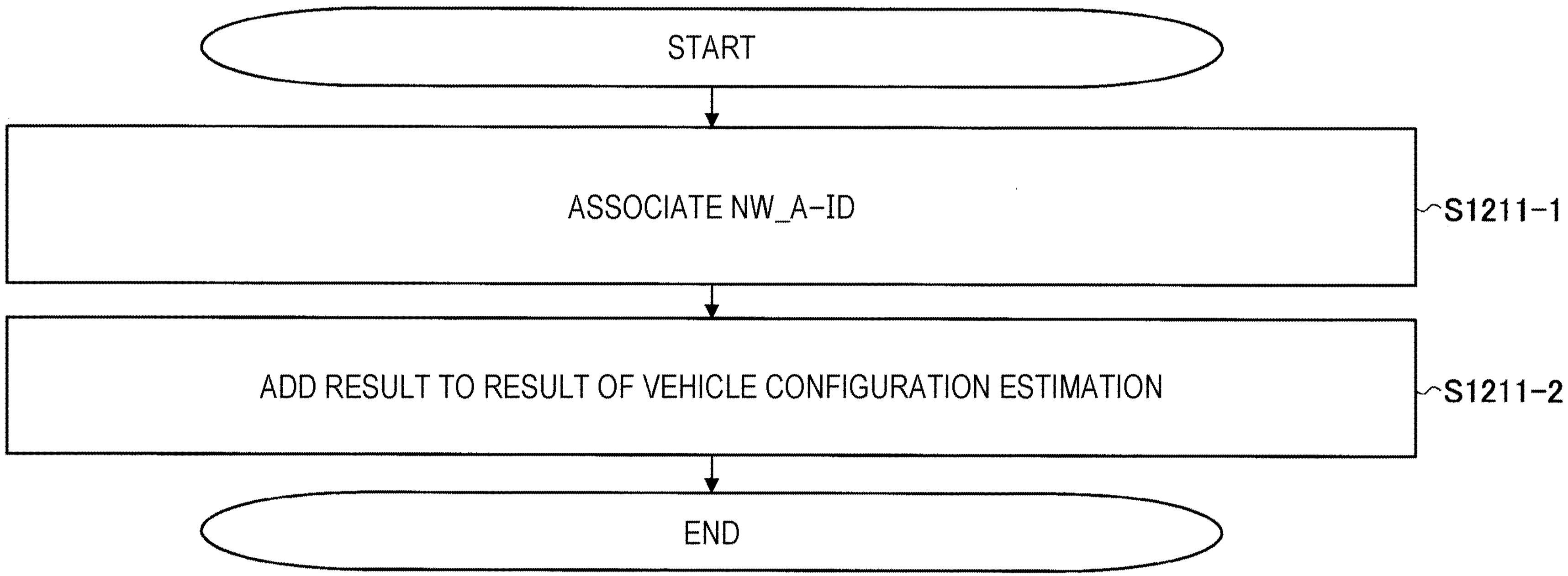
START
ASSOCIATE NW_A-ID
S1211-1
ADD RESULT TO RESULT OF VEHICLE CONFIGURATION ESTIMATION
S1211-2
END

# Fig. 91

TABLE 3211

| REQUEST NW_A-ID | REQUEST NW_A-ID |
|---|---|
| 0x234 | 0x700 |
| 0x3A5 | 0x724 |
| 0x422 | 0x750 |
| 0x621 | 0x7E0 |
| 0x681 | 0x7E1 |

# Fig. 92

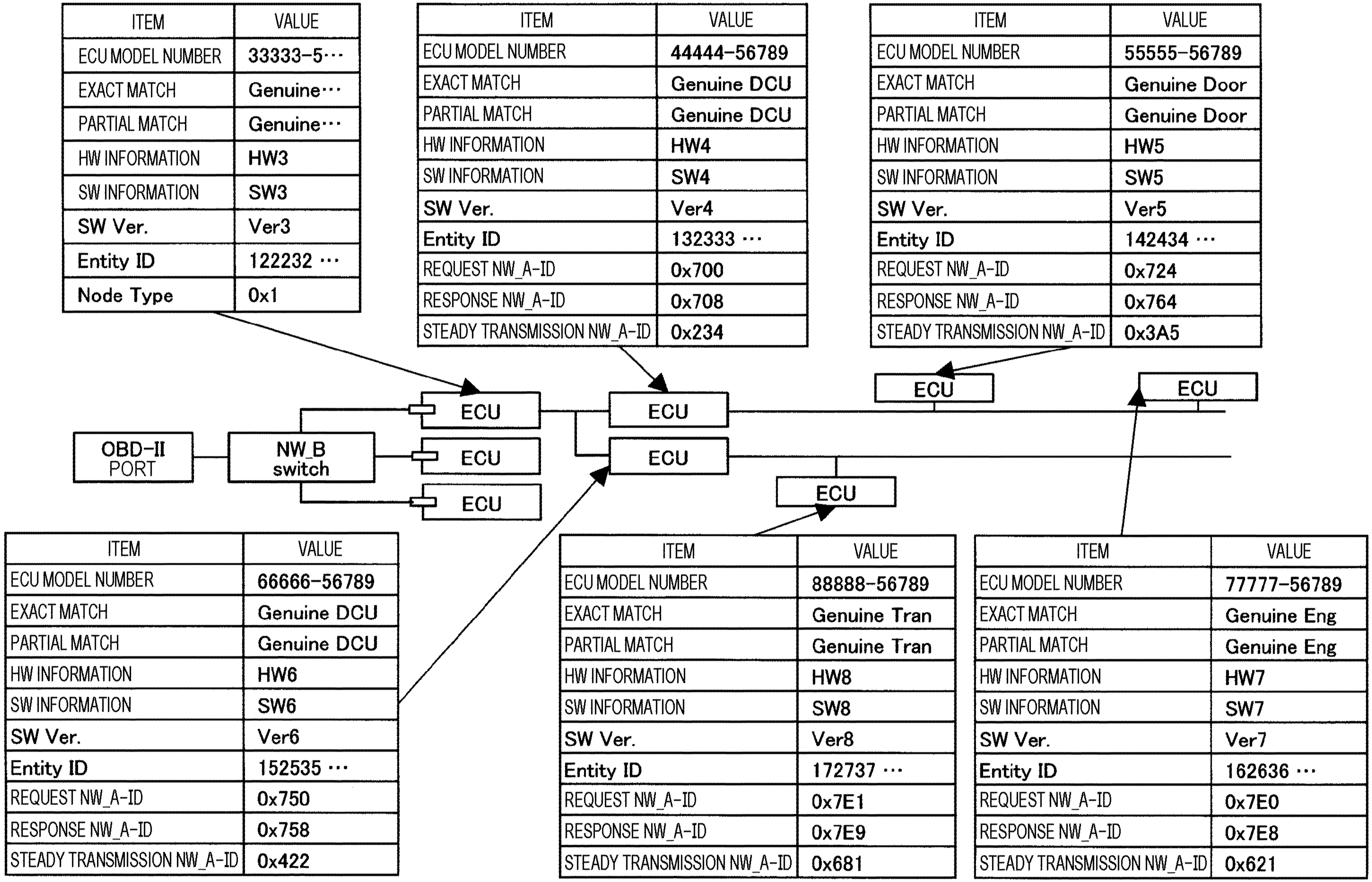


| ITEM | VALUE |
|---|---|
| ECU MODEL NUMBER | 33333-5··· |
| EXACT MATCH | Genuine··· |
| PARTIAL MATCH | Genuine··· |
| HW INFORMATION | HW3 |
| SW INFORMATION | SW3 |
| SW Ver. | Ver3 |
| Entity ID | 122232 ··· |
| Node Type | 0x1 |

| ITEM | VALUE |
|---|---|
| ECU MODEL NUMBER | 44444-56789 |
| EXACT MATCH | Genuine DCU |
| PARTIAL MATCH | Genuine DCU |
| HW INFORMATION | HW4 |
| SW INFORMATION | SW4 |
| SW Ver. | Ver4 |
| Entity ID | 132333 ··· |
| REQUEST NW_A-ID | 0x700 |
| RESPONSE NW_A-ID | 0x708 |
| STEADY TRANSMISSION NW_A-ID | 0x234 |

| ITEM | VALUE |
|---|---|
| ECU MODEL NUMBER | 55555-56789 |
| EXACT MATCH | Genuine Door |
| PARTIAL MATCH | Genuine Door |
| HW INFORMATION | HW5 |
| SW INFORMATION | SW5 |
| SW Ver. | Ver5 |
| Entity ID | 142434 ··· |
| REQUEST NW_A-ID | 0x724 |
| RESPONSE NW_A-ID | 0x764 |
| STEADY TRANSMISSION NW_A-ID | 0x3A5 |

| ITEM | VALUE |
|---|---|
| ECU MODEL NUMBER | 66666-56789 |
| EXACT MATCH | Genuine DCU |
| PARTIAL MATCH | Genuine DCU |
| HW INFORMATION | HW6 |
| SW INFORMATION | SW6 |
| SW Ver. | Ver6 |
| Entity ID | 152535 ··· |
| REQUEST NW_A-ID | 0x750 |
| RESPONSE NW_A-ID | 0x758 |
| STEADY TRANSMISSION NW_A-ID | 0x422 |

| ITEM | VALUE |
|---|---|
| ECU MODEL NUMBER | 88888-56789 |
| EXACT MATCH | Genuine Tran |
| PARTIAL MATCH | Genuine Tran |
| HW INFORMATION | HW8 |
| SW INFORMATION | SW8 |
| SW Ver. | Ver8 |
| Entity ID | 172737 ··· |
| REQUEST NW_A-ID | 0x7E1 |
| RESPONSE NW_A-ID | 0x7E9 |
| STEADY TRANSMISSION NW_A-ID | 0x681 |

| ITEM | VALUE |
|---|---|
| ECU MODEL NUMBER | 77777-56789 |
| EXACT MATCH | Genuine Eng |
| PARTIAL MATCH | Genuine Eng |
| HW INFORMATION | HW7 |
| SW INFORMATION | SW7 |
| SW Ver. | Ver7 |
| Entity ID | 162636 ··· |
| REQUEST NW_A-ID | 0x7E0 |
| RESPONSE NW_A-ID | 0x7E8 |
| STEADY TRANSMISSION NW_A-ID | 0x621 |

# Fig. 93

TABLE 3212

| ECU MODEL NUMBER | MODEL NUMBER EXACT MATCH | MODEL NUMBER PARTIAL MATCH | REQUEST NW_A-ID | RESPONSE NW_A-ID | VIN | ... | STEADY TRANSMISSION NW_A-ID |
|---|---|---|---|---|---|---|---|
| 44444-5…9 | Genuine DCU ... | Genuine DCU ... | 0x700 | 0x708 | 1J4F … | ... | 0x234 |
| 55555-5…9 | Genuine Door ... | Genuine Door ... | 0x724 | 0x764 | 1J4F … | ... | 0x3A5 |
| 66666-5…9 | Genuine DCU ... | Genuine DCU ... | 0x750 | 0x758 | 1J4F … | ... | 0x422 |
| 77777-5…9 | Genuine Engine ... | Genuine Engine ... | 0x7E0 | 0x7E8 | 1J4F … | ... | 0x621 |
| 88888-5…9 | Genuine Trans ... | Genuine Trans ... | 0x7E1 | 0x7E9 | 1J4F … | ... | 0x681 |

Fig. 94

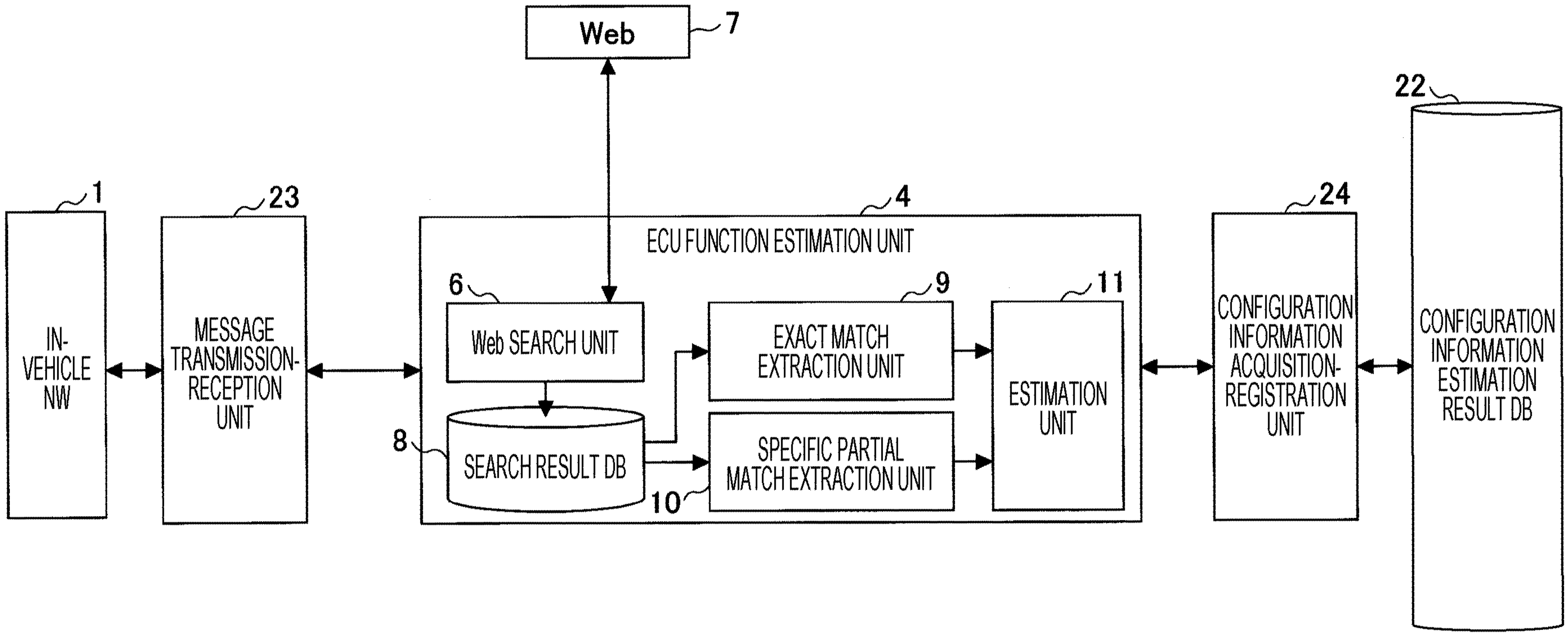
Web
7
1
IN-VEHICLE NW
23
MESSAGE TRANSMISSION-RECEPTION UNIT
4
ECU FUNCTION ESTIMATION UNIT
6
Web SEARCH UNIT
8
SEARCH RESULT DB
9
EXACT MATCH EXTRACTION UNIT
10
SPECIFIC PARTIAL MATCH EXTRACTION UNIT
11
ESTIMATION UNIT
24
CONFIGURATION INFORMATION ACQUISITION-REGISTRATION UNIT
22
CONFIGURATION INFORMATION ESTIMATION RESULT DB

Fig. 95

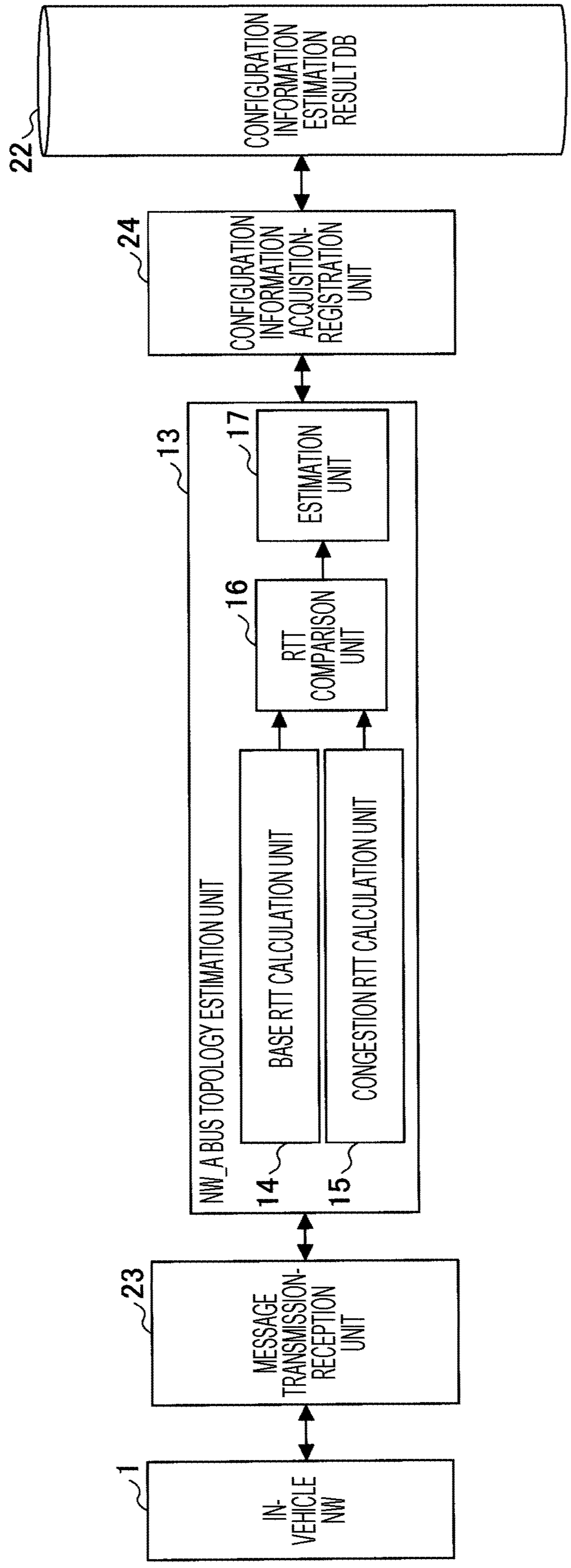
22
CONFIGURATION INFORMATION ESTIMATION RESULT DB
24
CONFIGURATION INFORMATION ACQUISITION-REGISTRATION UNIT
13
NW_A BUS TOPOLOGY ESTIMATION UNIT
17
ESTIMATION UNIT
16
RTT COMPARISON UNIT
14
BASE RTT CALCULATION UNIT
15
CONGESTION RTT CALCULATION UNIT
23
MESSAGE TRANSMISSION-RECEPTION UNIT
1
IN-VEHICLE NW

Fig. 96

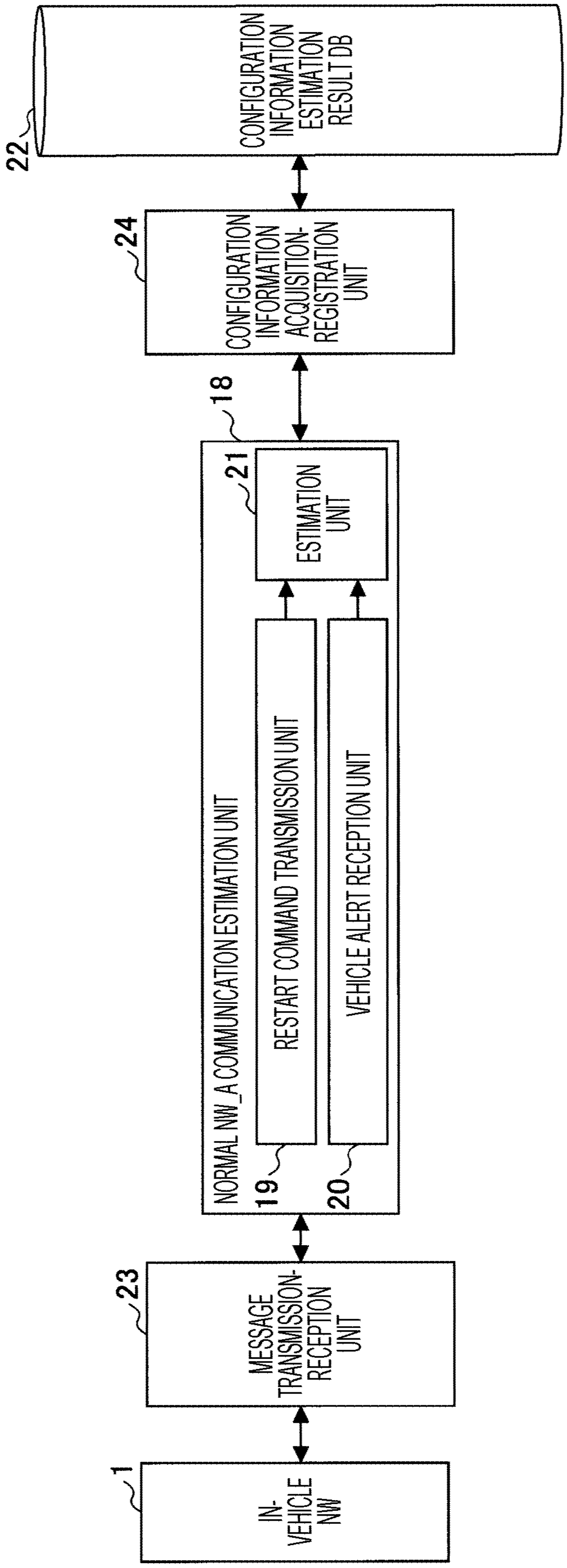
22
CONFIGURATION INFORMATION ESTIMATION RESULT DB
24
CONFIGURATION INFORMATION ACQUISITION-REGISTRATION UNIT
18
NORMAL NW_A COMMUNICATION ESTIMATION UNIT
21
ESTIMATION UNIT
19
RESTART COMMAND TRANSMISSION UNIT
20
VEHICLE ALERT RECEPTION UNIT
23
MESSAGE TRANSMISSION-RECEPTION UNIT
1
IN-VEHICLE NW

Fig. 97

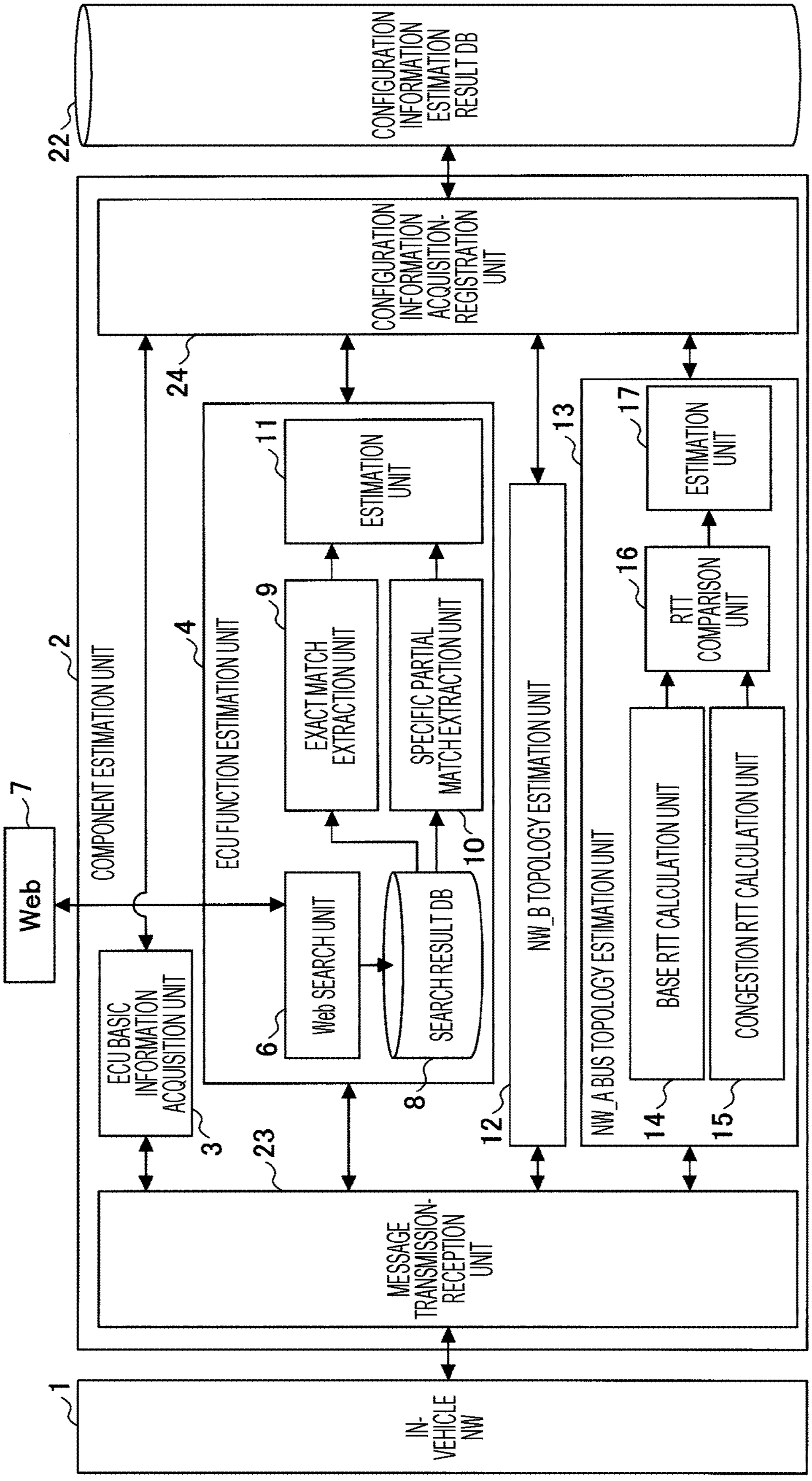

22
CONFIGURATION INFORMATION ESTIMATION RESULT DB
CONFIGURATION INFORMATION ACQUISITION-REGISTRATION UNIT
24
2
COMPONENT ESTIMATION UNIT
7
Web
4
ECU FUNCTION ESTIMATION UNIT
11
ESTIMATION UNIT
9
EXACT MATCH EXTRACTION UNIT
SPECIFIC PARTIAL MATCH EXTRACTION UNIT
10
6
Web SEARCH UNIT
SEARCH RESULT DB
8
3
ECU BASIC INFORMATION ACQUISITION UNIT
23
12
NW_B TOPOLOGY ESTIMATION UNIT
13
NW_A BUS TOPOLOGY ESTIMATION UNIT
17
ESTIMATION UNIT
16
RTT COMPARISON UNIT
14
BASE RTT CALCULATION UNIT
15
CONGESTION RTT CALCULATION UNIT
MESSAGE TRANSMISSION-RECEPTION UNIT
1
IN-VEHICLE NW

Fig. 98

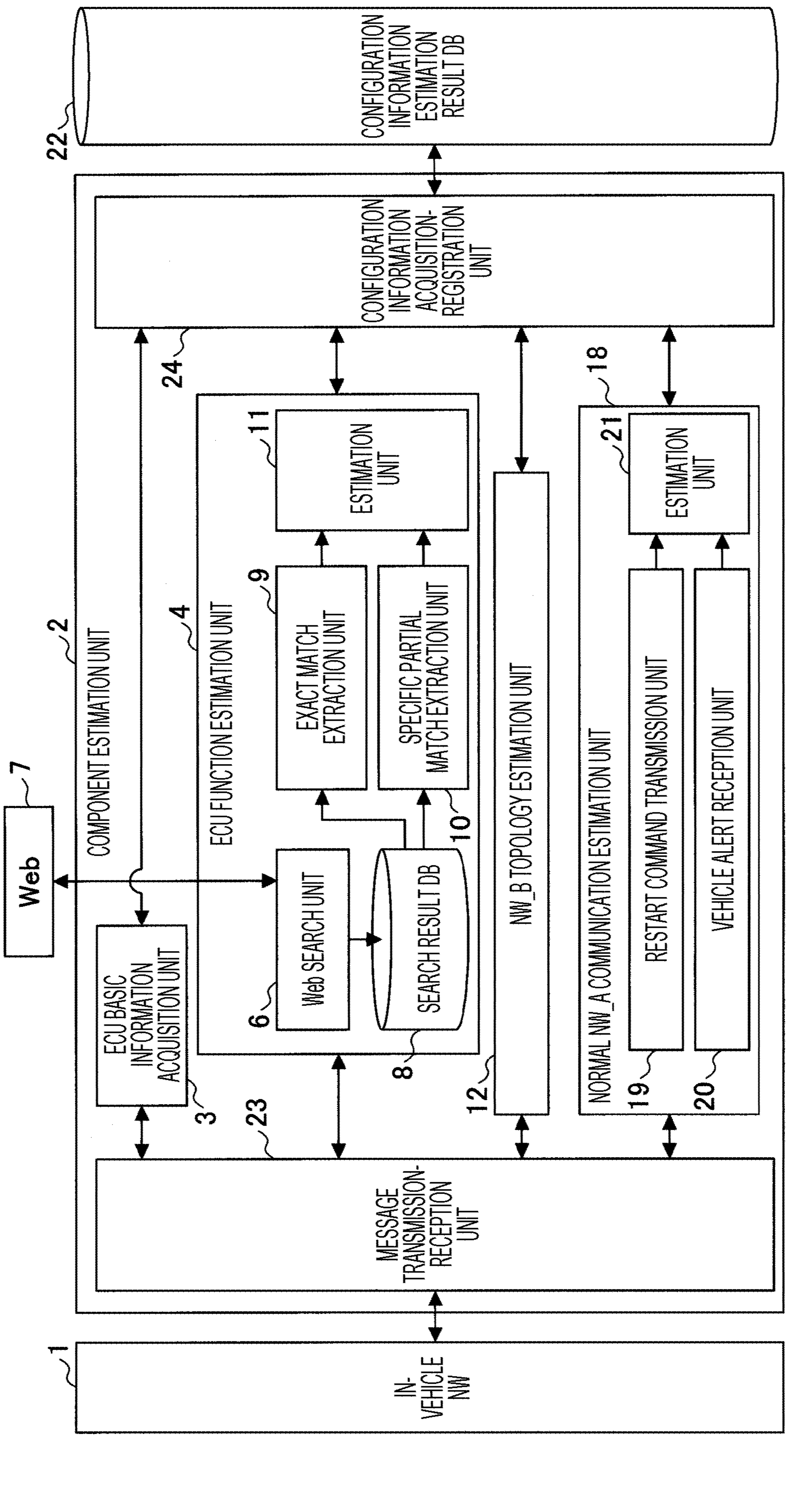
CONFIGURATION INFORMATION ESTIMATION RESULT DB
22
CONFIGURATION INFORMATION ACQUISITION-REGISTRATION UNIT
24
2
COMPONENT ESTIMATION UNIT
7
Web
ECU BASIC INFORMATION ACQUISITION UNIT
3
4
ECU FUNCTION ESTIMATION UNIT
6
Web SEARCH UNIT
8
SEARCH RESULT DB
9
EXACT MATCH EXTRACTION UNIT
10
SPECIFIC PARTIAL MATCH EXTRACTION UNIT
11
ESTIMATION UNIT
12
NW_B TOPOLOGY ESTIMATION UNIT
18
NORMAL NW_A COMMUNICATION ESTIMATION UNIT
19
RESTART COMMAND TRANSMISSION UNIT
20
VEHICLE ALERT RECEPTION UNIT
21
ESTIMATION UNIT
23
MESSAGE TRANSMISSION-RECEPTION UNIT
1
IN-VEHICLE NW

Fig. 99

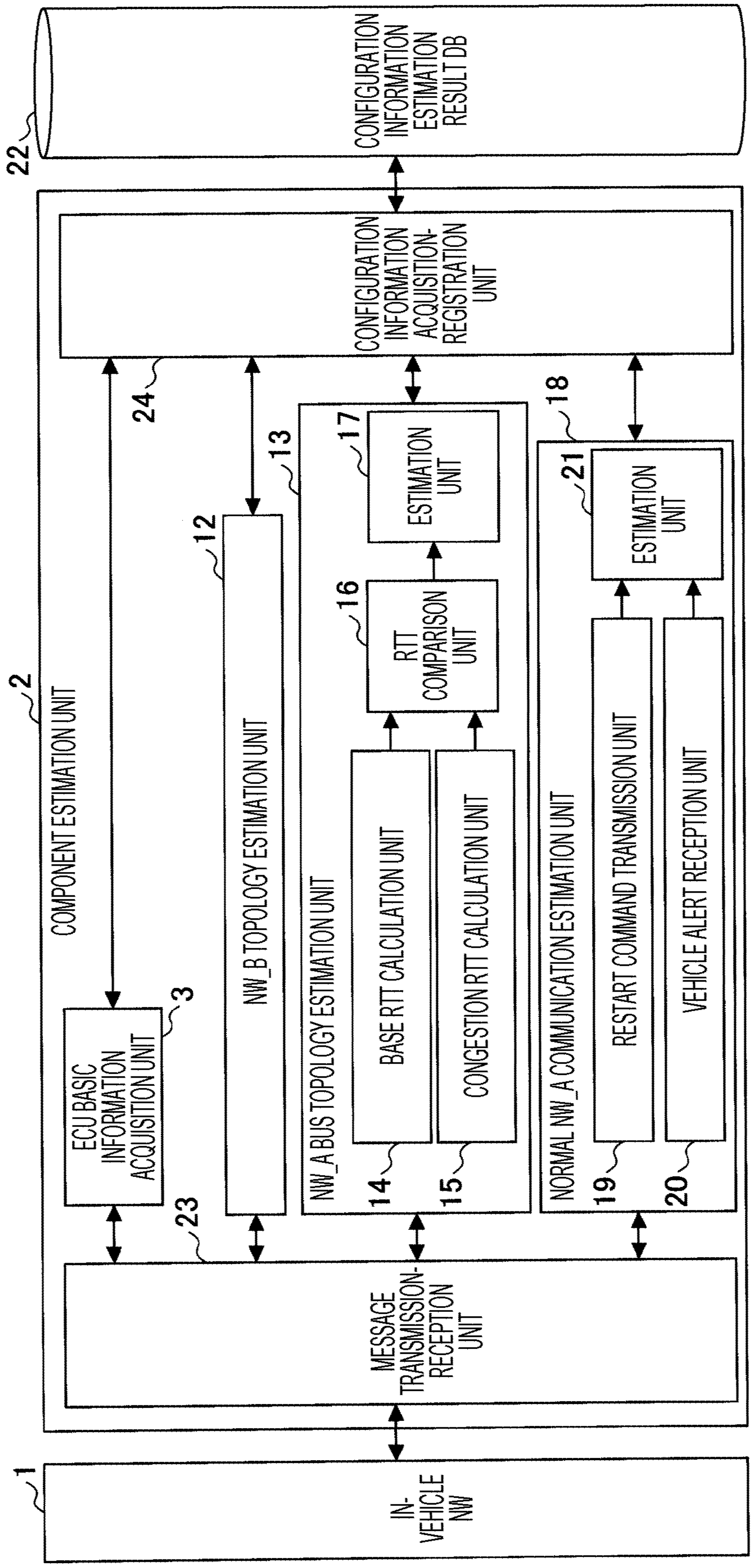
CONFIGURATION INFORMATION ESTIMATION RESULT DB
22
CONFIGURATION INFORMATION ACQUISITION-REGISTRATION UNIT
24
COMPONENT ESTIMATION UNIT
2
ECU BASIC INFORMATION ACQUISITION UNIT
3
NW_B TOPOLOGY ESTIMATION UNIT
12
NW_A BUS TOPOLOGY ESTIMATION UNIT
13
BASE RTT CALCULATION UNIT
14
CONGESTION RTT CALCULATION UNIT
15
RTT COMPARISON UNIT
16
ESTIMATION UNIT
17
NORMAL NW_A COMMUNICATION ESTIMATION UNIT
18
RESTART COMMAND TRANSMISSION UNIT
19
VEHICLE ALERT RECEPTION UNIT
20
ESTIMATION UNIT
21
MESSAGE TRANSMISSION-RECEPTION UNIT
23
IN-VEHICLE NW
1

Fig. 100

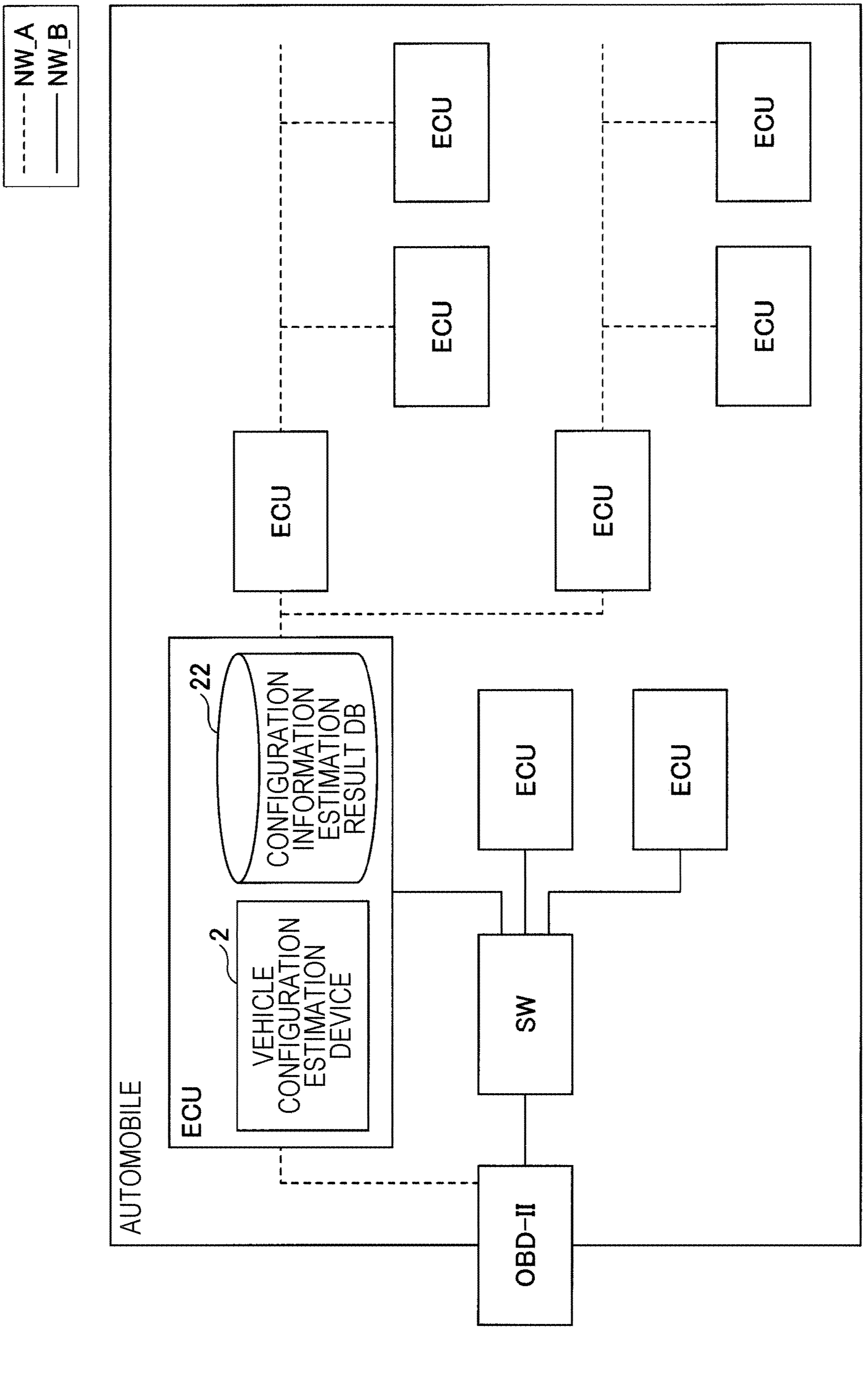
NW_A
NW_B
AUTOMOBILE
ECU
2
VEHICLE CONFIGURATION ESTIMATION DEVICE
22
CONFIGURATION INFORMATION ESTIMATION RESULT DB
ECU
ECU
ECU
ECU
ECU
ECU
ECU
ECU
SW
OBD-II

Fig. 101

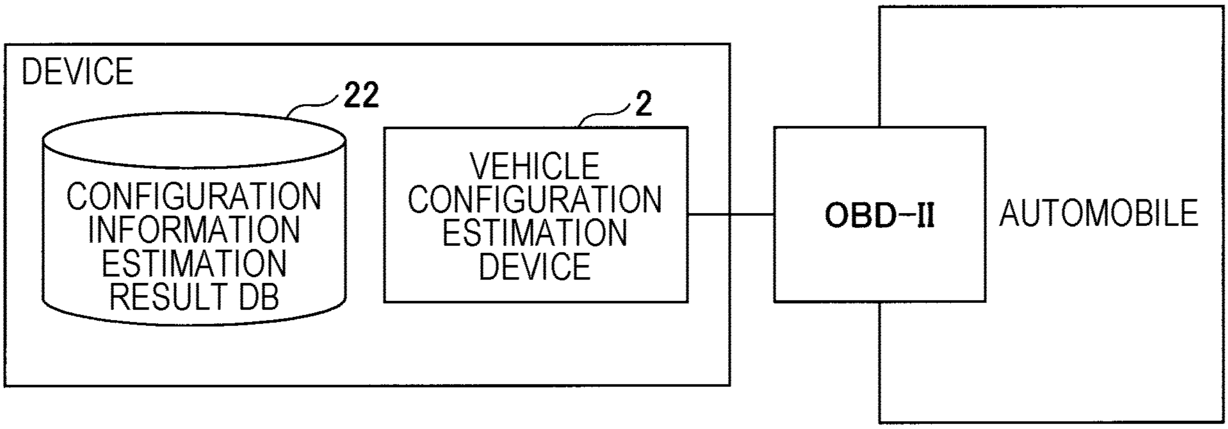
DEVICE
22
CONFIGURATION INFORMATION ESTIMATION RESULT DB
2
VEHICLE CONFIGURATION ESTIMATION DEVICE
OBD-II
AUTOMOBILE

# Fig. 102

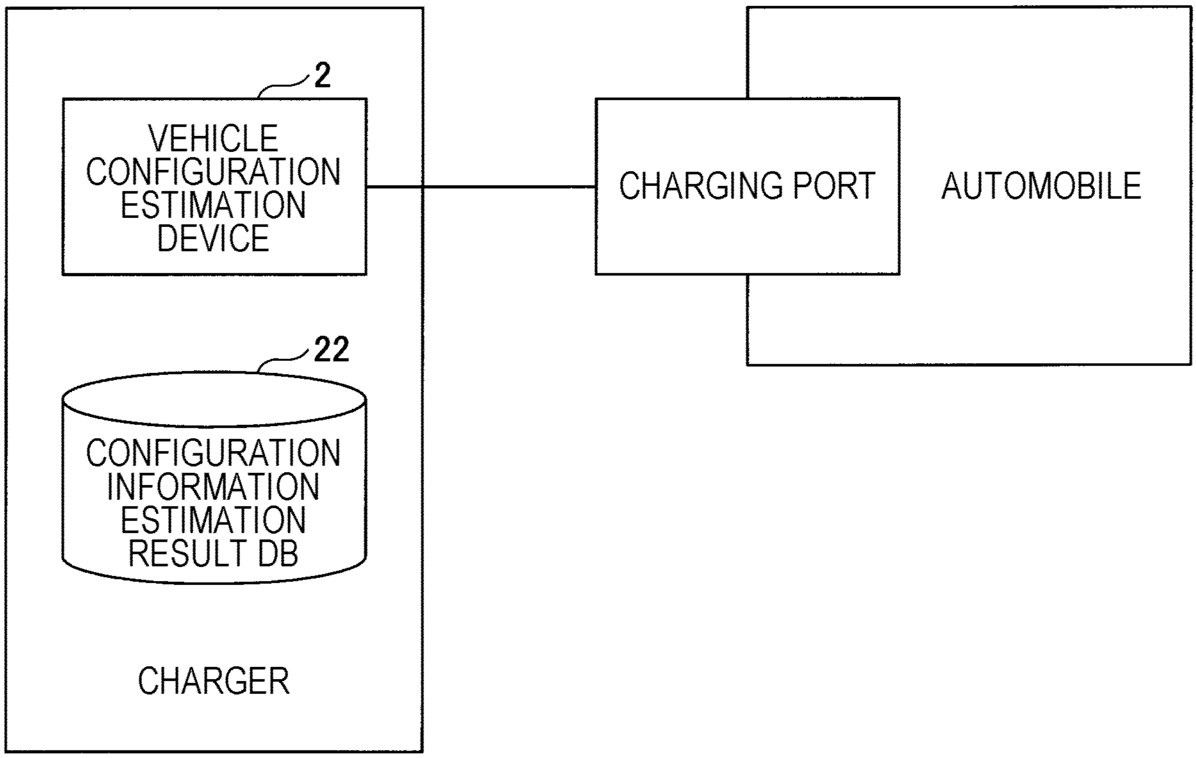
2
VEHICLE CONFIGURATION ESTIMATION DEVICE
22
CONFIGURATION INFORMATION ESTIMATION RESULT DB
CHARGER
CHARGING PORT
AUTOMOBILE

Fig. 103

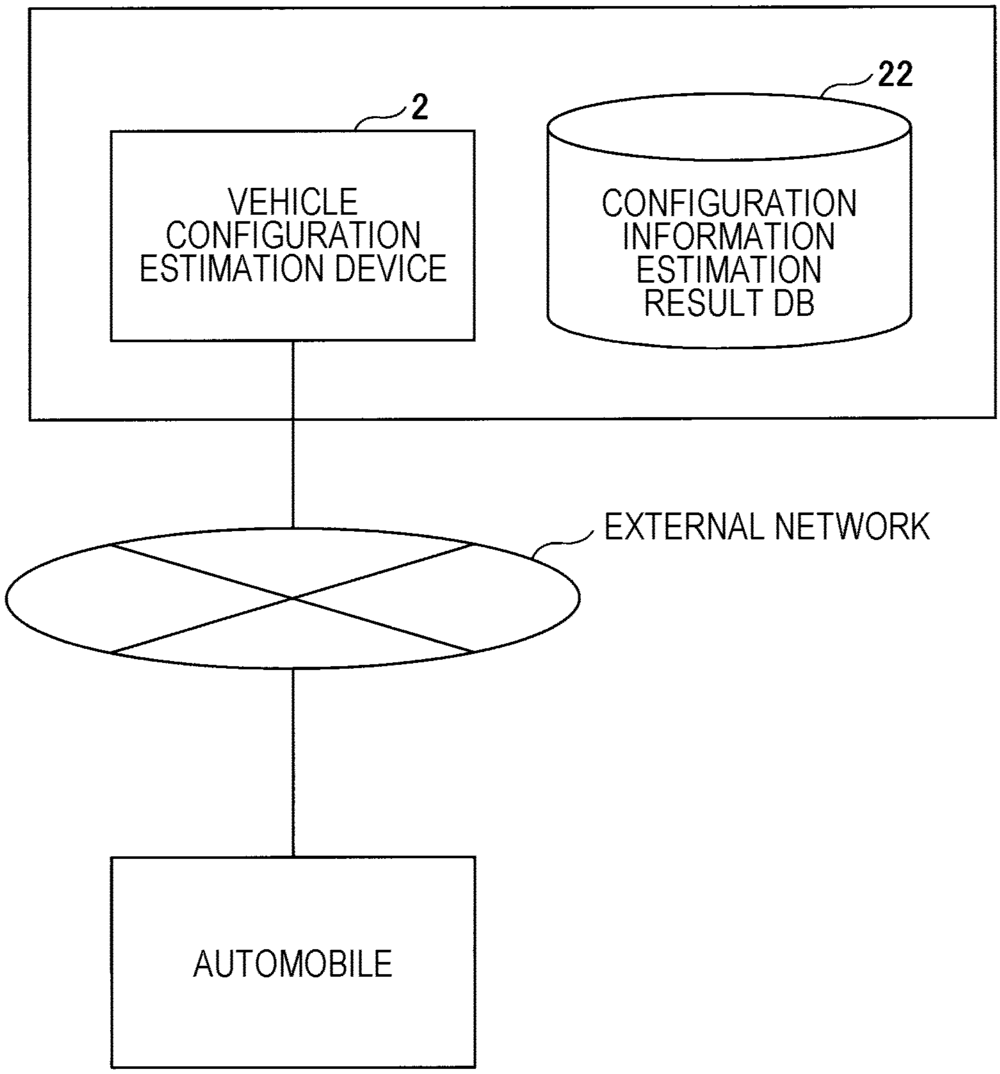
2
VEHICLE CONFIGURATION ESTIMATION DEVICE
22
CONFIGURATION INFORMATION ESTIMATION RESULT DB
EXTERNAL NETWORK
AUTOMOBILE

Fig. 104

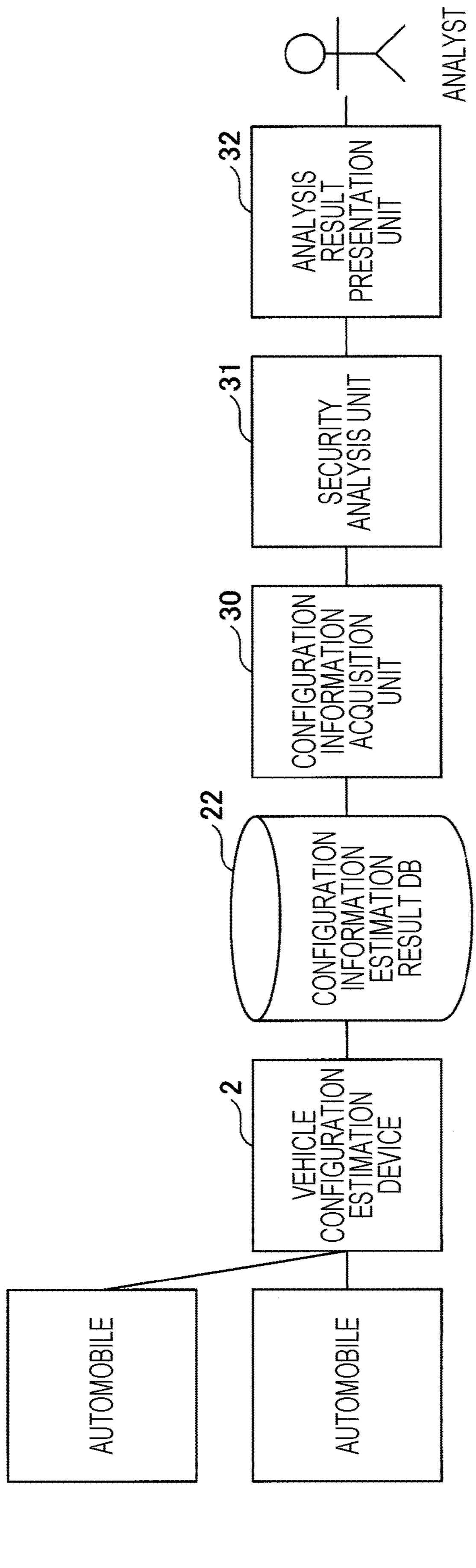
ANALYST
32
ANALYSIS RESULT PRESENTATION UNIT
31
SECURITY ANALYSIS UNIT
30
CONFIGURATION INFORMATION ACQUISITION UNIT
22
CONFIGURATION INFORMATION ESTIMATION RESULT DB
2
VEHICLE CONFIGURATION ESTIMATION DEVICE
AUTOMOBILE
AUTOMOBILE

Fig. 105

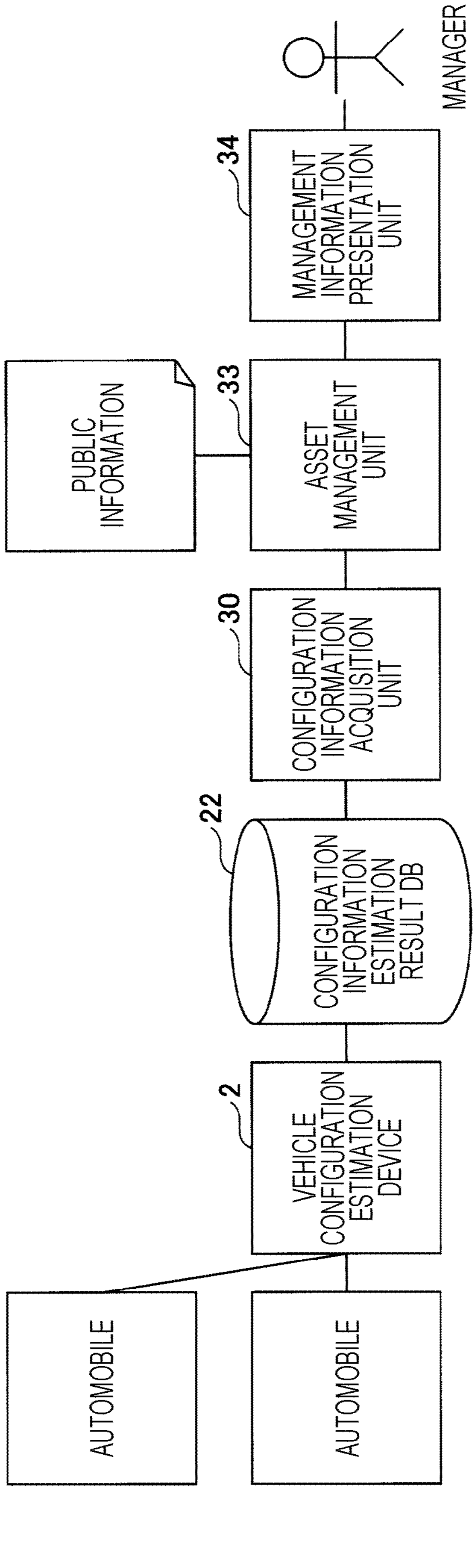
AUTOMOBILE
AUTOMOBILE
2
VEHICLE CONFIGURATION ESTIMATION DEVICE
22
CONFIGURATION INFORMATION ESTIMATION RESULT DB
30
CONFIGURATION INFORMATION ACQUISITION UNIT
33
ASSET MANAGEMENT UNIT
PUBLIC INFORMATION
34
MANAGEMENT INFORMATION PRESENTATION UNIT
MANAGER

# Fig. 106

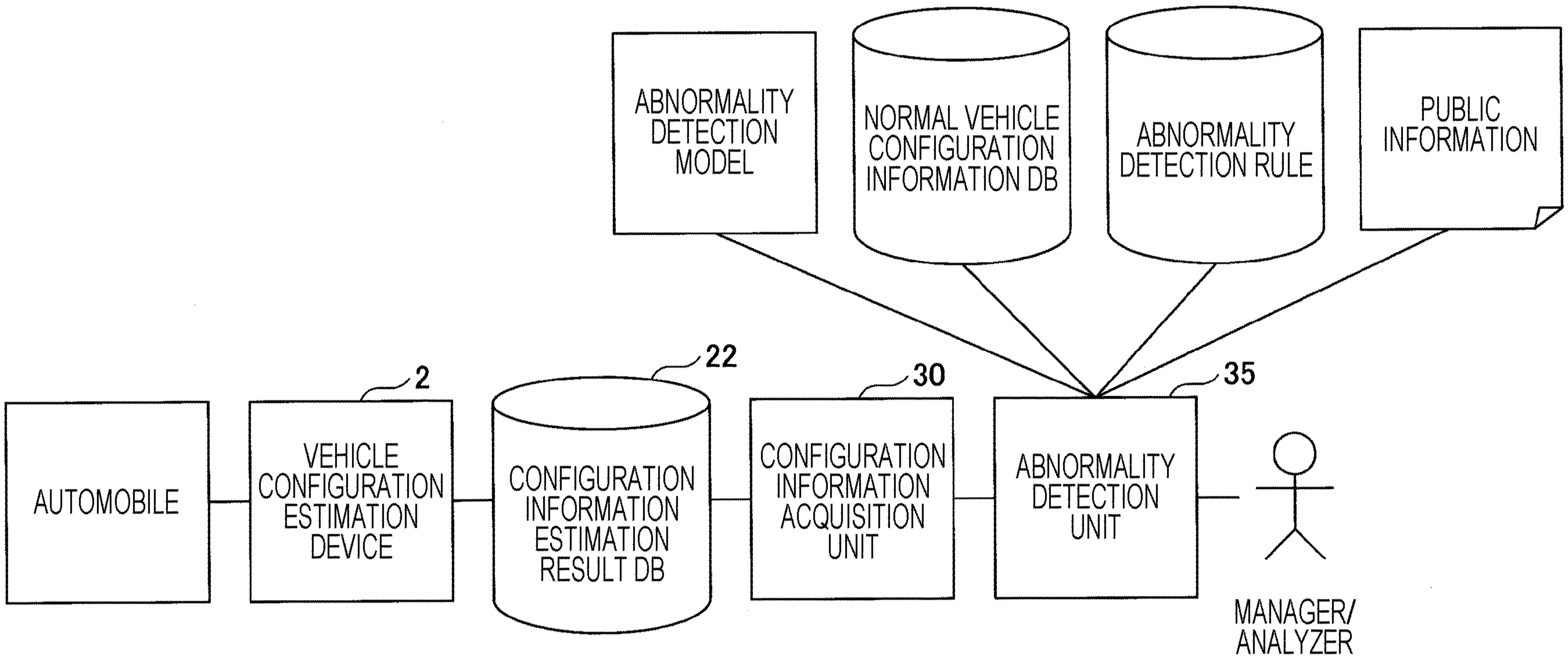
ABNORMALITY DETECTION MODEL
NORMAL VEHICLE CONFIGURATION INFORMATION DB
ABNORMALITY DETECTION RULE
PUBLIC INFORMATION
2
22
30
35
AUTOMOBILE
VEHICLE CONFIGURATION ESTIMATION DEVICE
CONFIGURATION INFORMATION ESTIMATION RESULT DB
CONFIGURATION INFORMATION ACQUISITION UNIT
ABNORMALITY DETECTION UNIT
MANAGER/ ANALYZER

Fig. 107

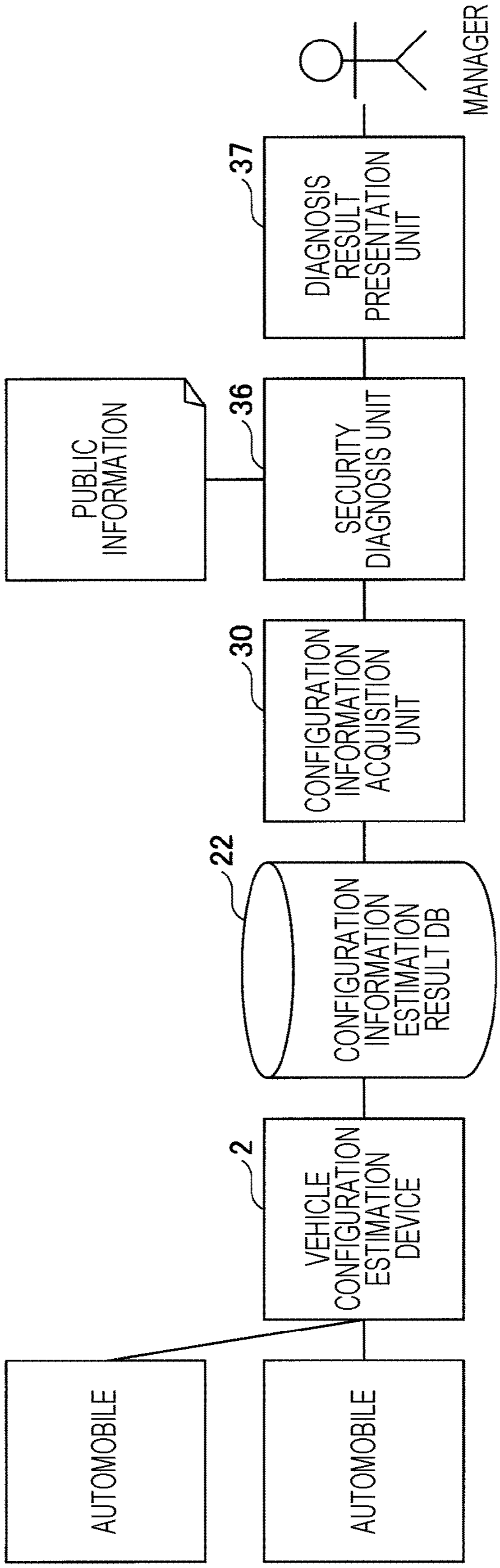
AUTOMOBILE
AUTOMOBILE
VEHICLE CONFIGURATION ESTIMATION DEVICE
2
CONFIGURATION INFORMATION ESTIMATION RESULT DB
22
CONFIGURATION INFORMATION ACQUISITION UNIT
30
PUBLIC INFORMATION
SECURITY DIAGNOSIS UNIT
36
DIAGNOSIS RESULT PRESENTATION UNIT
37
MANAGER

Fig. 108

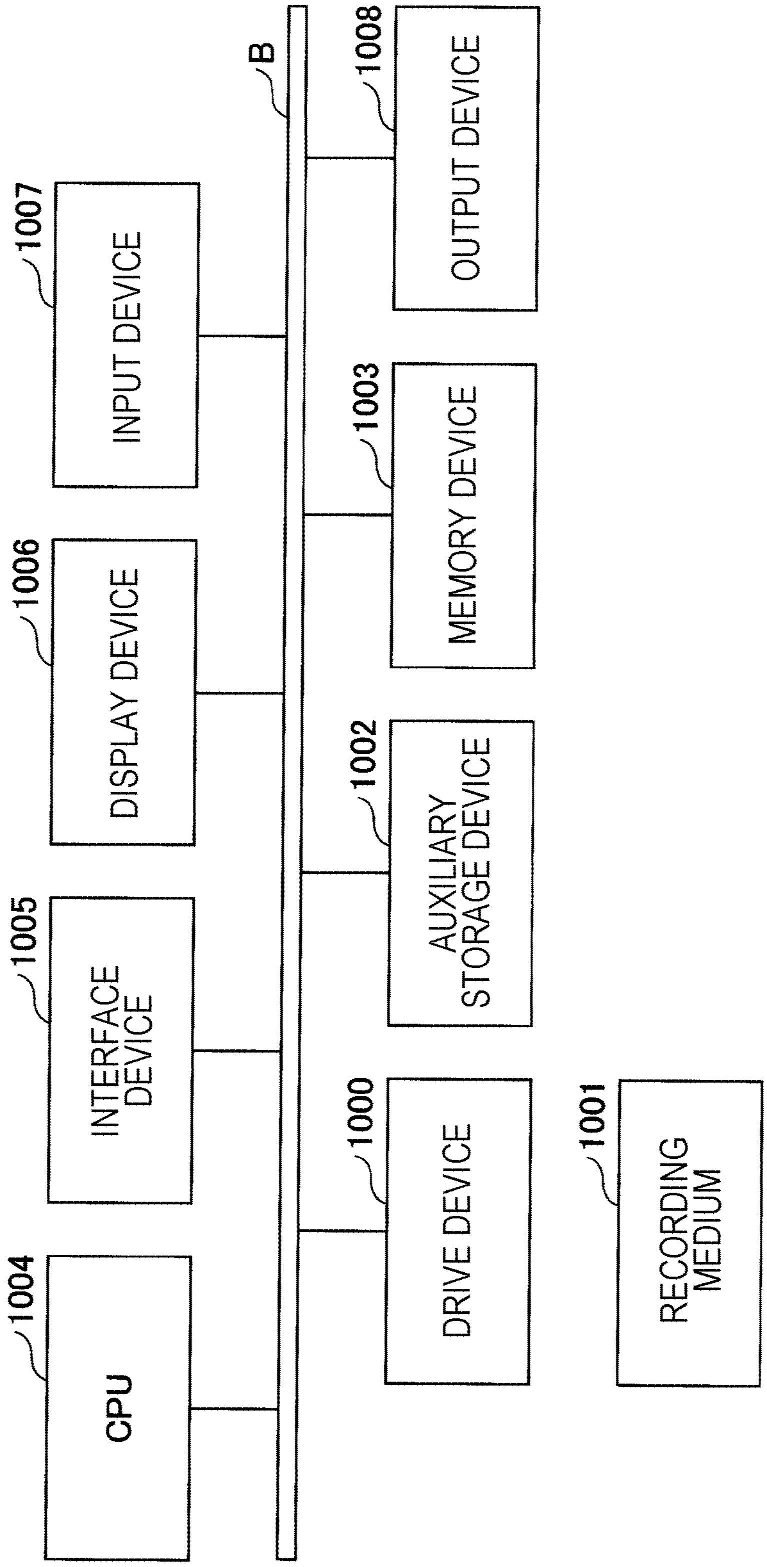
B
1004
CPU
1005
INTERFACE DEVICE
1006
DISPLAY DEVICE
1007
INPUT DEVICE
1000
DRIVE DEVICE
1001
RECORDING MEDIUM
1002
AUXILIARY STORAGE DEVICE
1003
MEMORY DEVICE
1008
OUTPUT DEVICE

## INTERNATIONAL SEARCH REPORT

International application No.
**PCT/JP2021/032301**

**A. CLASSIFICATION OF SUBJECT MATTER**

***H04L 12/28***(2006.01)i; ***H04L 41/0853***(2022.01)i; ***H04L 41/12***(2022.01)i
FI: H04L41/0853; H04L41/12; H04L12/28 100A

According to International Patent Classification (IPC) or to both national classification and IPC

**B. FIELDS SEARCHED**

Minimum documentation searched (classification system followed by classification symbols)

H04L12/28; H04L12/24

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2019/073932 A1 (HITACHI AUTOMOTIVE SYSTEMS LIMITED) 18 April 2019 (2019-04-18) paragraphs [0010]-[0024], [0071], [0072] | 1, 4, 5, 9, 10 |
| Y | | 2, 3 |
| A | | 6–8 |
| X | JP 2007-099145 A (DENSO CORPORATION) 19 April 2007 (2007-04-19) paragraphs [0062]-[0064], [0083]-[0088], fig. 1 | 1, 5, 9, 10 |
| Y | | 2, 3 |
| A | | 6–8 |
| P, A | KR 10-2020-0143961 A (HYUNDAI MOTOR COMPANY) 28 December 2020 (2020-12-28) paragraphs [0036]-[0040], [0074]-[0100] | 1-10 |
| A | US 2014/0188330 A1 (SNAP-ON INCORPORATED) 03 July 2014 (2014-07-03) paragraphs [0017]-[0026] | 1-10 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **09 November 2021** | **22 November 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2021/032301**

**C. DOCUMENTS CONSIDERED TO BE RELEVANT**

| Category* | Citation of document, with indication, where appropriate, of the relevant passages | Relevant to claim No. |
|---|---|---|
| A | CN 110908357 A (SHENZHEN SECZONE INTERNET SECURITY TECHNOLOGY COMPANY LIMITED) 24 March 2020 (2020-03-24) paragraphs [0052]-[0089] | 1-10 |

Form PCT/ISA/210 (second sheet) (January 2015)

**INTERNATIONAL SEARCH REPORT**
**Information on patent family members**

International application No.
**PCT/JP2021/032301**

| Patent document cited in search report | Publication date (day/month/year) | Patent family member(s) | Publication date (day/month/year) |
|---|---|---|---|
| WO 2019/073932 A1 | 18 April 2019 | US 2020/0249937 A1<br>paragraphs [0037]-[0051], [0098], [0099]<br>EP 3696663 A1<br>CN 111201510 A | |
| JP 2007-099145 A | 19 April 2007 | US 2007/0083304 A1<br>paragraphs [0045]-[0050], [0076]-[0078], fig. 1<br>EP 1826946 A2<br>CN 1945257 A | |
| KR 10-2020-0143961 A | 28 December 2020 | (Family: none) | |
| US 2014/0188330 A1 | 03 July 2014 | US 8706316 B1<br>WO 2007/106321 A2 | |
| CN 110908357 A | 24 March 2020 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2020035621 W

### Non-patent literature cited in the description

- **JING JIANG ; XIAO XU ; NING CAO.** Research on improved physical topology discovery based on SNMP. *In 2017 IEEE International Conference on Computational Science and Engineering (CSE) and IEEE Conference on Embedded and Ubiquitous Computing (EUC),* 2017, 219-222
- **X. FENG et al.** Acquisitional Rule-based Engine for Discovering Internet-of-Things Dvices. *USENIX,* 2018